# EUROPEAN PATENT SPECIFICATION

(11) **EP 2 641 429 B1**
(45) Date of publication and mention of the grant of the patent: **07.01.2015**
(21) Application number: 11793908.2
(22) Date of filing: 16.11.2011
(51) Int. Cl.: H04W 48/12, H04W 74/08, H04W 8/00, H04W 84/12, H04W 84/20, H04W 88/06, H04W 72/12, H04W 76/04, H04W 76/02, H04W 84/18

(54) **METHOD AND APPARATUS FOR WIRELESS DIRECT LINK OPERATION**
VERFAHREN UND VORRICHTUNG FÜR DRAHTLOSEN DIREKTVERBINDUNGSBETRIEB
PROCÉDÉ ET APPAREIL POUR FAIRE FONCTIONNER UNE LIAISON DIRECTE SANS FIL

(30) Priority: 16.11.2010 US 414125 P; 03.01.2011 US 201161429269 P; 03.02.2011 US 201161439241 P; 03.02.2011 US 201161439251 P; 22.03.2011 US 201161466235 P
(43) Date of publication of application: 25.09.2013
(73) Proprietor: Interdigital Patent Holdings, Inc., Wilmington, DE 19809 (US)
(72) Inventor: FREDA, Martino M., Laval Québec H7A 0A8 (CA); AHMAD, Saad, Montreal, QC H2X 3R4 (CA); DIGIROLAMO, Rocco, Laval Québec H7K 3Y3 (CA); TOUAG, Athmane, Québec H7V 1V3 (CA); GAUVREAU, Jean-Louis, La Prairie Québec J5R 6G7 (CA); PERIARD, Francois, Montreal, Quebec H3T 1L7 (CA)
(74) Representative: Hansson, Anders Max
(86) International application number: PCT/US2011/060946
(87) International publication number: WO 2012/068224

(56) References cited:
- EP-A1- 1 705 850
- WO-A1-2010/059850
- WO-A1-2010/072624
- WO-A2-2009/154406
- US-A1- 2004 233 855
- US-A1- 2005 053 015
- US-A1- 2005 157 674
- US-A1- 2007 177 511
- US-A1- 2007 230 423
- "IEEE Standard for Information Technology - Telecommunications and Information Exchange Between Systems - Local and Metropolitan Area Networks - Specific Requirements Part 11: Wireless LAN Medium Access Control (MAC) and Physical Layer (PHY) Specifications Amendment 8: Medium Access Control (MAC) Qua", IEEE STANDARD; [IEEE STANDARD], IEEE, PISCATAWAY, NJ, USA, 1 January 2005 (2005-01-01), pages _1-189, XP017603828, ISBN: 978-0-7381-4772-7

## Description

### BACKGROUND

The wireless communication environment in a home or an office typically comprises a number of independently developed radio access technologies and standards. These technologies were initially designed for target applications and they perform relatively well for these applications. In a typical home or office environment, an access to content, (e.g., web, video, etc.), is provided to a broadband modem through the home-owner's IP backhaul connection. This connection is generally implemented through Digital Subscriber Line (DSL), cable, satellite links, or the like. Mobile services are provided through the cellular network, through either a macro cell or a femto cell located within the home or office. Wireless local area network (WLAN) access points (APs) provide data connectivity between computers, laptops, printers, etc. using 802.11-based WiFi technology.

Point-to-point links are also available, (e.g., using Bluetooth technology), to allow connection between devices, such as cameras, PCs, keyboards, mice, mobile phones, wireless headsets, or the like. These links are generally low-bandwidth and serve a specific purpose. Some high throughput point-to-point links are available at home or office. An example of such high-speed links is for video distribution cable replacement (i.e., connection of a set top box to a television). Currently, these high throughput point-to-point links are basically fixed, i.e., they cannot be configured dynamically based on the environment at a given time or the capabilities of the devices involved in the link.

The 802.11 standard supports a direct link feature which allows a bidirectional link from one station (STA) to another such that frames do not pass through an AP. Once the direct link has been set up, all frames between the two STAs are exchanged directly. This direct link provides a means for efficiently using the wireless medium as the traffic does not need to be routed through the AP.

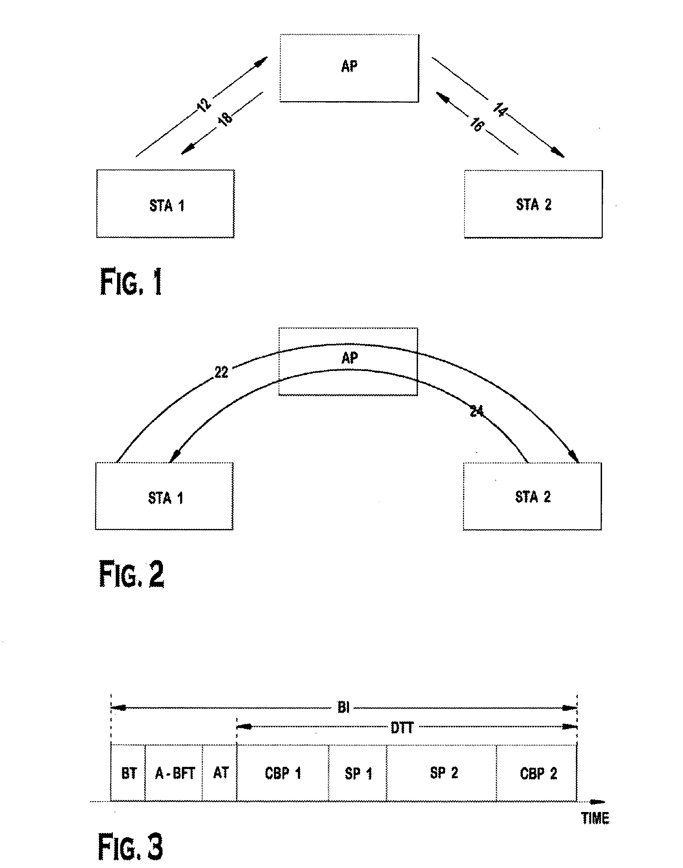

FIG. 1 shows an example handshake process for direct link setup. STA 1 that intends to exchange frames with STA 2 first sends a request frame to the AP containing its capabilities (12). After checking that STA 2 is associated to the AP in the basic service set (BSS) managed by the AP, the AP forwards this request to STA 2 (14). If STA 2 accepts the direct link request, it sends a response to the AP (16), which then forwards the response to STA 1 (18). Following this, the direct link is established and all frames exchanged between STA 1 and STA 2 are sent directly between these two stations. The stations continue to compete for the medium (using carrier sense multiple access (CSMA)) with other devices within the BSS.

The 802.11z standard developed extensions to the 802.11 DLS. The 802.11z defines a tunnelled DLS (TDLS). The main objective of 802.11z was to provide AP-independent DLS. FIG. 2 shows an example process for direct link setup in IEEE 802.11z. STA 1 sends a direct link request to STA 2 via the AP (22), and STA 2 sends a response to STA 1 via the AP (24). The DLS signalling frames are encapsulated in data frames so that they are transferred via the AP transparently. This results in a simplified 2-way handshake which does not require any of the TDLS features to be implemented within the AP.

As with the normal DLS, in TDLS defined by 802.11z, STAs involved in the direct link utilize the same frequency band as regular BSS traffic and they compete with this traffic through CSMA. The difference between the DLS/TDLS traffic and the normal BSS traffic is that in the DLS/TDLS, frames are exchanged directly between the two STAs without going through the AP.

With regard to wireless direct link communication, the state of the art is represented by US 2007/0230423 A1 and further by US 2010/059850 A1, US 2005/157674 A1 and XP 017603828 ("IEEE Standard for Information Technology - Telecommunications and Information Exchange between Systems - Local and Metropolitan Area Networks - Specific Requirements Part 11: Wireless LAN Medium Access Control (MAC) and Physical Layer (PHY) Specifications Amendment 8: Medium Access Control (MAC) Quality of Service Enhancements"; IEEE Std 802.11e-2005 (Amendment to IEEE Std 802.11, 1999 Edition (Reaff. 2003))). In relation to the disclosure of US 2007/0230423 A1, the present invention proposes a solution to the problem of improving beacon transmission flexibility from an access point, and of improving the throughput of direct link transmissions.

As the bandwidth requirements continue to increase, technologies utilizing frequency bands outside of the Industrial, Scientific, and Medical (ISM) radio bands used for 802.11 are becoming more popular. Two potential new unlicensed bands which are expected to be used for WLAN communications are the television (TV) white space (TVWS) and 60GHz unlicensed bands.

In the United States, 408 MHz of spectrum from 54 MHz to 806 MHz is allocated for TV. Currently, 108 MHz of that spectrum is being redeveloped for commercial operations through auctions and for public safety applications. The remaining 300 MHz of this prime radio spectrum will remain dedicated for over-the-air TV operations. However, throughout the United States, portions of that 300 MHz resource remain unused. The amount and exact frequency of unused spectrum varies from location to location. These unused portions of spectrum are referred to as TVWS. The Federal Communications Commission (FCC) is considering opening these unused TVWS frequencies for a variety of unlicensed uses. Because there are fewer TV stations located outside top metropolitan areas, most of the unoccupied TVWS spectrum is available in low population density or rural areas that tend to be underserved with other broadband options such as DSL or cable. Each available TV channel provides 6 MHz of spectrum capacity that can be used for broadband connectivity. TVWS will have much larger coverage areas due to long range propagation of signals at these frequencies. For example, a WLAN AP operating in TVWS can provide coverage for an area of a few square miles. In contrast, wireless equipment currently in operation such as 802.11b/g/n has an average coverage area of 150 square feet. Several standards bodies, including IEEE 802.19.1 are currently developing standards for the operation of WLAN and other devices in TVWS.

Recently, the FCC allocated 7 GHz of un-channelized spectrum for license-free operation between 57-64 GHz. This compares to less than 0.5 GHz of spectrum allocated between 2-6 GHz for WiFi and other license-free applications. The spectrum allocated in the 60 GHz frequency band makes it possible to have multi-gigabit radio frequency links. License-free 60 GHz radios have unique characteristics that make them significantly different from traditional 2.4 GHz or 5 GHz license-free radios. In particular, this technology lends itself well to low mobility indoor applications requiring very high data speeds, such as multimedia streaming, rapid upload/download, and wireless docking stations. The IEEE 802.11ad group has submitted a proposal for changes to the current 802.11 standard in order to specify a new physical layer (PHY) and medium access control (MAC) to support 60 GHz radios.

The 802.11 networks employ periodic beacons to time synchronize all the devices in the network. The beacon frame contains information elements which broadcast the availability of the networks. Some of the parameters included in the beacon frame are beacon interval, time stamp, network identity (ID), supported rate etc. These beacons loosely define a frame structure in 802.11, (i.e., data transmission occurs during the time interval between two consecutive beacon frames).

The 802.11 Task Group ad (TGad) has defined a new frame structure for 802.11. FIG. 3 shows a frame structure (beacon interval structure) in 802.11ad. The beacon interval is divided into a beacon time (BT), an association beamforming training (A-BFT), an announcement time (AT), and a data transfer time (DTT). The BT is an access period during which one or more mmWave beacon frames are transmitted. The A-BFT is an access period during which beamforming training is performed with a personal BSS control point (PCP) or AP. The AT is a request-response based management access period during which a PCP or AP delivers non-MAC service data units (MSDUs) and provides access opportunities for STAs to return non-MSDUs. The DTT is an access period during which frame exchanges are performed between STAs. The DTT comprises contention-based periods (CBPs) and service periods (SPs).

### SUMMARY

Methods and devices for wireless direct link operations are disclosed. A dynamic spectrum management (DSM) system includes a plurality of stations and a central entity. A plurality of different radio access technologies are deployed in the DSM system and the central entity coordinates and manages wireless communications in the network. A direct link station may have a single radio or more than one radio.

A direct link station receives a beacon periodically from an access point (AP) on a first set of channels, and has a direct link on a second set of channels. The direct link station receives a direct link synchronization message from the AP on the first set of channels indicating that a following target beacon transmission time (TBTT) is a synchronization TBTT (STBTT). The direct link station silences the direct link channels during the STBTT and transmits on the direct link channels during the beacan of a TBTT that is not indicated as the STBTT. The direct link station receives a control message concerning the direct link during the STBTT or following the STBTT. The direct link station may not initiate a transmission to the peer direct link station over the direct link unless the transmission or an acknowledgement to the transmission can be completed prior to the STBTT.

The direct link station may perform carrier sense multiple access (CSMA) on a primary channel of the direct link, and get an access to all direct link channels via the primary channel CSMA. The direct link station may switch a radio frequency (RF) to the DSM channels to receive a beacon message from an AP periodically in accordance with the TBTT. The direct link station may not initiate a transmission to the peer direct link station over the direct link unless the transmission or an acknowledgement to the transmission can be completed prior to the TBTT.

The direct link station may receive a traffic indication in the beacon message, and send a poll message to the AP on the DSM channels if the traffic indication indicates that the AP has unicast, multicast, or broadcast data for the direct link station, and receive the data from the AP on the second set of channels. If the direct link station has data to transmit to the AP, the direct link station may send a direct link interrupt request to the peer direct link station before switching a channel.

A connectivity map procedure may be performed to establish a map for connectivity, services, or capabilities of the devices in the network. The procedure may be initiated by the central entity sending a connectivity query announcement message to the devices. The direct link station broadcasts a connectivity query message so that other stations measure the message and reports the measurements to the direct link station. The direct link station also measures the response messages from other stations, and sends a report including its own measurements and other stations' measurements to the central entity for updating the connectivity map.

In case of the DSM link failure, the direct link station may request the peer direct link station to act as a relay for the DSM link to the central entity. The peer station then sends a keep alive message to the central entity to indicate that the direct link station acts as a relay, and forwards messages received from an AP to the peer direct link station over the direct link.

### BRIEF DESCRIPTION OF THE DRAWINGS

A more detailed understanding may be had from the following description, given by way of example in conjunction with the accompanying drawings wherein:
FIG. 1 shows an example handshake process for direct link setup;
FIG. 2 shows an example process for direct link setup in IEEE 802.11a;
FIG. 3 shows a frame structure in 802. 11ad;
FIG. 4A is a system diagram of an example communications system in which one or more disclosed embodiments may be implemented;
FIG. 4B is a system diagram of an example wireless transmit/receive unit (WTRU) that may be used within the communications system illustrated in FIG. 4A;
FIG. 4C is a system diagram of an example radio access network and an example core network that may be used within the communications system illustrated in FIG. 4A;
FIG. 5 shows an example architecture of the DSM system;
FIG. 6 shows an example signaling flow for establishing a direct link between two devices in TVWS;
FIG. 7 shows an example transmission and reception on the direct link between client devices with a separate radio;
FIG. 8 shows an example transmission of STBTT and direct link sync message;
FIGS. 9A and 9B show an example signaling flow for direct link setup on 60 GHz;
FIG. 10 shows an example frame format with a contention based period (CBP);
FIG. 11 shows an example frame format with a data transmit time (DTT) having only service period (SP);
FIG. 12 shows an example direct link setup using a single radio at clients;
FIG. 13 shows an example use of controlled access period (CAP) for two active direct links, (a high bandwidth direct link 1 and a lower bandwidth direct link 2);
FIG. 14 shows an example process for setting up a direct link by sending a poll message to initiate a CAP;
FIG. 15 shows an example transmission of piggybacked acknowledgements (ACKs) during a direct link transmission opportunity (TXOP);
FIG. 16 shows an example message flows for aggregated channel sharing;
FIG. 17 shows an example DSM link and direct link operation wherein both the direct link and the DSM link use the primary channel to reserve the medium;
FIG. 18 shows an example transmissions on the DSM link and the direct link implementing CSMA on the primary channel;
FIG. 19 shows an example transmissions on the DSM link and the direct link using distinct primary channels;
FIG. 20 shows an example DSM system architecture including the DSM engine;
FIG. 21 shows an example operation of direct link using Mode I;
FIG. 22 shows an example operation of direct link using Mode II;
FIG. 23 shows an example time multiplexing operations in a Mode II direct link;
FIGS. 24(A) and 24(B) show example operations of a STA at the TBTT;
FIG. 25 shows an example transmission of unicast frames from the AP to the STA on the DSM link;
FIG. 26 shows an example signaling flow for reestablishing a direct link after unicast transmission on the DSM channel;
FIG. 27 shows an example signaling flow for reestablishing a direct link after unicast transmission on the DSM channel;
FIG. 28 shows an example signaling flow for direct link reestablishment using handshaking between stations;
FIG. 29 shows an example transmission of broadcast/multicast frames from the AP to the direct link STAs on the DSM link;
FIG. 30 shows an example handshake for direct link STA transmission to the AP;
FIG. 31 shows an example of a space link;
FIG. 32 shows an example network architecture including a central node and a plurality of terminal devices for terminal-to-terminal direct link management;
FIG. 33 shows an example signaling flow for connectivity information collection after the terminal association;
FIG. 34 shows an example signaling flow for periodic connectivity information update;
FIG. 35 shows an example on-demand connectivity information collection;
FIG. 36 shows an example signaling flow for the direct link setup using the connectivity and capabilities map;
FIG. 37 is an example flow diagram of a process for the connectivity check;
FIGS. 38A and 38B show an example direct link monitor procedure;
FIGS. 39A-39C are an example flow diagram of a procedure for direct link setup or activation in accordance with once example;
FIGS. 40A-40D are an example flow diagram of a procedure for direct link setup or activation in accordance with another example;
FIG. 41 shows an example message exchange for direct link setup;
FIG. 42 shows an example signaling flow between direct link stations and the DSM engine for direct link setup;
FIG. 43 shows an example flow diagram of a process for making a direct link reconfiguration decision;
FIG. 44 is a flow diagram of an example process for direct link channel set reconfiguration;
FIGS. 45A and 45B are a flow diagram of an example process for direct link channel set reconfiguration initiated by the STA;
FIG. 46 shows an example channel switch message;
FIG. 47 shows an example aggregated quiet element;
FIGS. 48A and 48B are a flow diagram of an example process for DSM link maintenance;
FIGS. 49A-49C are a flow diagram of an example process for DSM link failure;
FIG. 50 shows a scanning example; and
FIG. 51 shows an example structure of the DSM engine including the direct link management entity (DLME) and interfaces to the AP and the bandwidth allocation control (BAC).

### DETAILED DESCRIPTION

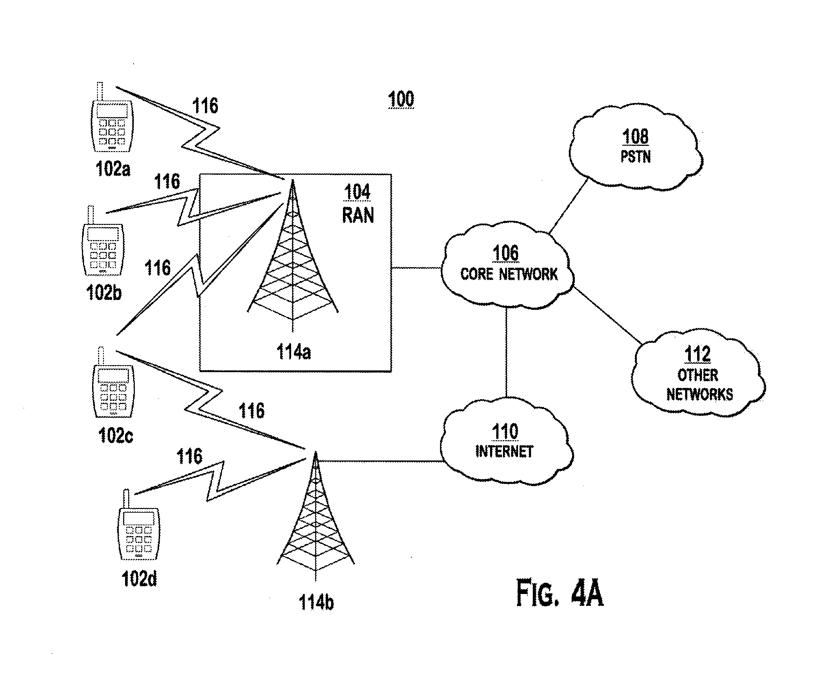

FIG. 4A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another example, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other examples, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one example, the base station 114b and the WTRUs 102c, 102d may implement a radio technology such as IEEE 802.11 to establish a wireless local area network (WLAN). In another example, the base station 114b and the WTRUs 102c, 102d may implement a radio technology such as IEEE 802.15 to establish a wireless personal area network (WPAN). In yet another example, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, prepaid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

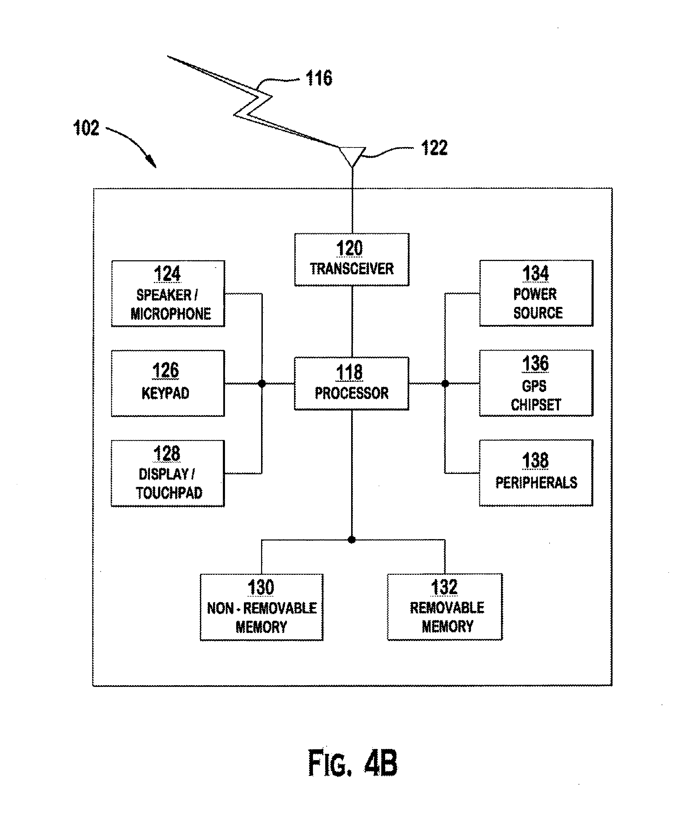

FIG. 4B is a system diagram of an example WTRU 102. As shown in FIG. 4B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 4B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, the transmit/receive element 122 may be an antenna configured to transmit and/or receive RF signals. In another example, the transmit/receive element 122 may be an emitter/detector configured to transmit and/or receive IR, UV, or visible light signals, for example. In yet another example, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 4B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

FIG. 1C is a system diagram of the RAN 104 and the core network 106 according to an example. As noted above, the RAN 104 may employ a UTRA radio technology to communicate with the WTRUs 102a, 102b, 102c over the air interface 116. The RAN 104 may also be in communication with the core network 106. As shown in FIG. 1C, the RAN 104 may include Node-Bs 140a, 140b, 140c, which may each include one or more transceivers for communicating with the WTRUs 102a, 102b, 102c over the air interface 116. The Node-Bs 140a, 140b, 140c may each be associated with a particular cell (not shown) within the RAN 104. The RAN 104 may also include RNCs 142a, 142b. It will be appreciated that the RAN 104 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 104 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 104 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

Conventional IEEE 802.11 based direct link operations are not coordinated by the AP and direct links do not operate on frequencies or channels different than the one used by the AP link. Direct links may benefit significantly from the management of the link by a central entity. Central management may allow a better peer discovery for direct links. It may improve throughput on the direct link and allow coexistence of multiple direct links by allowing for a scheduling and management mechanism that may effectively avoid interference and unnecessary contention. Stations are often constrained in terms of power or sensing capabilities and may benefit from being assisted by a central entity. The direct link devices may use the new unlicensed spectrum available in TVWS and 60 GHz. In order to utilize this spectrum, a centrally managed direct link may be needed for interference mitigation and selection of appropriate channels (in the TVWS band) and for proper configuration of the radios of each device (for utilization in 60 GHz). In the case where the direct link uses a separate radio from the 802.11-based link, synchronization of the links in the STA is required in order for the central management entity to manage the link. If a common radio is used, the bandwidth needs to be managed effectively to ensure high throughput for the direct link traffic as well as to allow multiple direct links in the same local area.

It should be noted that the embodiments hereafter will be explained with reference to IEEE 802.11 as an example, but the embodiments are applicable to any wireless technologies. It should also be noted that although the embodiments may be described with reference to TVWS channels or other specific channels, the embodiments may be extended to other channels.

Hereafter, the terms "channel" and "physical channel" will be used interchangeably, which refer to a segment of bandwidth in a specific operating band. Hereafter, the terms "DSM client," "client," "station," "device," and "terminal" will be used interchangeably, and represent an entity that is capable of point-to-point (direct link) communication with another entity. The terms "station" and "client" will be used to denote non-AP devices, which may be a WTRU or a UE. The terms "direct link activation" and "direct link setup" will be used interchangeably, and the terms "direct link deactivation" and "direct link teardown" will be used interchangeably. The term "central entity" represents an entity that controls the communications in the local network, (i.e., the DSM system). The central entity may be an AP of the 802.11 network, a home evolved NodeB (HeNB), a home NodeB (HNB), or a DSM engine, or the like. The central entity may comprise one component or more than one component. The term "DSM engine" represents an entity that has a capability of coordinating and managing the wireless communications in the local area, and may include the AP, HeNB, or HNB functionalities. The term "DLME" is used to represent an entity (software entity) that controls the direct link operations. The "DLME" may be located anywhere, for example, in an AP (HeNB, HNB, etc.), in the DSM engine (the DLME server), or in an external entity (e.g., a personal computer connected to the AP), or the like. Hereafter, the term "control channel" refers to a logical channel which may be used to carry control signaling.

In the wireless communication environment, a plurality of different radio access technologies may be deployed. In accordance with one example, a central entity may be provided for efficient management of the spectrum and taking advantage of potential synergies across the radio access technologies, (i.e., one technology is used to assist in the operation of another). Hereafter, such a system is referred to as a DSM system.

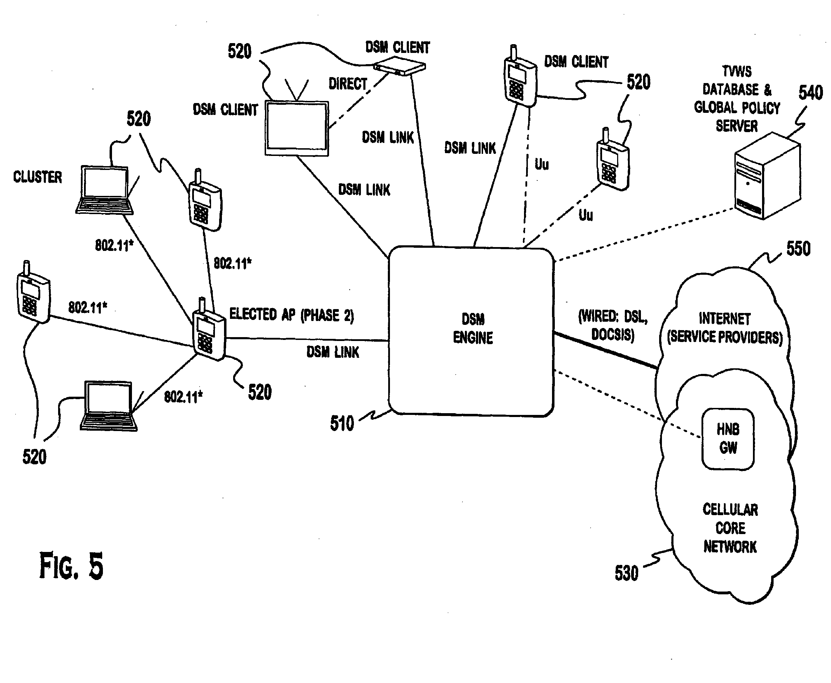

FIG. 5 shows an example architecture of the DSM system. The DSM system may operate in a local area such as a home or an office. The DSM system comprises a DSM engine 510 and DSM clients 520. The DSM engine 510 is a central entity that coordinates and manages the wireless communications in the local area. The DSM clients 520 are wireless devices operating in the local network other than the DSM engine 510.

The DSM engine 510 controls and coordinates transmissions from multiple DSM clients 520. Communications between the DSM engine 510 and the DSM clients 520 is through a DSM link. The DSM engine 510 may have the functionalities of an 802.11 AP as well as additional functionalities to optimize the DSM client transmissions (e.g., sensing, coordination, and the like). The DSM engine 510 may be a separate entity, or may be running on an AP.

The DSM engine 510 may manage the bandwidth used by the direct link. The DSM engine 510 serves as a central management entity which coordinates peer discover, management of multiple direct links, and quality of service (QoS) management of the traffic sent over the direct link.

The DSM engine 510 and the DSM clients 520 may operate in the unlicensed bands, (e.g., 2.4 GHz and 5 GHz ISM bands, TVWS bands, and 60 GHz bands, etc.). The DSM engine 510 may aggregate bandwidths over licensed and unlicensed bands, and any direct links (point-to-point links between DSM clients 520). The DSM engine 510 may be interconnected to the external networks such as a cellular network 530, TVWS database 540, and IP networks 550 through a wireless wide area network (WWAN) or wireline links.

The DSM engine 510 may operate in the TVWS band as a mode II device as defined in FCC's Second Memorandum Opinion and Order (FCC 10-174), if it has access to the TVWS database and has geo-location capability. The DSM engine 510 may operate in a sensing-only mode, which may allow the DSM system to operate in a larger subset of channels than what the TVWS database allows.

The devices (the DSM clients 520), may have a single radio. In this case, the devices which communicate on the direct link may use the same physical channels on the DSM link. Alternatively, the devices may have multiple radios. In this case, the devices which communicate using a direct link may do so through a separate radio that is used for the direct link.

The devices may transmit and receive simultaneously on multiple radios, making simultaneous transmission on the DSM link and direct link possible. The separate radio may be dedicated for direct link communication, or may be used for other purposes as well (e.g., sensing). In this case, the central management entity (the DSM engine 510) may coordinate the activation of this radio and the communications on multiple direct links without causing network interference.

The DSM engine 510 may have a fixed access link such as DSL or cable. The DSM clients 520 may communicate to the AP via a DSM link over the unlicensed ISM bands or the TVWS bands, etc. Under the management of the DSM engine 510, certain DSM clients 520 may setup a direct link communication over the same or different frequency band(s). For example, the direct link may be setup over the TVWS frequencies.

The direct link may be used to offload traffic in the DSM link (e.g., ISM band) when high traffic between the devices is expected, (e.g., video streaming, gaming, etc.). The direct link may be used to selectively offload certain traffic, (e.g., low latency, critical traffic, etc.), to available TVWS channels, 60 GHz channels, or the like. The direct link may be used to allow for wireless cable replacement technologies to exist in a home or an office without causing additional interference or congestion to the existing home/office network operating in the ISM bands. The direct link may be used as a means to provide fast download between devices without the need to have traffic routed through the AP. The direct link may be used to allow communication between two devices in close proximity to operate over TVWS when the transmit power that may be used on the available channels is limited due to constrains or policies imposed by the TVWS database. In each case, the DSM engine 510 provides bandwidth management for the direct link(s), (for example, by querying the TVWS database and providing TVWS bandwidth management where multiple direct links may exist).

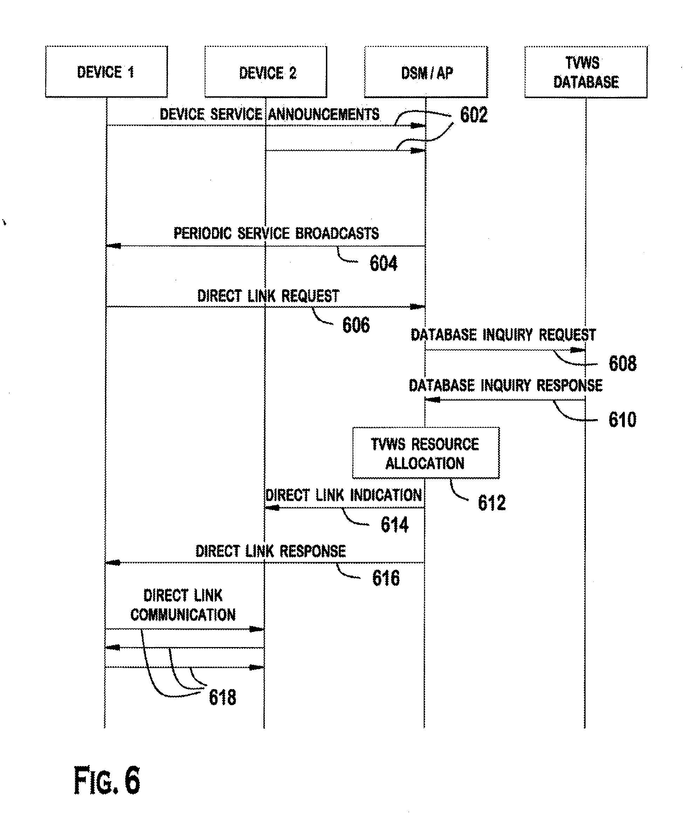

FIG. 6 shows an example signaling flow for establishing a direct link between two devices in TVWS. Device 1 and device 2 that are associated with the DSM/AP on the ISM frequency band send a device service announcements message to the AP including a list of direct link services they offer (602). The DSM/AP compiles the list of services available in the network and broadcast (e.g., periodically) the list to all of the devices in the WLAN (604).

Based on the service broadcast, device 1 wishes to set up a direct link with device 2 to obtain an access to a service offered by device 2, (e.g., video streaming). Device 1 sends a direct link setup request to the DSM/AP (606). The DSM/AP sends an inquiry to the TVWS database to determine the channels that are currently free of any incumbents and usable for the direct link service being requested (608). The TVWS database sends a inquiry response to the DSM/AP (610). The DSM/AP performs allocation of the TVWS frequency to be used for the direct link (612). If other ongoing direct links are active, the DSM/AP ensures allocation of the frequency in such a way to ensure interference is properly managed.

The DSM/AP sends a direct link indication message to device 2 to inform the request for a direct link by device 1, and the TVWS frequency where the direct link may take place (614). This may also include an acknowledgement from device 2 to the AP. The DSM/AP sends a direct link response message to device 1 to indicate that the direct link has been established on a specific TVWS frequency by the DSM/AP (616). Direct communication between device 1 and device 2 may now take place on the TVWS frequency selected by the DSM/AP (618).

Examples where the clients have multiple radios are explained hereafter. Each of the radios may be used to communicate over a specific radio access technology (RAT). For instance, the DSM link may use radio 1 on a first RAT (e.g., LTE) to communicate with client devices, such that the DSM link may be used to setup and control point-to-point communications between client devices, and any point-to-point communications between the client devices may be through a direct link using radio 2 over a second RAT (e.g., 802.11 over TVWS, 802.11 over 60 GHz, LTE time division duplex (TDD), etc.). As the two links may operate independently, the DSM link may be used to synchronize actions (e.g., modification of the direct link) on the direct link, for example, by providing an indication of when the action is to take place.

In order to avoid contention of the direct link with the DSM link, the direct link may be allocated on physical channels which are distinct from the DSM link channels. In this case, a separate radio may be used by the client devices to communicate on the direct link, thus allowing transmission and reception on the direct link to occur asynchronously from transmission and reception on the DSM link.

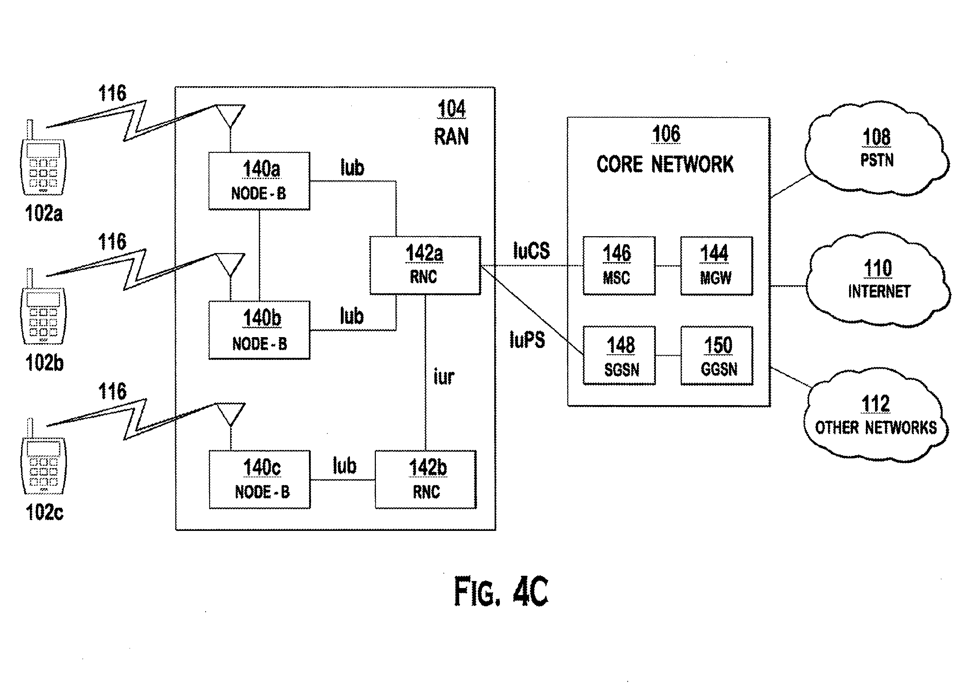

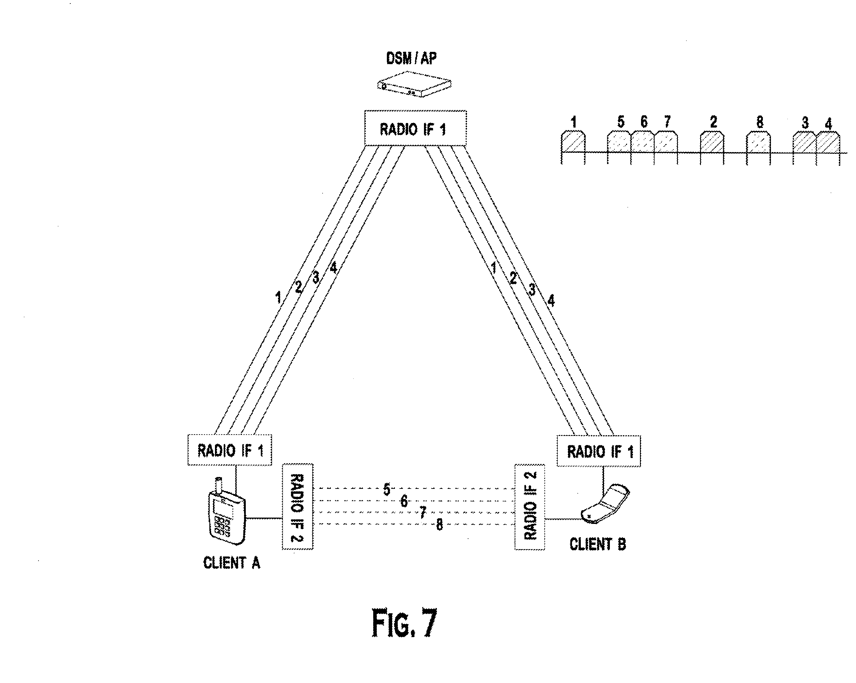

FIG. 7 shows an example transmission and reception on the direct link between client devices with a separate radio. In FIG. 7, channels 1-4 are assigned to the DSM link and channels 5-8 are assigned to the direct link. The DSM link channels and the direct link channels may be located in the same band, (e.g., TVWS). Alternatively, the direct link channels may be located in a separate band, (e.g., 60 GHz), and the channel bandwidths may be totally different. The AP may or may not have a second radio for communication over the direct link. In FIG. 7, 4 channels are assigned for the DSM link and the direct link, respectively. It should be noted that any number of channels may be assigned for the DSM link or the direct link.

In FIG. 7, client A an client B that are direct link capable have the support for two separate radios (radio intermediate frequency (IF) 1 and radio IF 2). The clients with two separate radios may transmit on one radio while simultaneously receiving on another radio. The AP (DSM) may support a single radio and may not be direct link capable. The AP and the clients may not simultaneously transmit and receive on any subset of the four channels handled by the single radio.

The channels which make up the DSM link may utilize the primary channel CSMA scheme. With the primary CSMA scheme, a device gets an access to all channels of the DSM link by performing CSMA on one of the channels, called a primary channel. The primary channel may be designated by the DSM engine and communicated to the clients through the control channel on the DSM link. The direct link may also utilize the primary channel CSMA scheme such that the devices that are involved in the direct link may access the medium through the primary channel CSMA. This allows for multiple sets of peer devices to communicate over the same set of channels (four channels in FIG. 7).

Since the direct link channels are allocated for the direct link traffic, it is easy for the DSM engine (through control messages from the AP) to control the QoS of each of the direct links, and to allocate a new set of channels when the number of direct links on the initial set of channels causes a QoS threshold to be exceeded. The direct link may not contain any beacons and all information concerning the direct link may be sent by the AP through the DSM link.

Synchronization between the DSM link and the direct link may be an issue when the DSM engine is trying to send control information concerning the direct link over the DSM link. For example, the DSM may wish to start a silent period over the direct link channels (e.g., to initiate some spectrum sensing over these channels). This may be done through a MAC layer control message sent to the clients using the DSM link. In this case, the exact time where the actual silent period will take effect, (i.e., the clients in the direct link have been silenced), may be unknown since the clients may be in the process of transmitting a packet over the air. In addition, a situation where an acknowledgement (ACK) for an already transmitted packet cannot be sent due to the occurrence of a silent period should be avoided, since it requires extra overhead of tracking which packets are still to be acknowledged at the end of the silent period.

In another example, the DSM engine may wish to change the channels used in the direct link. This may be done through a MAC layer control message sent to the clients using the DSM link. In this case, the control message needs to be sent at an instant of time where the direct link is temporarily inactive or in a pre-defined state. If this is not the case, depending on which client receives the channel switch control message, one of the clients may acknowledge a frame sent by the other using a wrong physical channel resulting in unnecessary retransmissions.

In one embodiment, a direct link synchronization message may be sent for synchronization. The direct link synchronization message may be used to solve any of the synchronization problems. In cases where the DSM link relies on 802.11, the direct link synchronization message may be sent over the DSM link at any time prior to the target beacon transmission time (TBTT) where synchronization will take place, which is referred to as synchronization TBTT (STBTT). Prior to the STBTT, the AP may send the direct link synchronization message to the clients involved in the direct link to indicate that the direct link should be silenced during the STBTT. This silencing of the direct link during the STBTT allows the AP to send messages concerning the direct link during or immediately after the beacon of the STBTT.

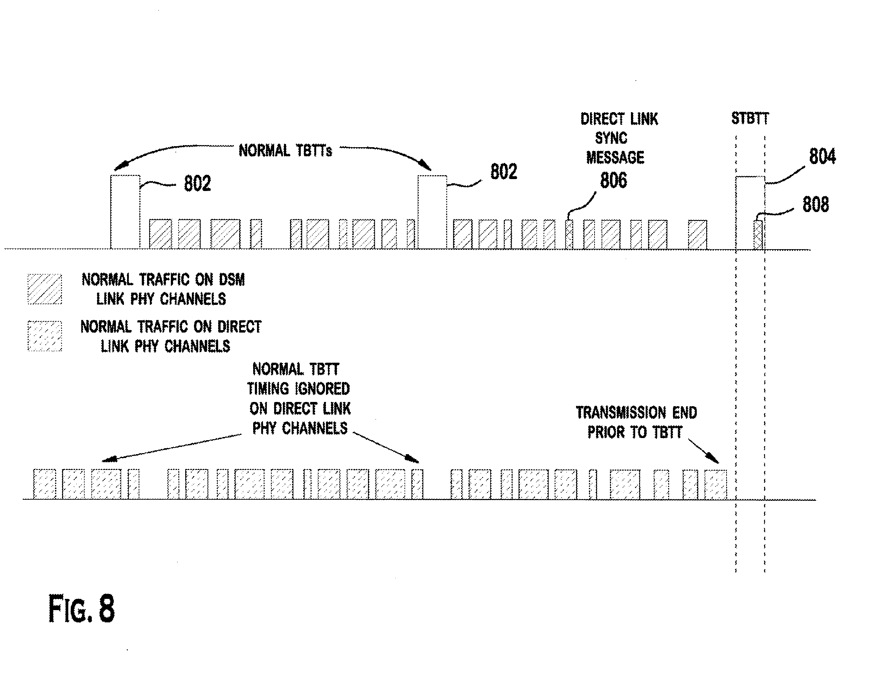

FIG. 8 shows an example transmission of STBTT and a direct link synchronization message. In FIG. 8, the DSM link traffic and the direct link traffic are shown in terms of a traffic profile on the PHY channels. FIG. 8 does not show aggregated channels for simplicity. As shown in FIG. 8, during the TBTTs 802, the AP sends out a beacon which all stations listen for and receive, including the stations involved in the direct link. Since the DSM link and the direct link occur on different physical (and non-interfering) channels, the normal TBTT timing may be ignored on the direct link, where traffic continues without interruption. The stations receive the beacon based on their communication on the DSM link channels. The direct link synchronization message 806 is received prior to the STBTT 804, which announces the next TBTT 804 as an STBTT. In this case, the stations, upon receiving the direct link synchronization message 806, ensure that all transmissions on the direct link terminate prior to the STBTT 804 (based on the timing of the DSM link). The stations may not initiate a transmission over the direct link unless the transmission can be completed prior to the start of the STBTT 804. In case where the transmission needs to be acknowledged, the transmission on the direct link may not be started unless the transmitting station is capable for receiving this acknowledgement. The AP may use the STBTT 804 to transmit a channel switch message 808 to the stations involved in the direct link. Any message related to the direct link that requires it to be synchronized with the DSM link, (e.g., addition of new physical channels, swapping of channels between the direct link and the DSM link, etc.), may be transmitted at or immediately following the STBTT 804.

The direct link synchronization message 806 may be used to provide an advanced warning as to when it will take effect (e.g., in k TBTTs). The direct link synchronization message 806 may be sent sequentially to both stations. Alternatively, the direct link synchronization message 806 may be sent to a single station (e.g., Client A), and the station (Client A) may forward it over the direct link to the other station (e.g., Client B).

For stations that implement power saving mode on the DSM link, the direct link synchronization message 806 may be transmitted with the delivery traffic indication message (DTIM). It should be noted that since the DSM link and the direct link are implemented using separate radios in this example, a STA may be in a power save mode for the DSM link while it is actively transmitting on the direct link. In this case, the AP may send the direct link synchronization message with the DTIM. Upon reception of the direct link synchronization message with the DTIM, the stations may either disable power save mode until after reception of the next beacon (to occur in TBTT), or go back to the power save mode until the next TBTT. Alternatively, the AP may send the direct link synchronization message immediately after the DTIM beacon.

For a direct link that is implemented via a 60 GHz band, the main challenge is coexistence of the direct link with the conventional 60 GHz systems (implementing the 802.11ad standard) as well as aligning the DSM link and the direct link scheme into the 60 GHz MAC. The service period (SP) in the 60 GHz MAC standard may be used for the direct link traffic. In this way, the DSM may allocate the proper length or number of service periods based on the number of 60 GHz direct links active in the DSM system and the QoS requirements of each of these direct links.

When two stations are required to set up a direct link over the 60 GHz frequency, the DSM engine may choose one of the stations to be the personal basic service set (PBSS) control point (PCP) of a new PBSS. This station may be referred to as a designated station. The PBSS is created by the DSM engine to satisfy the direct link. The STA having a larger content to transfer may be chosen as the PCP for the new PBSS. Alternatively, the STA which is least busy may be chosen as the PCP as it has more time to manage other STAs.

The DSM engine may transfer the link budget requirements, (e.g., based on initial QoS requirements), to the newly elected PCP during the direct link establishment phase. This establishment may be achieved through messages that are sent over the DSM link. Based on the link budget requirements, the PCP may create the extended schedule element defined in the 802.11ad.

Prior to transmitting the schedule, if the designated station detects the presence of another PCP in the vicinity (that is not part of the DSM system) the designated station may request a handover in order to become an active PCP. The designated station may manage the traffic of the direct link as well as the traffic of the already existing PBSS.

Alternatively, the designated station may notify the DSM engine of the presence of another network operating on the channel and in the same direction. The DSM engine may then switch the direct link to a new 60 GHz channel which is observed to be free. This may be chosen if the designated station does not have the resources required to manage the both the direct link as well as the PBSS which is not part of the DSM system.

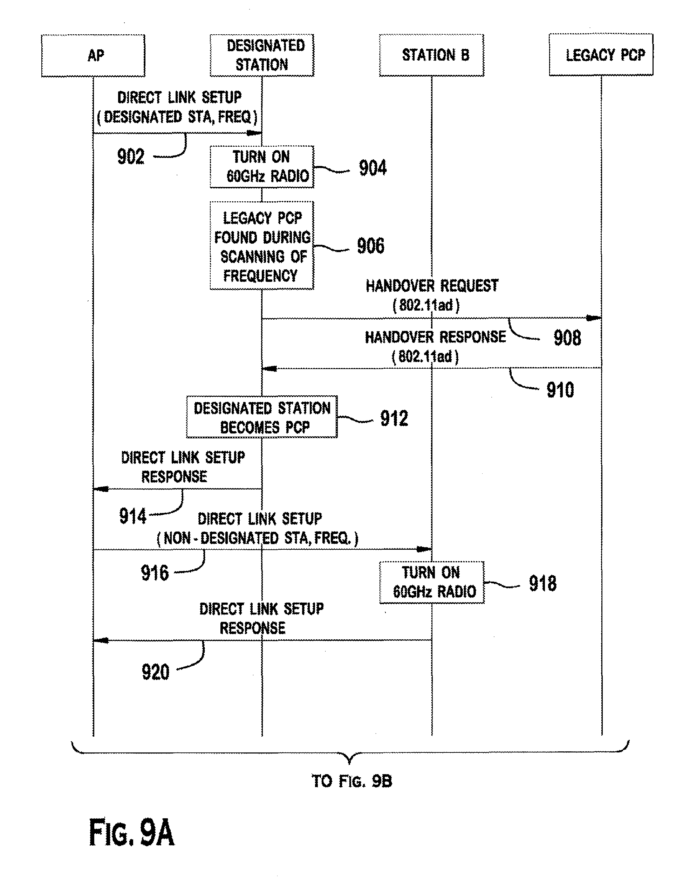

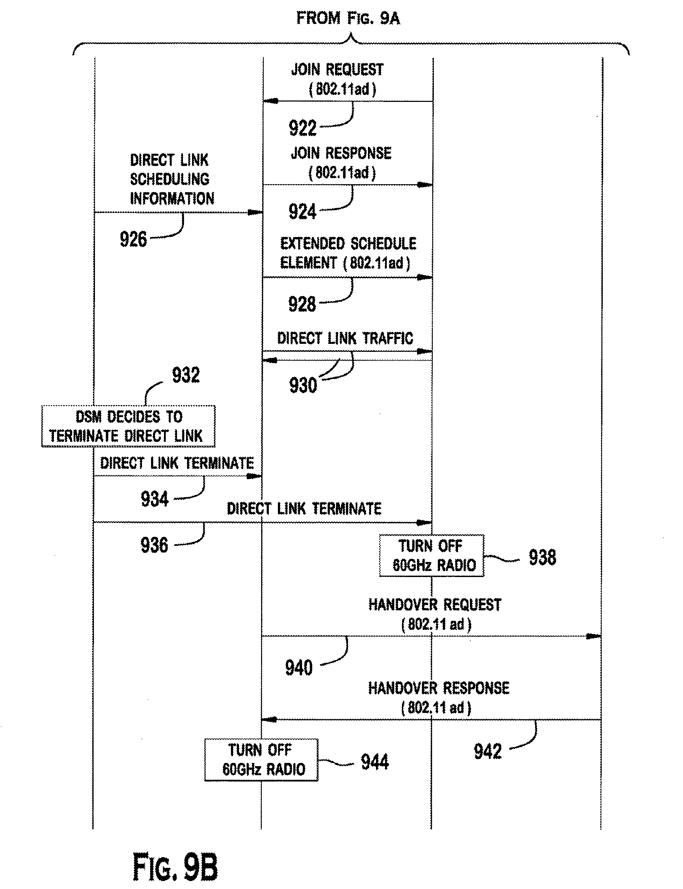

FIGS. 9A and 9B show an example signaling flow for direct link setup on 60 GHz. The AP sends a direct link setup message to the designated station (902). The designated station turns on a 60 GHz radio (904). If the designated station finds a legacy PCP during the scanning of frequency (906), the designated station may send a handover request to the legacy PCP (908). The legacy PCP responds with a handover response (910). The designated station then becomes a PCP (912). The designated station sends a direct link setup response to the AP (914). The AP sends a direct link setup message to station B (i.e., a non-designated station) (916). The station B turns on a 60 GHz radio (918). The station B sends a direct link setup response to the AP (920). The station B sends a join request to the designated station (922), and the designated station responds with a join response (924). The AP sends a direct link scheduling information to the designated station (926). The designated station sends an extended schedule element to station B (928). Direct link traffic is then exchanged between the designated station and station B (930).

If the DSM engine decides to terminate the direct link (932), the AP sends a direct link terminate request to the designated station and station B (934, 936). The station B turns off the 60 GHz radio (938). The designated station sends a handover request to the legacy PCP (940), which responds to the designated station (942). The designated station then turns off the 60 GHz radio (944).

Once a link is established, the designated station/PCP may create service periods for the direct link. Alternatively, a contention-based period (CBP) may be allocated. In case where the AP is 60 GHz capable, the CBP may be used by the AP to send messages to the stations instead of using the DSM link. Alternatively, the CBP may be used to allow coexistence of legacy 60 GHz stations, (which are not attached to the DSM system), assuming that the designated station has been able to trigger the PCP handover and become the PCP of the legacy independent BSS (IBSS).

The DSM network may have multiple 60 GHz direct links managed by a single DSM entity. In this case, each 60 GHz direct link may operate as a separate PBSS, (i.e., each pair of direct link STA will have one PCP managing the individual PBSS). These 60 GHz direct links may operate on different channels or on the same channel. These direct links may share the channel if there is no other channels available. In this case, different PCPs may co-ordinate the scheduling so that they do not interfere among themselves.

In 60 GHz direct link, a synchronization may be applied to improve throughput. In one example, adaptive beaconing may be employed in which a long beacon interval is adaptively adjusted according to the uplink/downlink traffic ratio. In a direct link communications, it is common that the traffic is asymmetric, (e.g., data traffic between a set-top box (STB) and a high definition (HD) display, where the traffic to the HD display is much higher than the traffic to the STB). After initial synchronization, the node with higher traffic may transmit and then wait for the other node to send an acknowledgement (ACK) or a block ACK. In case of a special event, (e.g., some management or control message like channel switch, relay request/reply and measurement reports etc.), a special control packet may be appended to the data or ACK packet. This may result in sending out a beacon in a regular fashion to deal with the special event. After the special event, the nodes may return to the loose synchronization mode. If there are no ACKs being sent, a special time interval may be reserved for the traffic in the uplink direction or in case of distributed coordinated function (DCF) the message may be sent with higher priority, (i.e., with a shorter inter frame space (IFS)).

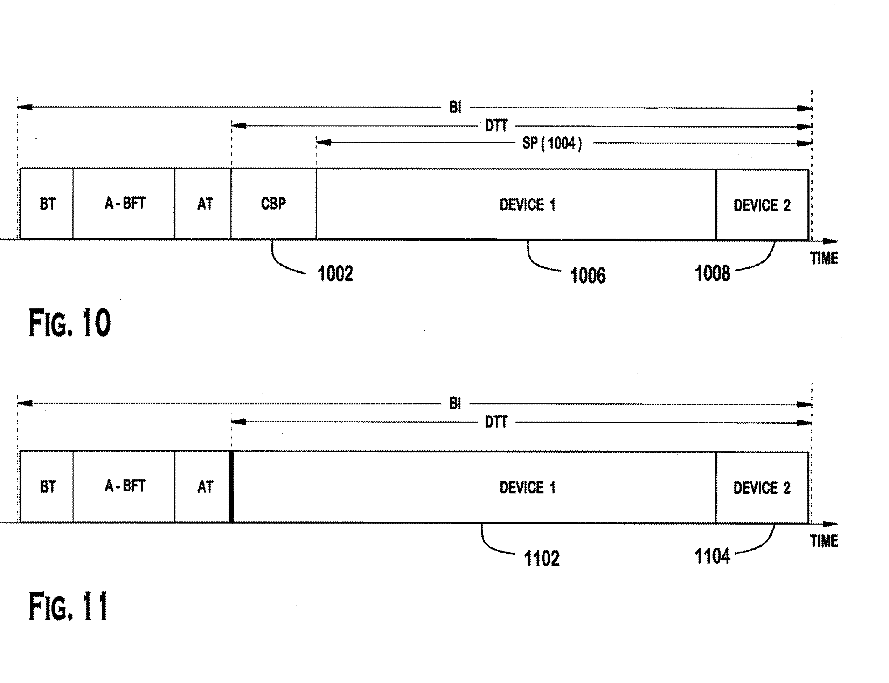

This may also be applied to the frame structure presented in 802.11ad. The time interval of the frame may increase or decrease depending on the traffic ratio. If there is very small CBP for control information where any device in a P2P network may access the channel to send any message, this time interval may be used to send control and management information for the network. FIG. 10 shows an example frame format with CBP 1002. The data transmission time (DTT) comprises the CBP 1002 and a service period (SP) 1004. The SP 1004 may be divided into two time slots for downlink and uplink. The time slot 1006 for downlink traffic may be much longer than the time slot 1008 for uplink traffic.

Alternatively, the DTT may comprise only SP. FIG. 11 shows an example frame format with a DTT having only SP. The DTT may comprise two time slots for downlink and uplink. The time slot 1102 for the downlink traffic may be much longer than the timeslot 1004 for the uplink traffic. The beacon interval may be based on the ratio of downlink to uplink traffic. In a special event, the network may switch to the regular beaconing and frame structure and switch back to after dealing with the event.

Alternatively, the DTT may comprise a CBP and a very small SP. In the CBP the downlink traffic may have a shorter IFS than the uplink traffic. In this way, the downlink traffic may get a higher priority than the uplink traffic. There may also be a small scheduled period in the frame. This scheduled period with two time slots may provide equal opportunity to the devices to transmit. In case of any special event the devices may switch to the regular beacon mode.

Alternatively, a non-beacon mode may be employed in which data frames are exchanged without a regular beacon or an adjusted beacon interval. For example, downlink data may be pre-assigned to regular timeslots and uplink ACK packets may be pre-assigned to regular timeslots. A beacon may be sent on a condition that there is a special event, (e.g., discovery, channel switch, and mode switch, etc.).

In case where devices have a reduced capability (e.g., having only one radio), or the number of available TVWS channels is limited, a single radio approach may be used for the direct link. In this example, the direct link and the DSM link share the same aggregated physical channels. The DSM link and direct link therefore compete for the same resources at a given time. The requirements of avoiding simultaneous transmissions and receptions result in the same channels being allocated either to the direct link or to the DSM link at any time instant.

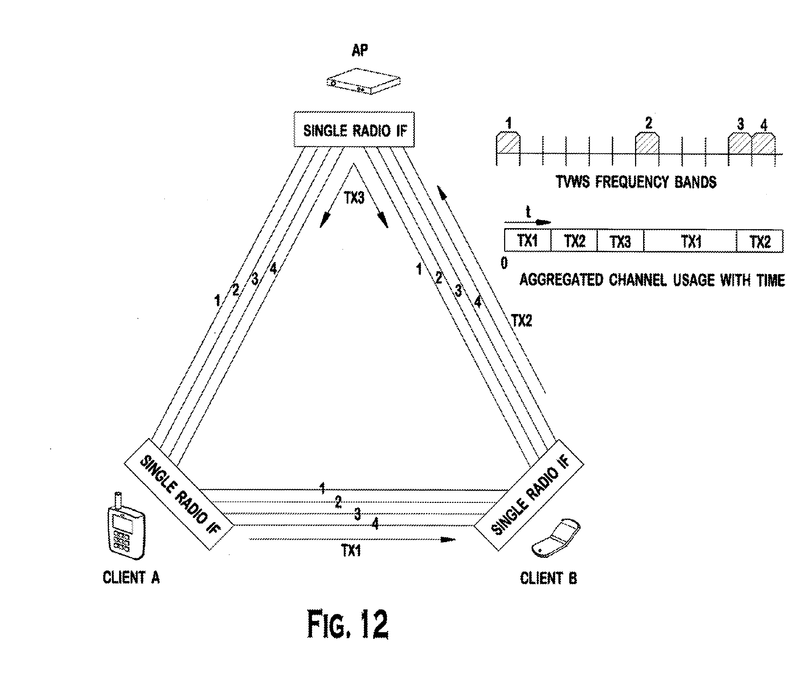

In one example, the DSM link and the direct link may use a single radio over a single radio access technology. The DSM link may be used to control direct link communication by providing and signaling periods of time when the channels can be used for direct link communication. The DSM engine or AP may manage multiple direct links, by providing different periods for each link. The size of these periods may be related to the amount of traffic that is to be transferred on the direct link. The DSM engine or AP may tell the client devices the period during which they may use their direct link. In a system that relies on 802.11, the resources may be shared fully using controlled access phases. FIG. 12 shows an example direct link setup using a single radio at clients. Client A and Client B have an active direct link between them. Clients A and B also maintain communication with other devices through the AP as well as listening for broadcast and DSM control messages that are sent out by the AP. Each of the transmissions made by the separate stations may occupy all aggregated channels (e.g., four as illustrated in FIG. 12), but may be time-multiplexed over the channels as shown in FIG. 12, (i.e., TX1 from client A to client B, TX2 from client B to the AP, and TX3 from the AP to the clients are time multiplexed).

A priority may be given to the direct link to ensure QoS for the direct link, for example, when the direct link is used for a high-bandwidth or real-time data traffic such as streaming of video from an STB to a display station. In order to allow this in the context of a channel sharing between the direct link and the DSM link, a contention free period may be used for traffic on the direct link.

In 802.11, a controlled access phase (CAP) is initiated and controlled by the AP through a hybrid coordinator (HC). For this implementation of the direct link, the signaling which may occur during the CAP as well as the termination of the CAP may be tailored towards the use of a CAP for direct links. The stations may be allowed to transmit to each other with minimal intervention by the AP during the CAP, unlike in the 802.11 where the CAP is fully managed by the AP/HC.

A CAP for the direct link may be initiated by the AP (under the control of the DSM engine) based on the presence of a direct link between two stations that are under the control of that AP. In other words, the DSM engine may periodically instruct the AP to initiate a CAP for an active direct link. During the CAP that is associated with a particular direct link, all stations that are not involved in the direct link are restricted from using the aggregated channels until the end of the CAP. This allows contention-free communication between the devices involved in the direct link during the CAP, and also eliminates the majority of the CSMA overhead during the direct link.

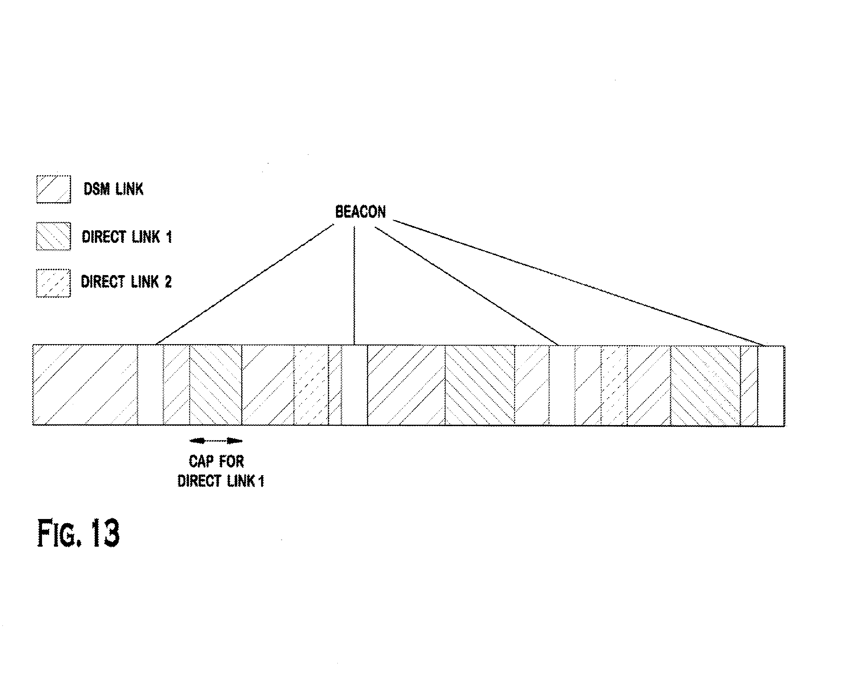

FIG. 13 shows an example use of CAP for two active direct links, (a high bandwidth direct link 1 and a lower bandwidth direct link 2). The use of the aggregated channels are divided in time between the DSM link and CAPs for each of the direct links that are active. In FIG. 13, the time period available for data transmissions on the channels are divided for the direct link 1, direct link 2, and the DSM link. The DSM engine may control the relative amount of time for the DSM link and the direct link(s), for example, based on the traffic needs of each, and the AP may perform the necessary signaling to start, maintain, and end each CAP.

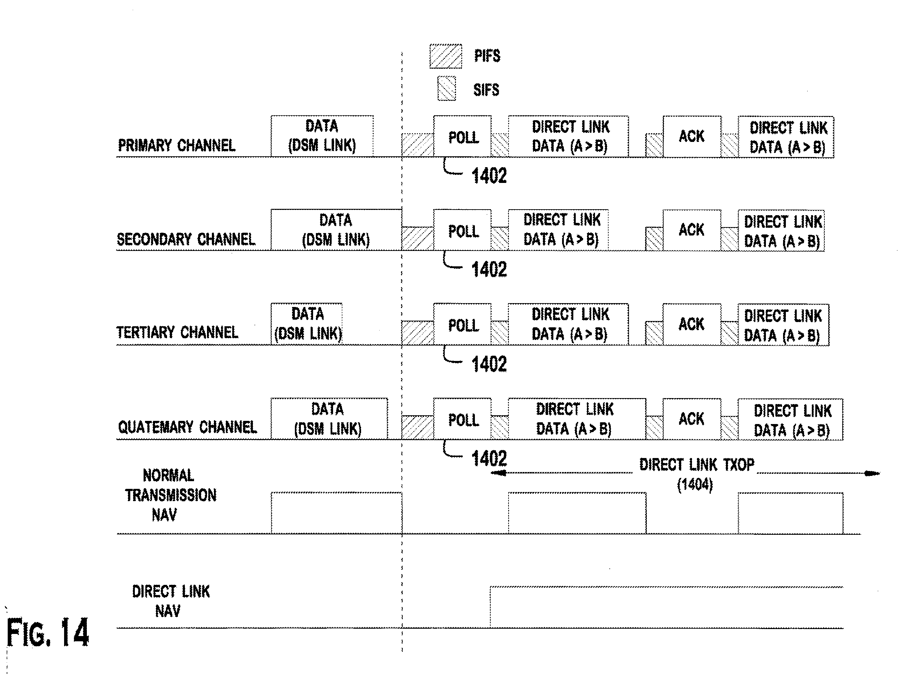

A CAP may be initiated by the AP through the transmission of a poll message that is sent to one of the two stations involved in the direct link. The station received the poll message is referred to as a delegated station. FIG. 14 shows an example process for setting up a direct link by sending a poll message to initiate a CAP. The AP may send a poll messages 1402 by accessing the medium using the CSMA scheme with a shorter waiting time, (i.e., priority inter-frame spacing (PIFS)). Based on the primary CSMA scheme (i.e., CSMA scheme on a primary channel), the AP checks that all the aggregated channels are silent for PIFS before the AP gains an access to the medium to transmit the poll message 1402. The poll message 1402 may be repeated on all channels in order to ensure that each station receives it and sets its network allocation vector (NAV) for the duration of the coming transmission opportunity (TXOP). Since the poll message 1402 is an unacknowledged message, sending it on all four channels will ensure robustness for knowing the start of a TXOP.

The poll message 1402 may be addressed to one of the two devices in the direct link, but may contain an identifier which uniquely identifies the direct link that will use the CAP for transmission. This identifier may be made available to the two stations when the direct link is first initialized between them. The poll message 1402 starts a TXOP 1404 for the direct link. During the direct link TXOP 1404, a sequence of data transmission and acknowledgement may occur between the direct link stations. The poll message 1402 may contain the expected duration of the TXOP 1404, as decided by the DSM engine. Upon reception of the poll message 1402, all stations set their NAV to the expected duration of the TXOP 1404. This prevents any potential contention within the TOP 1404 by stations that are not involved in the direct link.

During the TXOP 1404, any station not involved in the direct link may move to a sleep mode for power savings. In addition, sensing may be done by the AP since the AP will not be transmitting during this time and the stations may be far enough from the AP such that out-of-band interference can be ignored. The AP may send a silent period start message as soon as the poll message 1402 has been transmitted to perform sensing on any non-active channels, (i.e., any channel other than the channels being used for the direct link). This allows for a more efficient use of sensing time, because it is not limited by out-of-band interference during sensing because the AP will not transmit during the TXOP 1404.

During the TXOP 1404, the stations involved in the direct link may communicate to each other directly, and not through the AP. Multiple frames may be transmitted in the TXOP 1404 if there is more than one frame pending in the access category (AC) for which the TXOP 1404 has been assigned.

If a station has in its transmit queue an additional frame of the same AC as the one just transmitted and the duration of transmission of that frame plus any expected acknowledgement for that frame may be less than the remaining medium occupancy timer value, then the station may commence transmission of that frame at the SIFS after the completion of the immediately preceding frame exchange sequence. The intention of using the multiple frame transmission may be indicated by the station by setting the duration/ID field.

Direct link traffic may start from the delegated station that received the poll message 1402. Following the poll message 1402 to allocate a TXOP to the delegated station of the direct link, the delegated station may transmit any pending frame transmissions for the direct link to the non-delegated station involved in the direct link. The non-delegated station may respond with an acknowledgement. The acknowledgement may be piggybacked to a data frame. The piggybacked acknowledgement may be used in the case of a bidirectional direct link where data traffic is transmitted in both directions of the direct link.

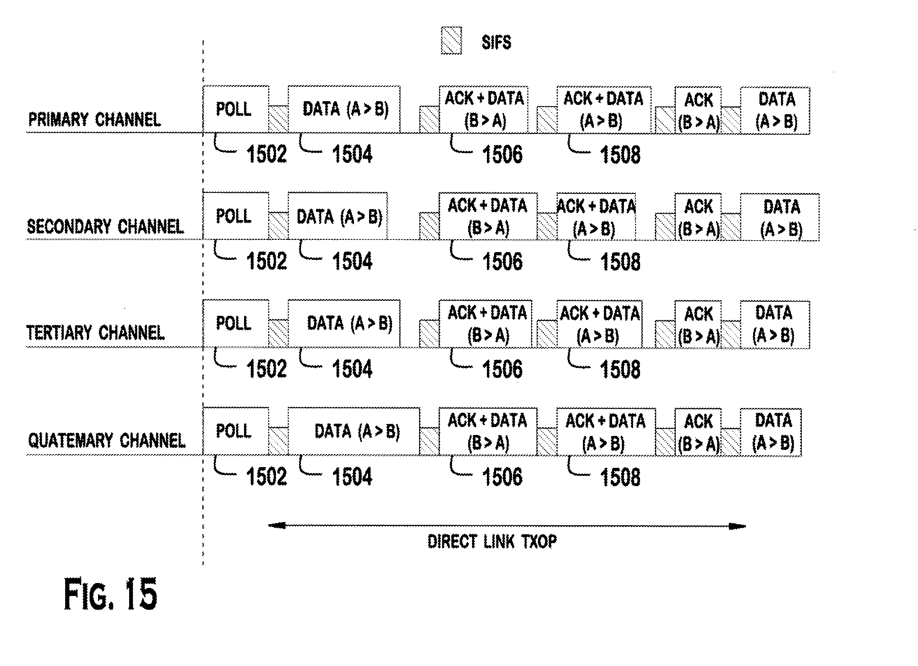

FIG. 15 shows an example transmission of piggybacked ACKs during a direct link TXOP. In FIG. 15, after station A receives a poll message 1502, station A sends data 1504 to station B. Station B then sends a data frame 1506 with ACK to station A. Station A then sends a data frame 1508 with ACK. In piggybacking acknowledgement with data, the station ensures that the data frames are equally distributed over the multiple channels being used. One channel may not send an ACK only when another channel is sending both an acknowledgement and data.

If the remaining TXOP time can accommodate a data plus acknowledgement frame transmission in addition to any corresponding acknowledgement, that frame may be transmitted. For the non-delegated station, if the remaining TXOP time can accommodate an acknowledgement and the station still has pending MSDUs to send, the non-delegated station may send queue information along with the acknowledgement frame. For the delegated station, if the remaining TXOP time can accommodate an acknowledgement, the delegated station may send that acknowledgement prior to the end of the TXOP.

All frame transmissions and expected acknowledgements may be terminated within the TXOP. A TXOP may be terminated by the delegated station through the use of a NULL frame that is destined to the AP. This NULL frame is sent by the delegated station after waiting SIFS from the last transmission in the TXOP. If the TXOP has terminated with pending MSDUs (either for the delegated station or the non-delegated station), the delegated station may send a NULL frame to the AP requesting a new TXOP with additional information about the queue size needed to send the MPDUs that are pending. The AP may combine the queue size information from both the delegated station and the non-delegated station with the rate information contained in the NULL frame to calculate the required TXOP that needs to be allocated to satisfy the needs of the direct link. The AP (through time allocation rules from the DSM engine for each direct link) may then decide whether to prolong the current CAP by sending a new poll message, or to terminate the current CAP and return control to the DSM link.

In addition, any high-priority pending control messages that need to be sent on the DSM link may be sent following the TXOP and prior to the allocation of a new TXOP to that direct link. This allows the DSM engine to maintain robustness for the DSM link (e.g., in the event of a channel failure) by allocating short TXOPs and extending the CAP each time the direct link requests additional TXOPs and no DSM link traffic is needed.

During a TXOP, if there is no data to be sent by either the delegated station or the non-delegated station, the delegated station may terminate the TXOP by sending a NULL frame with queue sizes indicating 0. The DSM engine may then allocate the remaining time to another direct link (by sending a poll message) or may use the channels for DSM link messages. The DSM engine may wait for a future time to allocate a TXOP to the direct link whose TXOP was terminated early.

A CAP ends when the AP does not reclaim the channel (i.e., by sending a new poll message) after the end of a TXOP. In this case, a station may not start a new TXOP following the last transmission of the previous TXOP to allow the DSM engine to send any pending control messages on the DSM link. As a result, after each TXOP, the AP may either send a poll message to assign a new TXOP (and hence continue the CAP), or may return the channel to the DSM link by sending any other message or by waiting PIFS following the TXOP.

As an alternative to using controlled and reserved periods for direct link transmissions, the aggregated channels may be split across the DSM link and the direct link. One or more of the physical channels may be used as a control channel. These physical channels may be part of the DSM link. The remaining channels may be used for the direct link, or may be used to augment the capacity of the DSM link. The client devices may be provided with information as to when to listen to the DSM link to obtain the control channel. An alternate to the CAP, the primary channel CSMA may be modified to have the control channel active on the primary channel while the other channels are used for the direct link. Because the AP does not need to listen to the direct link traffic, simultaneous transmit/receive issues will not occur at the AP if it transmits frames to stations that are not involved in the direct link.

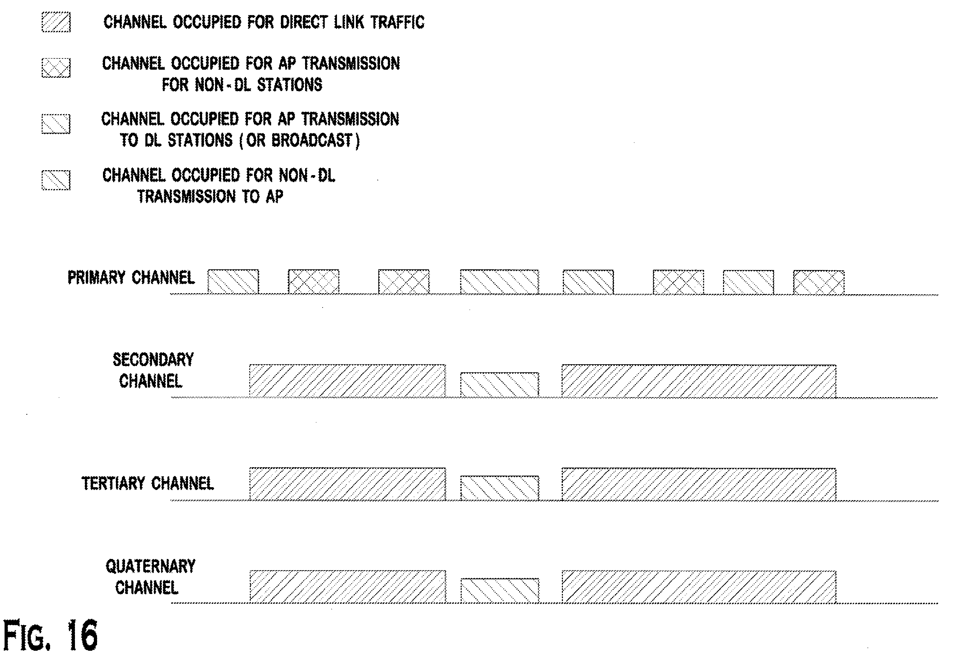

FIG. 16 shows an example message flows for aggregated channel sharing. The secondary to quaternary channels are accessed by the stations using the direct link using CSMA on the primary channel. Once access is obtained, the primary channel may be used by the AP to transmit frames to stations other than the ones participating in the direct link. Other stations requesting to send data on the primary channel may also use it. The AP may interrupt the direct link at any time by performing primary CSMA on it (with a special field set in the request-to-send (RTS) packet to indicate that it applied to all channels).

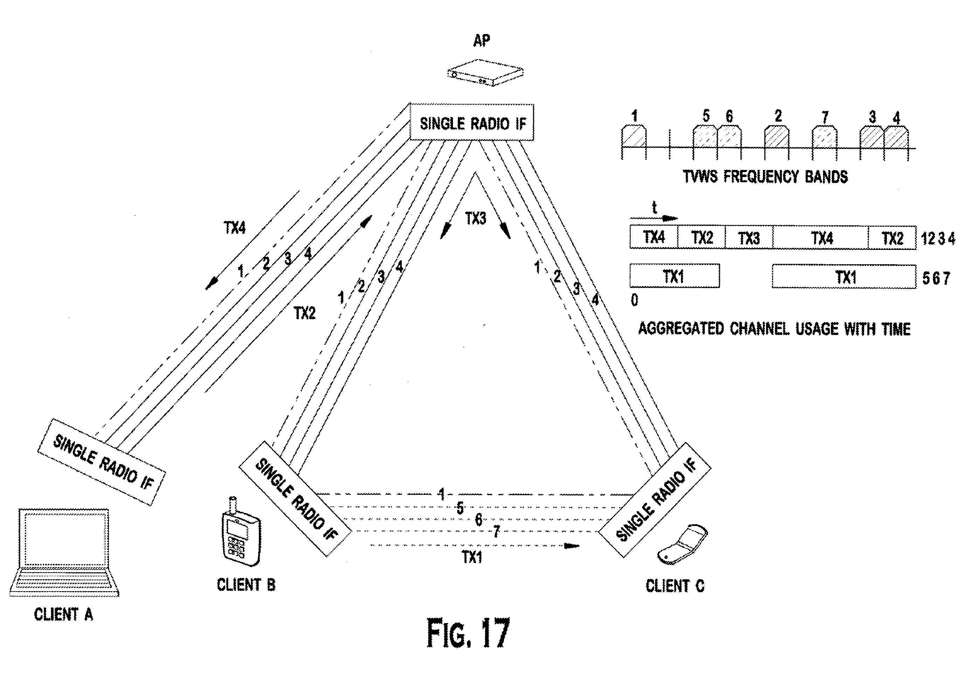

The secondary to quaternary channels for the direct link transmission may be different from the secondary to quaternary channels for the DSM link. This ensures that the aggregated direct link and the DSM link transmission happens simultaneously without interference among each other. Both direct link and DSM link use the primary channel to reserve the medium as illustrated in FIG. 17.

FIG. 17 shows an example DSM link and direct link operation wherein both the direct link and the DSM link use the primary channel to reserve the medium. In FIG. 17, channel 1 is the primary channel, channels 2-4 are used for the DSM link and channels 5-7 are used for direct link. This primary channel acts like a control channel. All the control and management information is transmitted to the STAs on channel 1. Beacons are also transmitted on the primary channel. To listen to the beacons, the direct link devices (client B and client C in this example) stop their transmission during the TBTT. The transmission resumes after the TBTT. If there is a silent period scheduled on the direct link channel, it should be notified in the beacon. The devices halt the traffic during the silent period duration as indicated in the beacon and perform the required measurements to be sent to the AP. If the AP transmits any other broadcast message during the beacon interval, the message may be buffered by the AP and an indication may be sent in the next beacon that there are buffered broadcast messages waiting at the AP. These messages may be polled by the devices after each beacon transmission. If the AP needs to deliver high priority control/management message to any device in the direct link, the AP may access the primary channel with PIFS and transmit the high priority message to the direct link STAs on the primary channel.

When the direct link STAs (client B or client C) need to access the direct link channel, (i.e., channels 5-7 in FIG. 17), the STAs may send an RTS packet to the AP over the primary channel or may perform CSMA over the primary channel and send small message to the AP informing that the STA is going to use the direct link channels for a specified time duration.

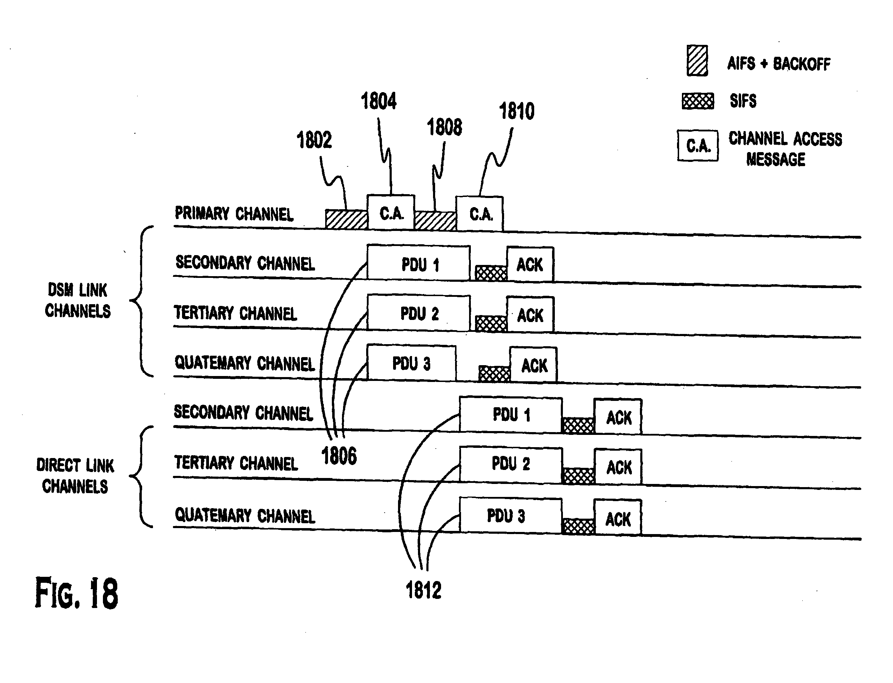

FIG. 18 shows an example transmissions on the DSM link and the direct link implementing CSMA on the primary channel. The primary channel is used for channel reservation for both the DSM link channels and the direct link channels. A STA senses all channels for the DSM link or the direct link including the primary channel before accessing the channel set. If there is no activity on the channels for a certain period of time, (e.g., for AIFS and back-off time), the STA sends a channel access message on the primary channel and PDUs on the secondary to quaternary channels on the DSM link or on the direct link. In FIG. 18, after detecting no activity on the DSM channels for AIFS + back-off period 1802, a STA sends a channel access message 1804 on the primary channel and PDUs 1806 on the secondary to quaternary channels of the DSM link. After detecting no activity on the primary channel and secondary to quaternary channels of the direct link for AIFS + back-off period 1808, another STA (direct link STA) sends a channel access message 1810 on the primary channel and PDUs 1812 on the secondary to quaternary channels.

In another example, distinct primary channels may be used for the DSM link and the direct link. In this case, because the direct link CSMA is not contented by the DSM link primary channel, simultaneous transmit/receive issues do not occur at the AP if it transmits frames to STAs that are not involved in the direct link. Similarly, simultaneous transmit/receive issues do not occur at the STA if it transmits frames to other STAs that are not involved in the DSM link.

The direct link and the DSM link use their respective primary channel to reserve the medium. The direct link channels including the direct link primary channel are accessed by the stations using the direct link by doing CSMA on the direct link primary channel. The direct link channels may be different from the DSM link channels. This ensures that aggregated direct link and DSM link transmission happen simultaneously without interfering each other.

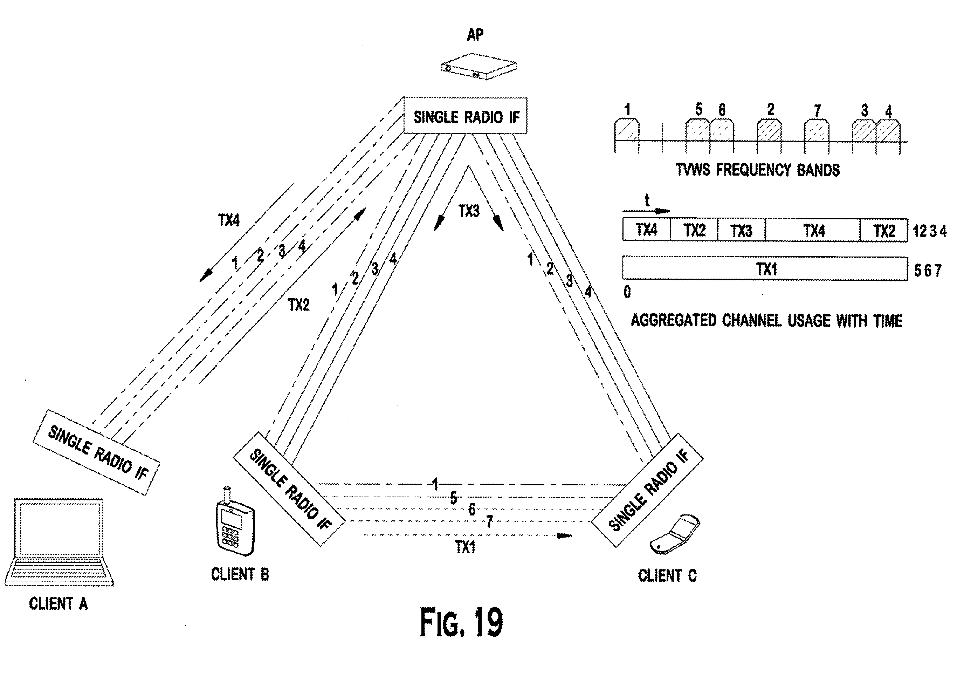

FIG. 19 shows an example transmissions on the DSM link and the direct link using distinct primary channels. In FIG. 19, channel 1 is the DSM link primary channel and channel 5 is the direct link primary channel. The DSM link primary channel carries the control channel. Channels 1-4 are DSM link channels and channels 5-7 are direct link channels. The direct link stations (Client B and Client C) listen to the DSM link primary channel (channel 1) as well when they receive the direct link transmissions. All the control and management information may be transmitted to the STAs on the DSM link primary channel (channel 1) including the beacons. Since the direct link stations also listen to the DSM link primary channel, one of the two direct link STAs will receive the beacon transmission during the TBTT in case there is an on-going direct link transmissions during the TBTT. If there is no direct link transmissions during the TBTT, both STAs involved in the direct link will receive the beacon. If a STA receives the beacon on the DSM link primary channel (channel 1) while receiving direct link data on the direct link channels (channels 5-7), the STA may relay the control or management data received on the DSM link primary channel to the peer STA involved in the direct link using the direct link channel.

In another example, the DSM link and the direct link may be time-multiplexed. It is assumed that the DSM system may be able to support and manage multiple direct links occurring concurrently between several stations. The TVWS channels that are utilized for the direct link as well as the coordination between the direct link and the DSM link may depend on the mode of operation being used by the direct link. Two modes of operation are supported: Mode I and Mode II, which will be explained in detail below.

A direct link may be supported between a pair of DSM clients, and so each direct link may be associated with a pair of stations/clients. In addition, a DSM client may support multiple direct links simultaneously with different DSM clients. For example, client B may have a separate active direct link with client A and client C simultaneously.

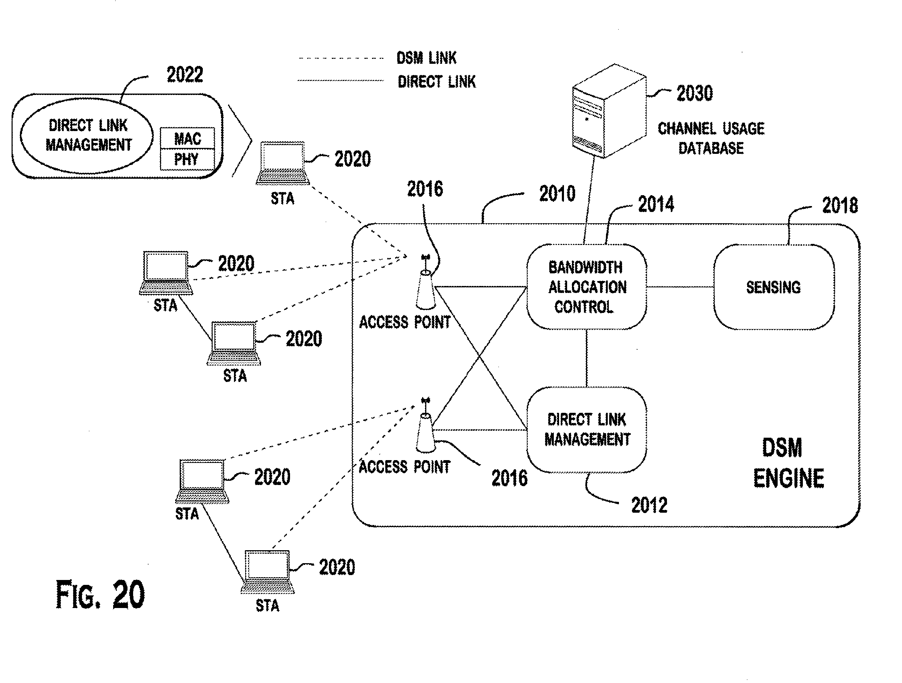

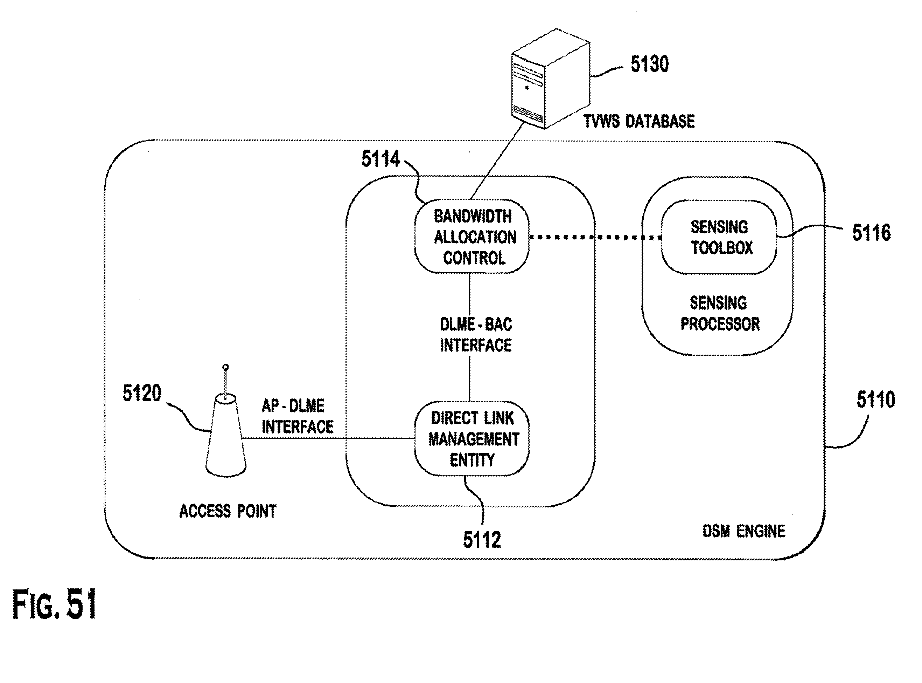

The selection of operation between Mode I and Mode II may be based on the availability of channels as well as the QoS requirements. This decision may be made by the AP, or by a logical entity that resides on the AP or external to the AP and is responsible for managing all direct links within the network. That entity is referred to as a direct link management entity (DLME). FIG. 20 shows an example DSM system architecture including the DSM engine 2010. The DSM system includes the DSM engine 2010 and a plurality of DSM clients 2020. The DSM engine 2010 includes a server version of the DLME 2012, and the DSM clients 2020 comprise a client version of DLME 2022. The DSM engine also comprises a bandwidth allocation control (BAC) entity 2014. The DLME 2012 interfaces to the BAC 2014 and to the AP 2016 for the direct link operation, such as assignment of the channels for the direct link. The interfaces between the DLME 2012 and the BAC 2014 and the AP 2016 are explained in detail with reference to FIG. 51 below.

The DLME 2012 may be a separate function implemented as a software component within the DSM engine 2010, or a subfunction of the AP 2016, running in the station management entity (SME), or a separate physical entity implementing the functionality through a combination of hardware and/or software. The DLME 2012 has an interface to the APs 2016 which provides the communication mechanism to the stations, as well as an interface to the BAC 2014 functionality that is in charge of allocating channels to the DLME 2012 for use in direct links. The BAC 2014 may rely on a sensing entity 2018 to perform measurements on the assigned physical channels and to monitor the continued availability of these channels. The BAC functionality may maintain a list of available physical channels or may obtain such a list from an external channel usage database 2030 such as the TVWS database. The stations 2020 (DSM clients) have a client version of the DLME 2022 that responds to requests from the server version of the DLME 2012.

When few channels are available, the DSM link and the direct link may use the same set of physical channels. The direct link may be configured to use Mode I operation in order to allow both the direct link and the DSM link to exist on the limited channels available. On the other hand, when there are more channels available, and when the DLME determines that Cos requirements of the direct link warrant the use of a separate set of channels for the direct link, Mode II may be used. In this mode of operation, the client devices may time-multiplex between the DSM link physical channels and the direct link physical channels. As the DSM link carries the control channel, it may have priority over the direct link, forcing the client devices to suspend direct link communication in favor of DSM link communication. For instance, to receive control information from the DSM engine or AP (e.g., physical channel change order, silent period configuration, etc.) or to send control information to the DSM engine or AP (e.g., measurements taken at the client devices), The DLME has knowledge of the available channels and decides on which mode to use for the direct link.

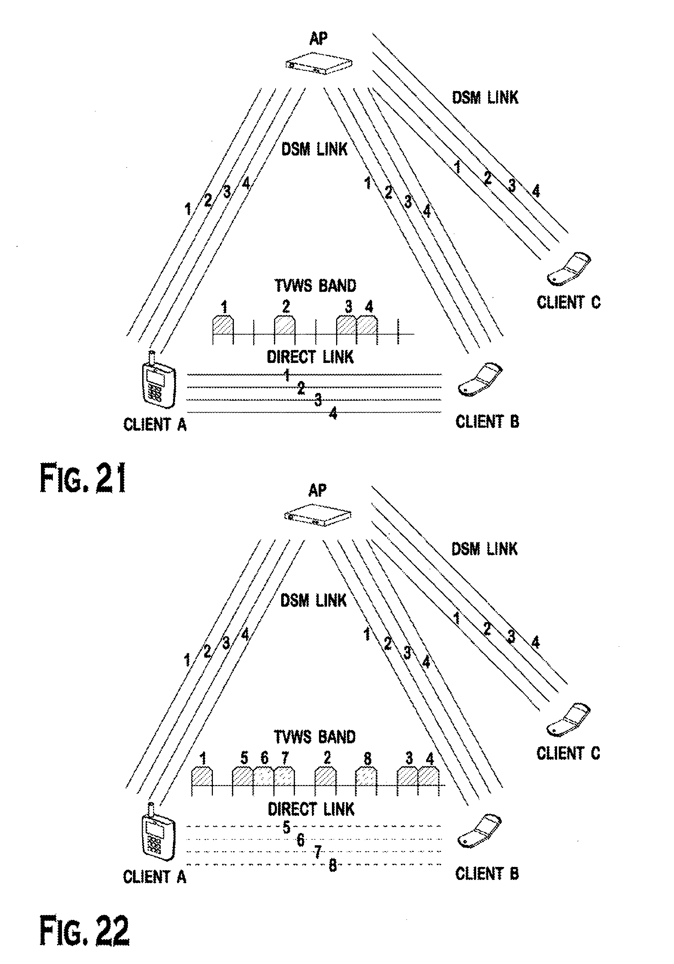

FIG. 21 shows an example operation of direct link using Mode I. In Mode I operation, the physical channels that are used by the DSM link and the direct link are the same. Each link may use primary CSMA in order to gain an access to the physical channels. Once access is gained by a station or the AP, all physical channels (4 in this example) are used for the link until the station releases the access to the link at the end of its TXOP. The channels are then contended for again by stations that are using both the direct link and the DSM link. In mode I, the difference between the direct link and the DSM link is that for the direct link, frames are sent directly from the source to the destination station, rather than first being routed through the AP. The direct link clients may use 802.11e enhanced distributed channel access (EDCA) TXOP and block ACK procedures that are used on the DSM link. In addition, direct link clients may use the request-to-send (RTS)/clear-to-send (CTS) to reduce the probability of other clients interfering with the direct link transmission (especially other clients that are maintaining a direct link). Default EDCA parameters may be used in each access category and defer/5/10/15/20 procedure may be used in the case the non-primary channel is busy.

Since CSMA is employed on the direct link, multiple direct links may be supported simultaneously in Mode I. In this case, all device pairs involved in a direct link compete for access to the same physical channels using CSMA. This competition for the channels also includes stations trying to access to the DSM link.

In order to manage the QoS between the direct link and the DSM link, the DLME may enforce a different medium access delay (or backoff period) for traffic intended for the direct link or the DSM link. The DLME may make the decision based on the QoS requirements and traffic type for each direct link. This information may be sent to the stations through a control message (or MAC layer management frame) associated with each direct link.

When additional channels in the TVWS are available, Mode II may be configured wherein the direct link may be offloaded (at the discretion of the DLME) to a different set of physical channels. FIG. 22 shows an example operation of direct link using Mode II. In Mode II operation, the direct link uses physical channels that are different than those for the DSM link. Primary CSMA is used for both the DSM link and the direct link. By using primary CSMA for the direct link, the DLME may allocate multiple direct links on the same physical channels and have these direct links contend for the medium between each other. The medium access delay of each direct link may be modified dynamically by the DLME in order to satisfy COS requirements of each direct link. The value of the medium access delay may be sent on a control message (or MAC layer management frame) associated with each direct link.

In general, the DLME that manages the direct links may decide when Mode I or Mode II is used based on the number of available channels and the QoS requirements of the direct links. In each mode, the number of channels may vary on a dynamic basis and may not be restricted to 4 channels for each link as shown in FIGS. 21 and 22). Updates on the number of channels and channel frequencies used for the DSM link and the direct link may be sent to each station by the AP, for example, using the beacon.

Since Mode II operation assumes two sets of physical channels, station's operations between the DSM link and the direct link may be time-multiplexed assuming that a client is using a single radio and the number of channels that may be assigned to either of the DSM link or the direct link can be upto the number of channels that can be processed by the MAC/PHY at any given time.

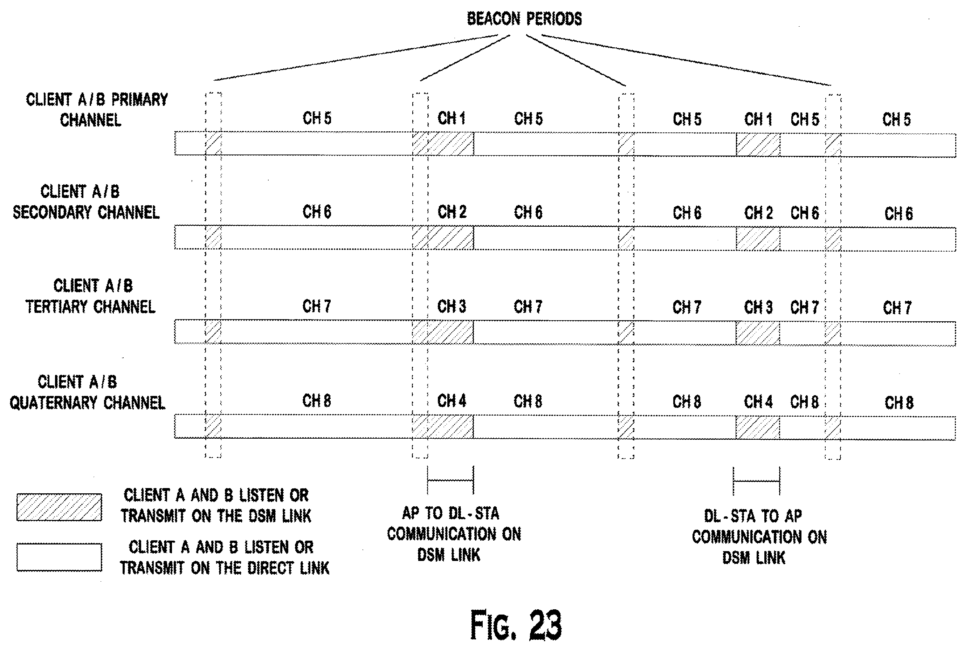

FIG. 23 shows an example time multiplexing operations in a Mode II direct link. During the periods of time (shaded period in FIG. 23), the STAs are listening or transmitting on the DSM link channels, and during the periods of time (not shaded period in FIG. 23), the STAs are transmitting or receiving on the direct link channels. Stations which have an active direct link in Mode II may time-multiplex operations of transmissions and receptions on the direct link and the DSM link. In addition, the AP may know when a station that has a direct link active will be capable of receiving frames from the AP on the DSM link. In order to do so, the AP may treat a station which has an active direct link similar to a station in a power saving mode in the 802.11 standard. In this way, the AP may send frames to the STAs at predetermined times when the STAs are known to be listening to the DSM link. A period for communication between the AP and a STA on the DSM link may either be initiated by the AP or by the STAs.

When two stations (STA A and STA B) have a direct link in Mode II that is active between them, the stations may transmit and receive frames on the direct link channels most of the time. In certain situations, the stations may move to the DSM link channel in order to send or receive frames to and from the AP. The STAs may move to the DSM link channels at each target beacon transmission time (TBTT). All STAs listen to the DSM link for the beacon period in order to receive the beacon from the AP. In addition, the STAs may move to the DSM link channels based on information sent in the beacon. The AP may indicate that following the beacon interval the AP will send unicast frames to a station over the DSM link. In this case, that station will listen to the DSM link for the unicast frames destined to it prior to moving back to the direct link channels and continuing its direct link communication with its peer station. In addition, the STAs may move to the DSM link channels when the AP has multicast/broadcast frames to send to a set of stations that includes the STAs. The AP may send them immediately following a beacon where the presence of multicast/broadcast frames is indicated to the stations. In this case, the STAs affected may listen for these frames on the DSM link. In addition, the STAs may also move to the DSM link channels when a STA needs to send frames to the AP over the DSM link. In this case, the direct link will be interrupted momentarily until the STA successfully sends the message to the AP. Embodiments for direct link operations in the above situations are disclosed hereafter.

When a station has an active direct link in Mode II, the station may switch back to the DSM link every TBTT in order to receive the beacon from the AP. When the beacon is received, the station may resume direct link operation. The beacon may include channel switch information and silent period information about the DSM link and the direct link. The beacon may also serve as a means for synchronizing other periods of time in which STAs may listen to the DSM link, as described above.

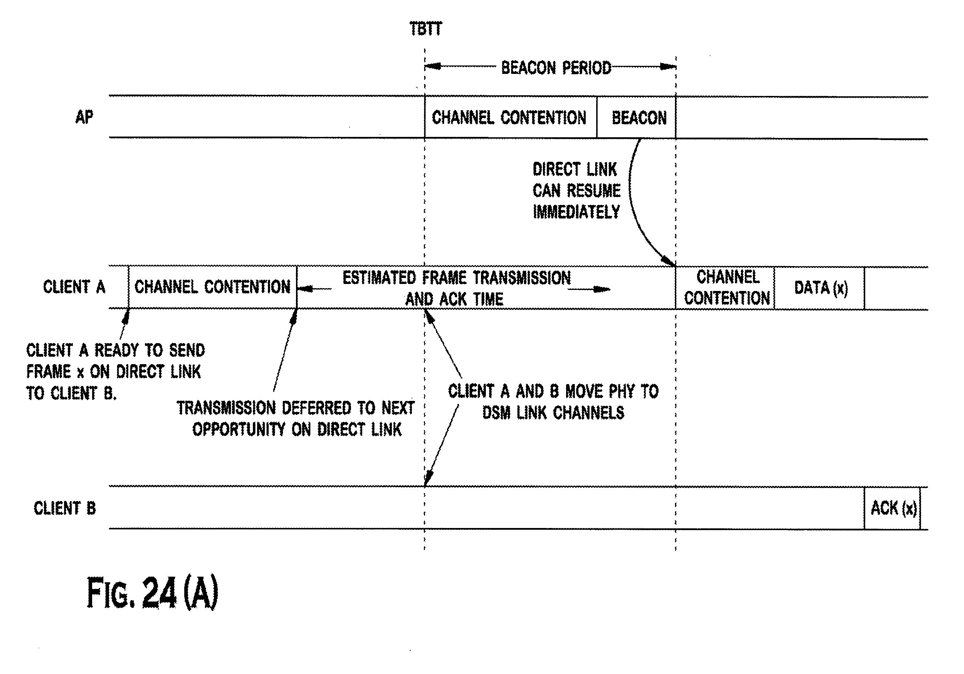

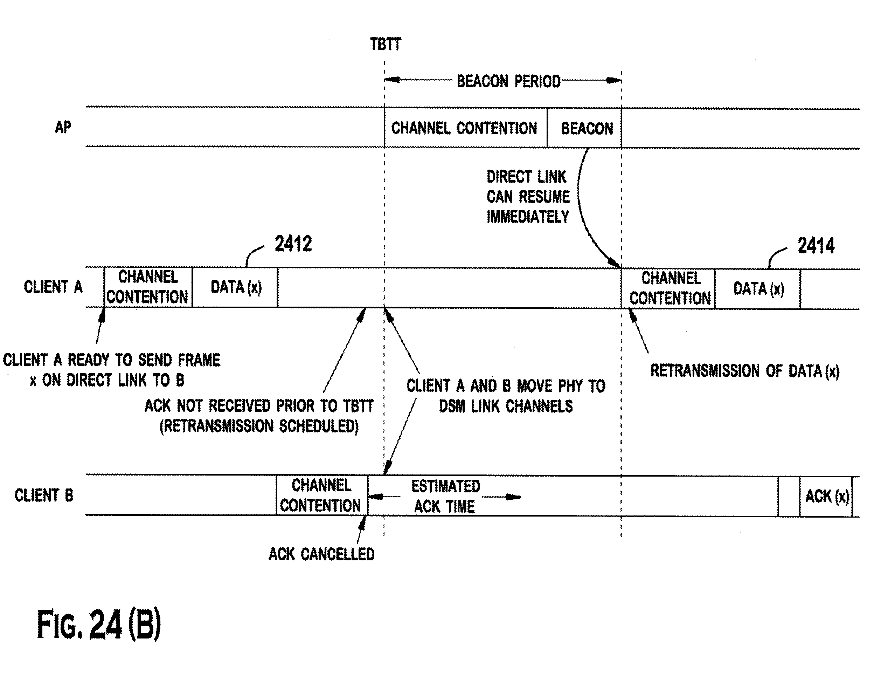

In order to ensure that ongoing communication is terminated prior to the TBTT, STAs may follow a set of rules that apply to switching to the DSM link prior to the TBTT. FIGS. 24(A) and 24(B) show example operations of a STA at the TBTT.

In FIG. 24(A), client A wishes to transmit a frame to client B on the direct link prior to the TBTT. When client A gains access to the aggregated channel using primary CSMA, client A estimates the approximate frame transmission and ACK reception time. If the desired frame can be transmitted and the ACK can be received prior to the TBTT, client A initiates transmission. Otherwise, frame transmission on the direct link is deferred until after the beacon transmission, and client A may not access the channel. In doing so, client A avoids the need for retransmission and allows the channel to be used by other stations that may have an active direct link and where the required transmission is shorter.

In FIG. 24(B), client A sent a data packet 2412 to client B, but does not receive an acknowledgement for the data packet prior to the TBTT. This may be due to the inability of client B to transmit the ACK prior to the TBTT, as shown in FIG. 24(B). In this case, client A may assume the packet 2412 was never received by the client B and may retransmit the data packet 2414 following the beacon (by applying the same CSMA rules as used for the initial transmission).

Contrary to the single channel operation, the above rules are needed because the beacon transmission by the AP and the data transmission by the STAs are entirely independent. The issue does not arise with beacon transmission in the single channel operation because the AP and station transmissions are occurring on the same channel, and the AP will simply delay transmission of the beacon until it has obtained the channel, in which case no one will be transmitting during that time.

In addition to the rules illustrated in FIGS. 24(A) and 24(B), a station may optimize the use of the direct link by using fragmentation at the MAC layer to reduce the time when the direct link is not, or cannot be, used prior to the TBTT. Frames may be tailored in size in order to reduce the 'dead' time prior to the TBTT. It should be noted that any PHY switching time has not been discussed but needs to be considered in all timelines involved. If the physical layer requires a non-negligible amount of time to switch between the direct link and the DSM link, that time may be considered by the station in determining whether to proceed or defer a transmission prior to the TBTT.

During the time when a station is active in a direct link, the AP may have traffic (data or control) that is destined for that STA and that needs to be sent over the DSM link, (e.g., when another station in the network that is not the direct link peer of the station sends data to the station). In addition, the AP may need to send a control message (such as a sensing configuration message) to the station, which it cannot send via the beacon. In such cases, the AP may need the ability to send data or control to a STA at a specific time when it knows that the STA will receive the message.

In one example, a STA may be treated by the AP as a station in a power-saving (PS) mode. When the AP has frames to send to a STA, which is in a PS mode, the AP temporarily buffers the frames, and indicates the presence of buffered frames for the STA in a traffic indication map (TIM) in the next beacon. The station determines that frames are buffered for it by receiving and interpreting the TIM. The station then transmits a short PS-Poll frame to the AP, which responds with the corresponding buffered frames immediately, or acknowledges the PS-Poll and responds with the corresponding frames at a later time.

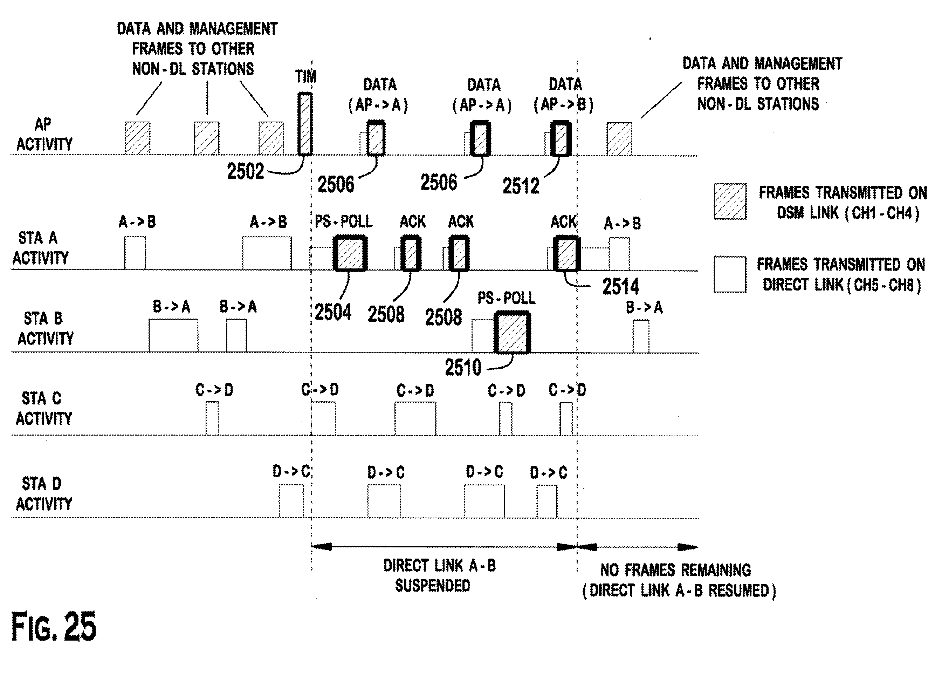

FIG. 25 shows an example transmission of unicast frames from the AP to the STA on the DSM link. In FIG. 25, STA A and STA B has a direct link on direct link channels (channels 5-8 in this example), and STA C and STA D has a direct link on the direct link channels. The AP has data to be transmitted to STA A and STA B on a DSM channel (channels 1-4 in this example). The AP buffers the data and indicates it in the TIM 2502 in the next beacon. STA A obtain an access to the DSM channel and sends a PS-Poll 2504 to the AP on the DSM channel. The data 2506 for STA A are transmitted to STA A, which acknowledges 2508. STA B obtains an access to the DSM channel and sends a PS-Poll 2510 to the AP on the DSM channel. The data 2512 for STA B are transmitted to STA B, which acknowledges 2514.

During the time in which the STA is waiting for or receiving the unicast frames from the AP, the direct link it has with its peer station is temporarily suspended. Therefore, a STA may scan the partial virtual bitmap in the TIM for both its own association identity (AID) and the AID of the peer station. If the peer station is scheduled to receive frames on the DSM link, the STA may not transmit any packet to its peer on the direct link channels. However, the direct link channels in Mode II may be used by stations which are not affected by the traffic announced in the TIM. This is shown in FIG. 25, where STA C and STA D continue the direct link communication they have between each other on channels 5-8 while STA A and STA B interrupt the direct link between them as they both have buffered frames destined to them in the AP.

STAs which have frames buffered in the AP may contend for the channel in order to send the PS-Poll. This contention may occur with non-direct link STAs in a PS-mode which also have frames buffered at the AP. The AP may decide to send data to a station immediately following a PS-Poll, or send an acknowledgement and send the data later. The traffic to be sent to the direct link STAs may be prioritized by the AP (compared to traffic destined to non-direct link STAs in a PS mode) by responding to the PS-Polls from the direct link STAs immediately so that the direct link is suspended for a minimal period of time.

Alternatively, in order to ensure minimal suspension of a direct link, the AP may send traffic to the direct link STAs after waiting a short inter-frame spacing (SIFS) following the PS-Poll or previous ACK from the direct link STA on the DSM link. Depending on the QoS requirements of the direct link and the priority of the messages to be sent to the STA from the AP, the AP may send a subset of the buffered frames following a given beacon period, and send the remainder following the next beacon period. This may be done to ensure that the direct link is not suspended for more than a specific amount of time, depending on the traffic type.

The direct link needs to be reestablished after the unicast frames have been received from the AP. The two stations need to return to the direct link without loss of data or termination of the link. In the following examples, it is assumed, as an example, that both STA A and STA B expect data from the AP in the form of unicast frames. However, it should be noted that one of the stations may be required to receive the unicast frames and the following embodiments are also applicable to those cases.

In one example, STA A and STA B may know when to restart the direct link by listening on the communication between the AP and the other station. In this way, both STA A and STA B may stay on the DSM link until its own unicast frames have been received, and the unicast frames of the other station have all been received. The AP indicates, (e.g., at the last data frame), that no more data frames will be sent following that frame.

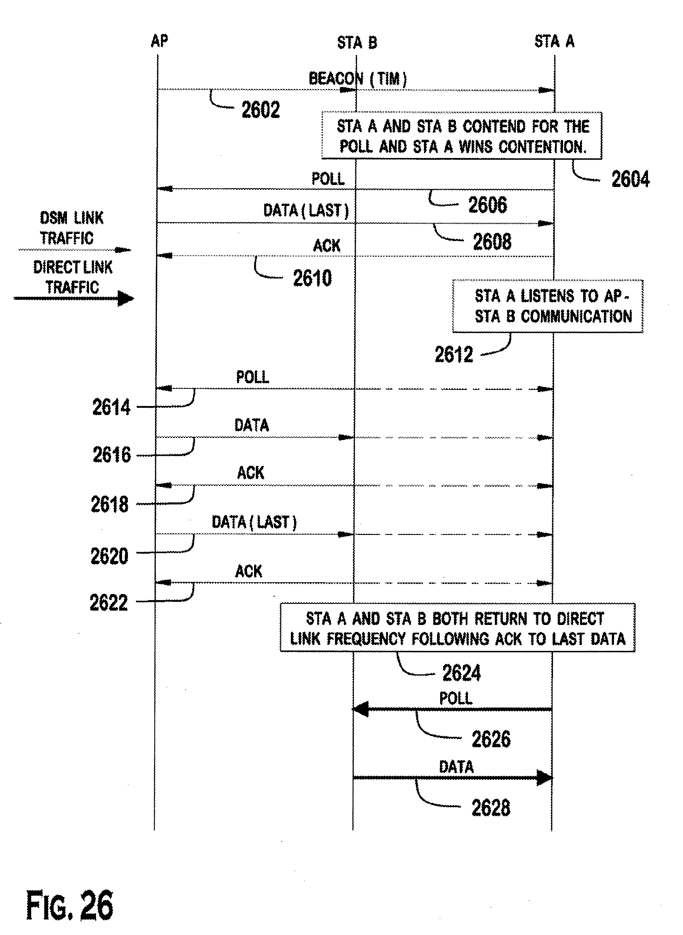

FIG. 26 shows an example signaling flow for reestablishing a direct link after unicast transmission on the DSM channel. The AP sends a TIM to STA A and STA B (2602). STA A and STA B contend to access the DSM channel for transmission of the PS-Poll (2604). It is assumed that STA A wins the contention, and STA A sends a PS-Poll to the AP (2606). Data is sent to STA A (2608). After acknowledging the last data (2610), STA A keeps listening to the following AP-STA B communication on the DSM channel (2612). STA B sends a Poll message to the AP (2614). Data is sent to STA B, and it is acknowledged (2616, 2618). The last data packet indicates that no more data packet will be transmitted to STA B, which is also acknowledged (2620, 2622). STA A and STA B return to the direct link channel following the ACK to the last data (2624). Poll message and a direct link traffic are exchanged between STA A and STA B (2626, 2628).

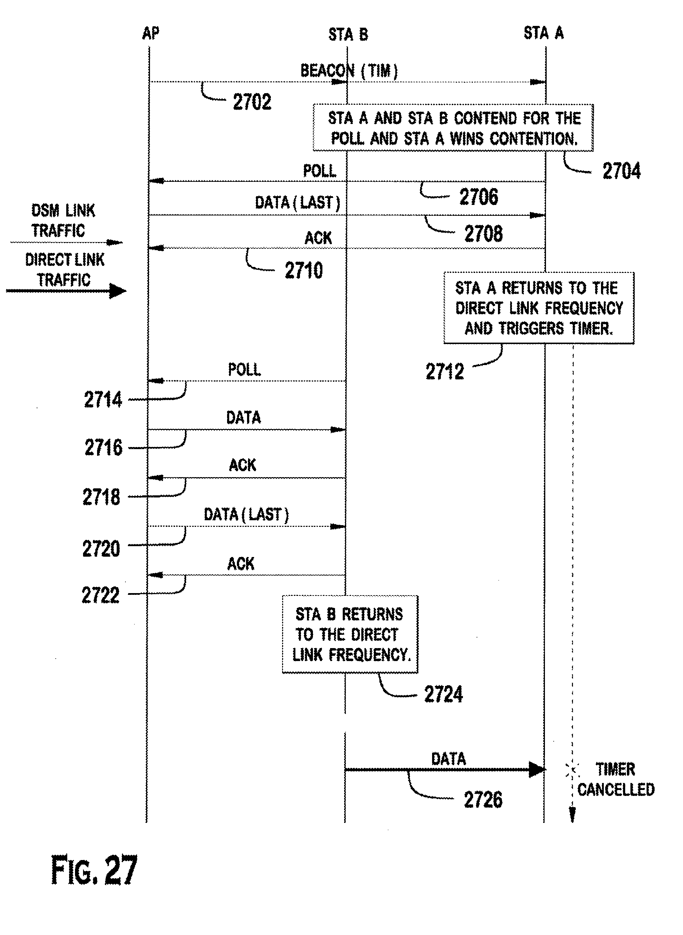

In another example, STA A and STA B may return to the direct link immediately after they have obtained their own unicast frames (independent of whether the unicast frames of the other station has been received). FIG. 27 shows an example signaling flow for reestablishing a direct link after unicast transmission on the DSM channel. The AP sends a TIM to STA A and STA B (2702). STA A and STA B contend to access the DSM channel for transmission of the PS-Poll (2704). It is assumed that STA A wins the contention, and STA A sends a PS-Poll to the AP (2706). Data is sent to STA A (2708). After acknowledging the last data (2710), STA A returns to the direct link channel and may trigger a timer (2712). STA B sends a Poll message to the AP (2714). Data is sent to STA B, and it is acknowledged (2716, 2718). The last data packet indicates that no more data packet will be transmitted to STA B, which is also acknowledged (2720, 2722). STA B return to the direct link channel following the ACK to the last data (2724), and direct link traffic is transferred between STA A and STA B (2726).

The first station to return to the direct link channel may wait for the other station. The waiting period may be implemented by a timer maintained separately by each station which may be set appropriately relative to the length of a beacon interval, or set by the upper layers. Until the timer expires, the station that first returns to the direct link channel assumes that the direct link is currently still active but suspended due to the other station receiving the DSM link traffic. The direct link may be torn down when the timer expires. While the station waits for the other station, the station may have other direct link communication with other stations. If it has frames pending for the other station, it may periodically transmit these frames over the direct link to check whether the other station has returned, or periodically transmit a POLL message over the direct link until this POLL is acknowledged by data from the other station or until the timer expires.

In another example, knowledge about the order in which STA A and STA B return to the direct link may be used to reestablish the direct link. This may be done by imposing that the AP handles the POLL on a first-come first-served basis. Each STA, while contending for the POLL, listens for POLLs sent by other stations to the AP. In this way, it will learn of the order in which STA A and STA B will receive its unicast frames (therefore, the order in which they return to the direct link frequency). The last station returning to the direct link may be responsible for reestablishing the direct link (either by sending a POLL or by sending data). In order to simplify this mechanism, POLL messages may be broadcast frames that are sent to all STAs (not just to the AP). Alternatively, the order in which STAs are serviced by the AP may be predetermined by the AP and sent in conjunction with the TIM message. In this case, POLL messages may not need to be interpreted by other STAs. A POLL message may or may not be sent, in this case, as the order of delivery of the unicast frames has already been predetermined.

In still another example, handshaking may be performed between STA A and STA B on the DSM link prior to moving to the direct link channel. This handshaking may be done with regular 802.11 messages that are routed through the AP, and allow the two STAs to know when both have completed receiving unicast frames. Handshaking may be required in the case where both STAs in a direct link are expecting unicast frames from the AP.

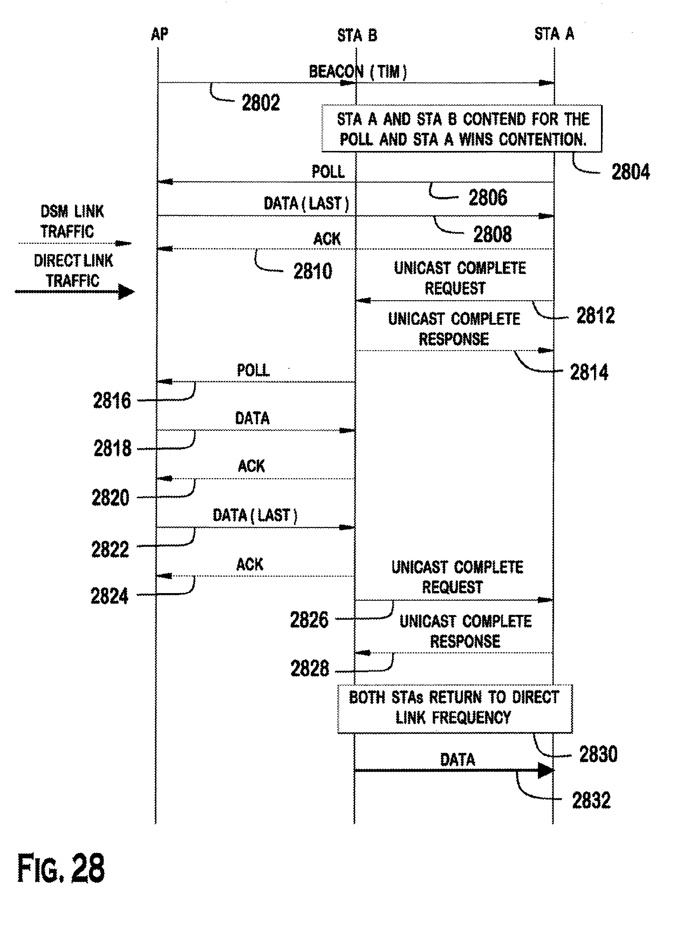

FIG. 28 shows an example signaling flow for direct link reestablishment using handshaking between stations. The AP sends a TIM to STA A and STA B (2802). STA A and STA B contend to access the DSM channel for transmission of the PS-Poll (2804). It is assumed that STA A wins the contention, and STA A sends a PS-Poll to the AP (2806). Data is sent to STA A (2808). After acknowledging the last data (2810), STA A sends a unicast complete request to STA B (2812). STA B then sends a unicast complete response to STA A (2814), and sends a Poll message to the AP (2816). The unicast complete response indicates that STA B has data to receive from the AP, and STA A waits on the DSM link channel to complete the handshake. Data is sent to STA B, and it is acknowledged (2818, 2820). The last data packet indicates that no more data packet will be transmitted to STA B, which is also acknowledged (2822, 2824). STA B sends a unicast complete request to STA A, which responds with a unicast complete response (2826, 2828). Both STA A and STA B then return to the direct link channel (2830), and direct link traffic is transferred between STA A and STA B (2832).

The above embodiments may be used independently or certain aspects of the embodiments may be combined to set up rules for the behavior of each STA and messaging between them for reestablishment of a direct link. The above embodiments may be applied in other scenarios where a direct link needs to be reestablished after it has been suspended.

An AP may need to send multicast or broadcast frames for several stations in a BSS. In case where some stations are involved in a direct link using Mode II, these stations need to be made aware of the presence of the multicast/broadcast traffic coming from the AP so that they can listen to the DSM link at that time. In the Mode II direct link, the AP may send a delivery traffic indication map (DTIM) to indicate the transmission of the broadcast or multicast frames. Following the DTIM, all direct link STAs may remain on the DSM link until all broadcast/multicast frames have been transmitted by the AP. If the DTIM also indicates the presence of unicast frames destined to a particular station(s), the embodiment described above may be implemented.

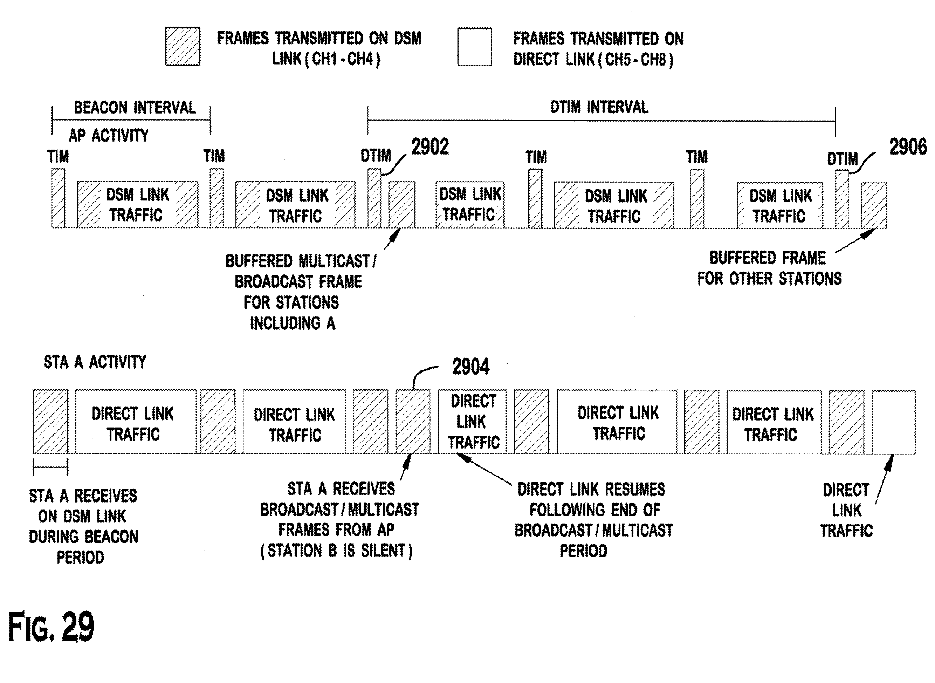

FIG. 29 shows an example transmission of broadcast/multicast frames from the AP to the direct link STAs on the DSM link. In FIG. 29, the AP periodically sends a beacon and the direct link stations (STA A in this example) listens on the DSM channel during the beacon period. If the STA A receives a DTIM 2902, STA A remains on the DSM channel and receives the broadcast/multicast frames from the AP (2904). Following the end of the broadcast/multicast period, STA A returns to the direct link channel.

If a multicast frame is sent where the STA is not part of the multicast group (i.e., DTIM 2906), the STA may resume the direct link immediately following reception of the DTIM 2906 if no unicast traffic was announced for that station or its direct link peer.

A direct link STA may need to send MSDUs to the AP or to another station through the DSM link, (e.g., when a DL-STA has sensing measurements to be sent to the DSM engine (through the AP)). In this case, a special handshake may be performed between the DL-STA having uplink MSDUs to be sent and its direct link peer, since the DL-STA may no longer listen to the direct link channels during the uplink transmission on the DSM link.

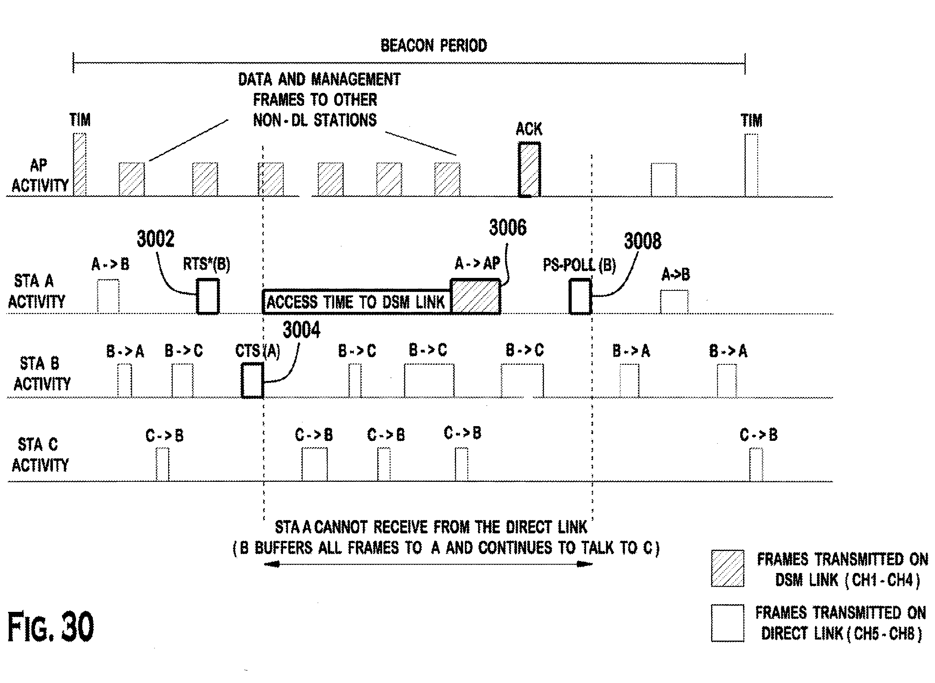

FIG. 30 shows an example handshake for DL-STA transmission to the AP. In FIG. 30, STA A has a direct link with STA B, and STA B has another direct link with STA C, and STA A has data to send to the AP over the DSM link. STA A sends a direct link interrupt request message (DLIRM) 3002 over the direct link to STA B. The DLIRM message 3002 may be implemented using conventional 802.11 management frames. For example, an RTS message with a duration field set to 0 to indicate an undetermined time for transfer may be used as the DLIRM message. STA B receives the DLIRM message 3002 which indicates the interruption of the direct link by STA A. STA B acknowledges with a direct link interrupt confirm message (DLICM) 3004 over the direct link. The DLICM message 3004 may be implemented using a conventional 802.11 management frames, such as a CTS packet.

When STA A receives the DLICM message 3004, STA A knows that the direct link has been successfully interrupted and moves its PHY to the DSM link where it contends for channel access. When STA A has won contention for the DSM link, STA A sends MSDUs 3006 to the AP or destination station over the DSM link. Multiple frames may be sent before STA A decides to resume the direct link.

When STA A has completed its MSDU transmission on the DSM link, STA A moves its PHY to the direct link channels and resumes the direct link by sending either a PS-Poll message 3008 (if it has nothing to send over the direct link) or a data frame destined to its peer station. This effectively restarts the direct link.

During the time in which the direct link is interrupted, STA B may buffer all data destined to STA A on the direct link, but other direct links may continue to remain active on these frequencies.

While a direct link has been interrupted on a set of channels, other direct links may continue to remain active. For example, STA B may continue exchanging MSDUs with STA C on the direct link between these stations despite the fact that the direct link between STA A and STA B has been interrupted. In addition, one of the two peer DL-STAs may interrupt a direct link and send messages over the DSM link. This is the station which is the first to send the DLIRM message. Until the direct link is resumed, the peer station may not interact with the DSM link. As a result, the peer station (STA B in the example) may listen to the direct link channels and know that the direct link has been resumed whenever a frame from STA A has been received again on this link. At that time, STA B may be free to interrupt the direct link if it needs to do so.

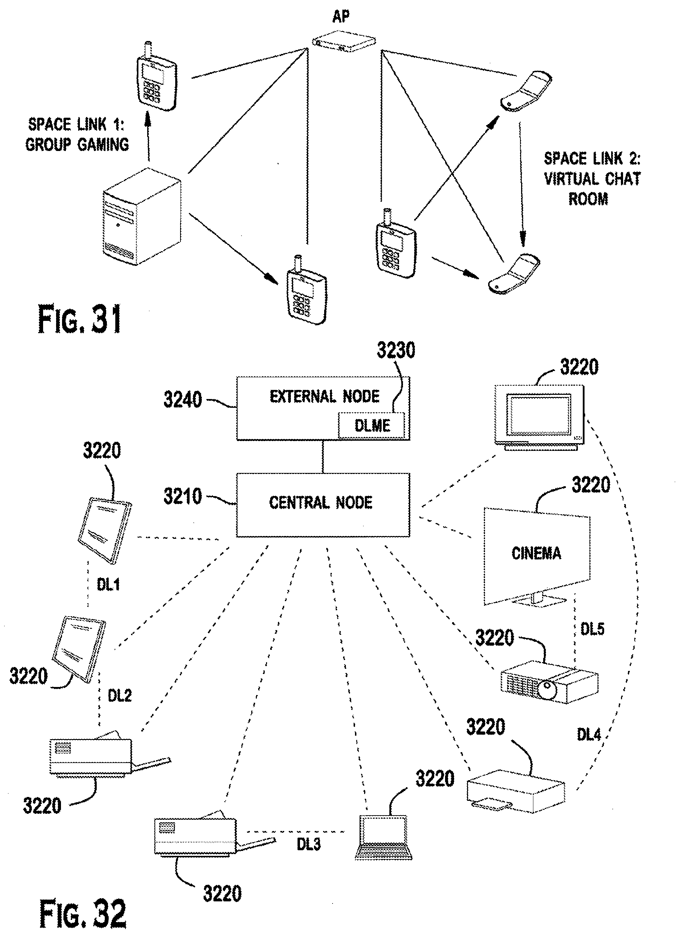

Conventionally, direct links are reserved for direct communication between two stations while by-passing the AP. This may be extended to have communication with multiple stations in order to have a more efficient way of implementing certain applications which involve multiple stations. FIG. 31 shows an example of a space link. FIG. 31 shows that one space link is used for group gaming application, and the other space link is used for a virtual chat room among devices.

Any of the direct link implementations described above may be used to implement a space link. For example, in the 60GHz case, a specific service period or a set of service periods may be dedicated for the use of a space link. In the multiple radio TVWS scenario, a set of channels (with its own primary channel) may be allocated for a space link.

The stations that are involved in the space link communicate directly to each other, either through unicast messages or multicast messages (depending on the application in question). In the case of a group gaming application, the space link enables a high traffic throughput without having to route the traffic through the AP (thus ensuring the rest of the network does not get congested). For the case of a virtual chat room, the unicast and multicast features may be used to ensure the MAC-level security of messages and therefore, the "private message" feature.

Hereafter, examples are disclosed for stations/clients to know the stations/clients that they can communicate directly over a point-to-point link. Examples are also disclosed to enable the stations to know the services and application that the DSM system offers that would benefit from a direct link. For instance, with the embodiments, a smartphone may be able to know that a local personal computer (PC) within the DSM system is hosting an digital music file server, or is behaving as a printer server, etc. Examples are also disclosed that multiple direct links may be setup simultaneously in a DSM system, and coexist with the ongoing DSM system transmissions. Examples are also disclosed for the transmission parameters for the direct link communications, (e.g., modulation, coding, antenna directivity, etc.).

Network connectivity is an important factor maintaining high throughput data links. Detailed maps of expected connectivity may guide the DSM engine or central entity (e.g., the AP or network entity) in setting up the appropriate direct links in the network and help improve the overall throughput of the network as it helps to understand the relationship of signal strength and throughput.

FIG. 32 shows an example network architecture including a central node 3210 and a plurality of terminal devices 3220 for terminal-to-terminal direct link management. The central node 3210 connects the terminal devices 3220 to form a capillary network. In this architecture all the terminal devices 3220 may communicate through the central entity 3210. In an indoor network such as WLAN or Femtocell, the central node 3210 corresponds to WLAN AP, a home NodeB, a home evolved NodeB, or the like. In an outdoor network such as a cellular network, the central node 3210 may be a NodeB or an evolved NodeB.

The terminal-to-terminal direct link management entity (DLME) 3230 manages the direct links between the terminal devices 3220. The DLME 3230 may setup a direct link between the devices (DL1-DL5 in FIG. 32). The DLME 3230 may be located in the external entity 3240, as shown in FIG. 32. However, the DLME 3230 may be located in the central entity 3210, or any entity in the network. The network terminal devices 3220 may contain a client DLME entity (not shown) to support the direct link management procedures (e.g., direct link setup, tear down, measurement control, reporting, and the like).

In one example, for end-to-end radio connectivity status and direct link management for the devices in the network, a connectivity map, a services map, and/or a capability map may be established. It should be noted that the following examples will be explained with reference to the connectivity map, but the examples are also applicable to the services and capabilities maps and any other complimentary information maps can be used for the purpose of the terminal-to-terminal direct link management. The connectivity map, the services map, and the capability map may be centralized and collocated with the DLME entity.

The connectivity map comprises information collection characterizing the wireless links between every pair of terminals in the capillary network. For example, the wireless characterization of a link between terminals may be the signal-to-noise ratio or the received power of the other terminal transmissions of the link, which corresponds to a path loss characterization between the two terminals. The connectivity map portrays the connectivity, for example, in terms of path loss, between every pair of terminals in the capillary networks.

The services map comprises information collection characterizing the available services at every terminal device in the capillary network. The available services includes, but is not limited to, the services names, their status (i.e., enabled or disabled), the required QoS (e.g., minimum rate), possible RATs used for the service, operating RAT or channel information, and the like.

The capabilities map comprises information collection characterizing the capabilities of every terminal device in the capillary network. The capabilities includes, but is not limited to, the available RATs, the status of the available RAT (i.e., enabled or disabled), the maximum transmit power in every RAT, direct link capability, sensing capability, and the like

In one example, the connectivity information may be collected at the time of association or right after the association. A terminal device that has just associated may be queried to broadcast a particular signal in a specific transmit power to all the network nodes. Every network nodes then measure the received power of that signal and reply with another signal to the terminal with a specific transmit power. The terminal then measures the received power of the signal from other nodes. All these measurements are transmitted to the DLME entity to build a collection of path losses between all the network nodes. These path losses characterize the connectivity between the network nodes.

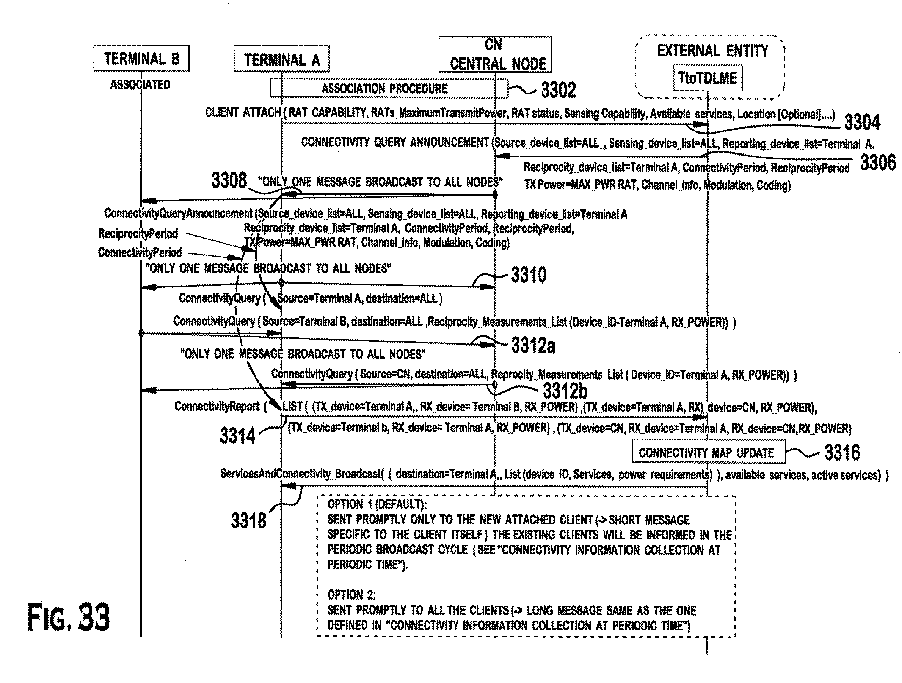

FIG. 33 shows an example signaling flow for connectivity information collection after the terminal association. In FIG. 33, it is shown as an example that the capabilities and the services information is communicated to the DLME after the terminal association (3302), but it may be communicated during the association.

The associated terminal device sends to the DLME a client attach message (3304). The client attach message may include the capabilities information (e.g., the maximum transmit power), the services information, and/or the location information. The DLME stores this information in the capabilities map as well as in the services map. The DLME triggers a query and sends a connectivity query announcement message to the central node (3306). The connectivity query announcement message may contain some or all of the information elements in Table 1.

**Table 1**

| Information elements | Description |
|---|---|
| Source_device_list | Network devices list that should send the ConnectivityQuery message. |
| Sensing_device_list | Network devices list that should sense and measure the Received power of the ConnectivityQuery message. |
| Reporting_device_list | Network devices list that should report to the TtoTDLME the Received power measurements. |
| Reciprocity_device_list | Network devices list that should start first transmitting (during the Reciprocity period) the Connectivityfluery message. |
| Connectivity Period | Period where all devices from the Source_device_list should transmit the ConnectivityQuery message. |
| ReciprocityPeriod | Period where devices from the Reciprocity_device_list should transmit the ConnectivityQuery message. When a device transmit ConnectivityQuery message during ReciprocityPeriod, it should not retransmit the message in the remaining time during the ConnectivityPeriod. The ReciprocityPeriod should be inferior than the ConnectivityPeriod. |
| TX Power | Level of the transmit power to use when sending the ConnectivityQuery message. |
| RAT | Radio Access Technology to use when sending the Connectivity Query message. |
| Channel_info | Frequency, Band |
| Modulation | Modulation to use when sending the ConnectivityQuery message. |
| Coding | Coding to use when sending the ConnectivityQuery message. |

After the central node receives the connectivity query announcement message from the DLME entity, the central node broadcasts a connectivity query announcement message to all the network nodes on the network operating channel (3308). The clients, including the central nodes, interpret the information elements from the connectivity query announcement message.

During a ReciprocityPeriod, the terminal A (listed in the Reciprocity_device_list) may transmit a connectivity query message as a broadcast on the network operating channel (3310). The terminal A may use its own maximum transmit power. All the other network nodes (listed in the Sensing_device_list), including the central node, may sense and measure the received power of the connectivity query message from the terminal A.

After the end of the ReciprocityPeriod time, the nodes listed in the Sensing_device_list, except Terminal A, transmits a connectivity query message as a broadcast message on the operating channel (3312a). The AP also sends a connectivity query message as a broadcast message on the operating channel (3312b). The nodes may transmit the message at its own maximum transmit power. This connectivity query message may include the measurement of the received power of the connectivity query message from the terminal A.

The terminal A (listed in the Reporting_device_list) measures the power of the connectivity query messages from the other network nodes including the AP. The terminal A also extracts the measurements information from the connectivity query messages received from the other network nodes. The terminal A then generates a measurement report including its own measurements and the extracted measurements. At the end of the connectivity period, the terminal A sends a connectivity report message to the DMLE (3314). The connectivity report message contains the received power at the terminal A of all the connectivity query messages from the other network nodes, as well as the received power at all other network nodes of the connectivity query message sent by the terminal A.

Once the DLME receives the connectivity report message, the DLME updates the connectivity map (3316). The DLME may send a services and connectivity message to the terminal A through the central node (3318). The services and connectivity message may include the network nodes identifications with which the terminal A may communicate as well as the corresponding path losses, and the available services in the network devices.

In another example, the connectivity information may be collected periodically. All the network nodes may be queried to broadcast a particular signal in a specific transmit power to all the network nodes. Every network node then measures the received power of that signal and reports its measurements to the DLME which may build a collection of path losses between all the network nodes. These path losses characterize the connectivity between the networks nodes.

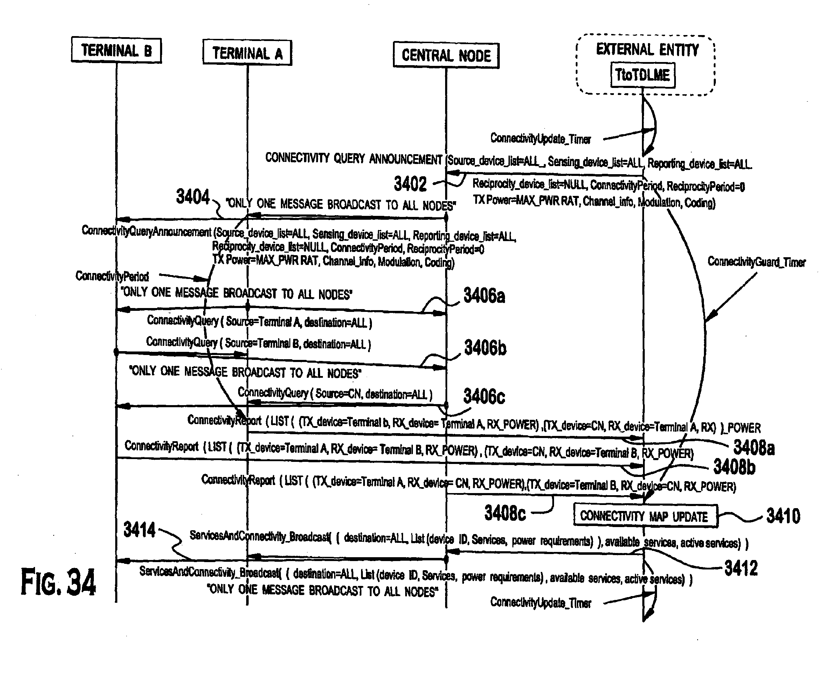

FIG. 34 shows an example signaling flow for periodic connectivity information update. After the ConnectivityUpdate_Timer expires, the DLME may trigger a query and send to the central node a connectivity query announcement message with some or all of the information elements in Table 1 (3402). The Reciprocity_device_list may be NULL and the ReciprocityPeriod may be equal to zero. After the central node receives the connectivity query announcement message from the DLME entity, the central node may broadcast a connectivity query announcement message to all the network nodes on the network operating channel (3404). This message may include the information elements from the connectivity query announcement message from the DLME. The clients, including the central nodes, interpret the information element from the connectivity query announcement message.

After the reception of the connectivity query announcement message, every node (listed in the Sensing_device_list) including the AP may transmit a connectivity query message as a broadcast message on the operating channel (3406a, 3406b, 3406c). Every node may transmit at its own maximum transmit power.

Every network node (listed in the Reporting_device_list), may measure the power of the connectivity query messages sent by other nodes, and at the end of the connectivity period, send the sensed measurements to the DLME (3408a, 3408b, 3408c). The connectivity report from every node contains the received power at that node of all the connectivity query messages sent by the other network nodes. The services and capabilities information update may be included in these connectivity reports, such as newly activated and/or deactivated services, newly enabled and or disabled RAT, or the like.

Once the DLME receives the connectivity report messages, the DLME may updates the connectivity map (3410). The DLME may send a services and connectivity message to the central node (3412). The central node may then set the connectivity update timer, and broadcast it to all the network nodes (3414).

In another example, the connectivity information may be collected on-demand. The connectivity measurements may be performed by the different nodes on the same network operating channel. An actual setup of the direct link between two nodes may be on a different band and/or on a different RAT, (for example, when the operational channel is a WLAN channel on an ISM band and the channel for the direct link is on a 60 GHz band, or on Bluetooth technology or other technologies). It is assumed that the external entity decides the channel, band and the RAT for the direct link. For choosing the channel, band and the RAT for the direct link, the external entity may trigger its DLME entity to perform an on-demand connectivity information collection.

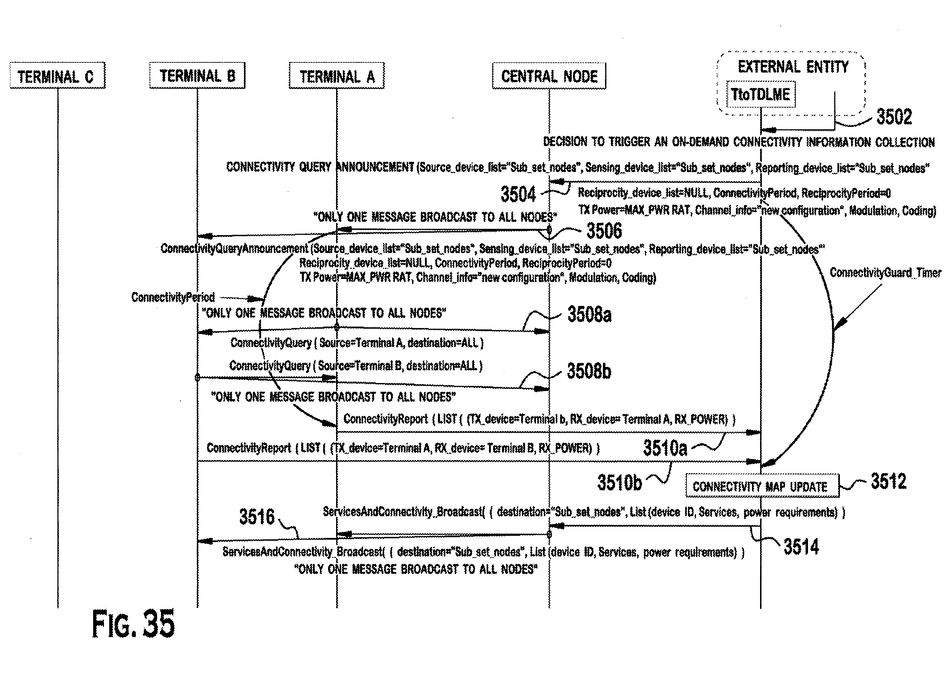

FIG. 35 shows an example on-demand connectivity information collection. On a trigger from the external node (3502), the DLME sends to the central node a connectivity query announcement message with some or all of the information elements in Table 1 (3504). The targeted nodes to perform the measurement are a subset of the network nodes. It may be just two nodes (e.g., TV and a DVD player to be connected on 60 GHz) or more nodes (several smartphones to be connected in Bluetooth to play a game or a texting application).

The central node broadcasts a connectivity query announcement message to all the subset of nodes on the network operating channel (3506). This message may include the information elements from the connectivity query announcement message. The clients, including the central nodes, may interpret the information elements from the connectivity query announcement message.

The ReciprocityPeriod time may be set to zero. After reception of the connectivity query announcement message, the subset of nodes (listed in the Sensing_device_list), may transmit a connectivity query message as a broadcast message on a specific channel, band and RAT (3508a, 3508b). Every node may transmit at its own maximum transmit power.

The subset of nodes (listed in the Reporting_device_list), may measure the power of the connectivity query messages, and communicate the sensed measurements to the DLME through the central node (3510a, 3510b). The connectivity report from every node contains the received power at that node of all the connectivity query messages sent by the subset of nodes.

Once the DLME receives the connectivity report messages, the DLME updates the connectivity map (3512). The DLME may send a services and connectivity message to the central node (3514). The central node may broadcast it to all the network nodes (3516).

Prior to setting up a direct link, stations need to be aware of the services that are available or being offered. The services may be network-related services (e.g., print service, file storage service, etc.) or application-related services (e.g., gaming services, chat services, etc.). Once the DLME has the service map, the information may be used by clients to trigger the creation of a direct link.

The DLME may broadcast application messages including a full or partial list of services. These may rely on the broadcast capabilities of the capillary network for transmission to all stations. If the capillary network controlled by the central node has a broadcast mechanism for control (e.g., beacons), the service map information may be transferred from the DLME to the central node, for inclusion in the control message (e.g., as part of the beacon).

At device attachment to the DLME, the DLME may provide a list of services in the attachment response message. Alternatively, the map may be provided to the central node, and this may be included in the association response from the central node. Alternatively, in the association or attachment message, the device may provide an indication of the type of service it is looking for, and the association or attachment response may include a targeted set of services (based on the request from the terminal).

The broadcasting of the service map may be controlled based on the number and type of devices that have associated to the central node or attached to the DLME. For instance, if no device with terminal-to-terminal capability has attached, the DLME may refrain from broadcasting the service map.

Alternatively, the map may be tailored based on the types of devices that have associated or attached. For instance if print servers have attached, the broadcast service map may be transmitted on the arrival of a device looking for such a service.

Alternatively, the map may be tailored based on the system load (or some similar parameter) perceived by the central node. For instance, the central node may want to promote the establishment of direct links in another channel or band to achieve some load balancing. This may trigger the DLME to begin broadcasting the services map.

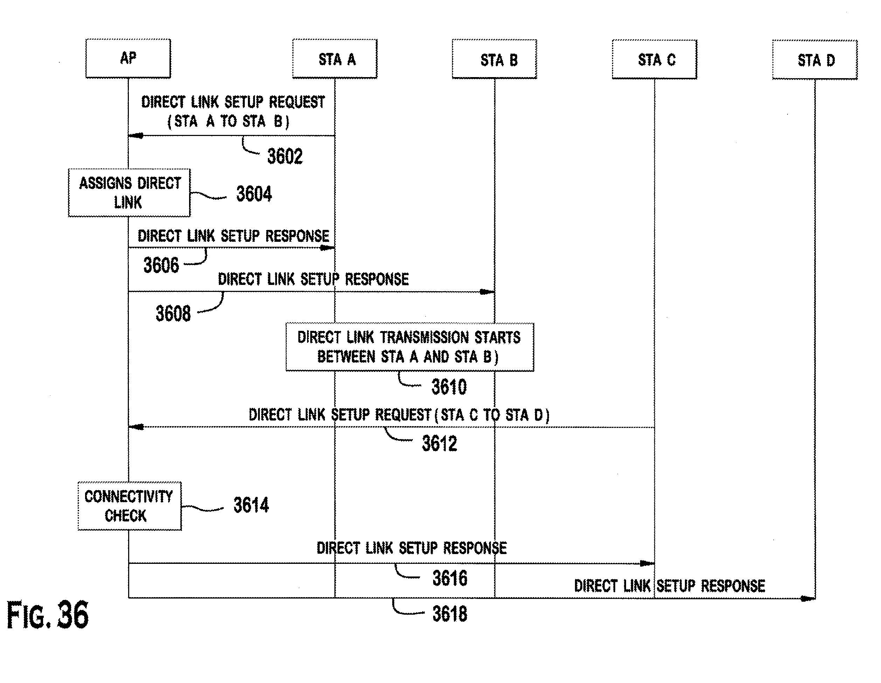

FIG. 36 shows an example signaling flow for the direct link setup using the connectivity and capabilities map. The central node is shown as an 802.11 AP and it is assumed that the DLME is implemented in the AP. STA A sends a direct link setup request to the AP for setting up a direct link with STA B (3602). This may be based on a prior reception of the services map. The AP examines the request and uses the capability and connectivity map to find a suitable channel and band for the direct link operation (3604). The direct link setup may be based on the requested bandwidth. The DLME may use the connectivity map to determine the best transmission parameters for the direct link, (e.g., minimum transmitted power, modulation, coding, antenna directivity, etc.). The AP then sends a direct link setup response to STA A and STA B, respectively (3606, 3608). The direct link transmission then starts between STA A and STA B (3610).

STA C sends a direct link setup request for setting up a direct link with STA D (while the direct link between STA A and STA B is still ongoing) (3612). The AP determines the channel and band for operation of this direct link, and performs a connectivity check (3614).

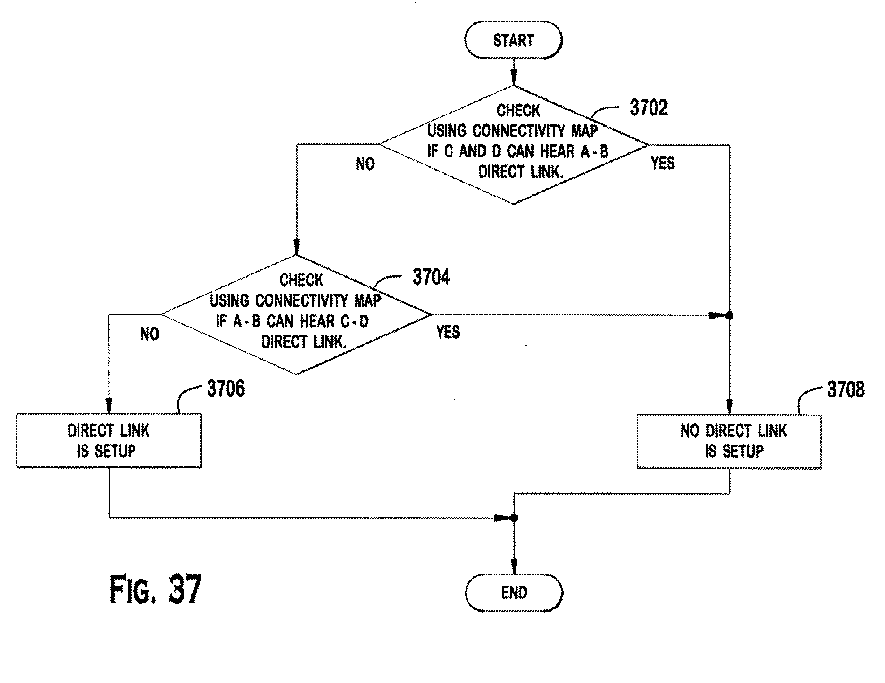

FIG. 37 is an example flow diagram of a process for the connectivity check. The AP checks whether direct link connectivity is possible for STA C and STA D on the same channel used by the STA A-STA B direct link, and, if so, evaluates the impact of operating this direct link on the same frequency channel. The AP may assign a minimum possible transmit power for the STA C-STA D direct link. The AP checks if STA C and STA D can hear STA A-STA B link (3702). The AP may use the connectivity map to determine if the STA A-STA B transmissions would affect the STA C-STA D transmissions. The AP further determines whether STA A and STA B can hear STA C-STA D link (3704). The AP may use the connectivity map to determine if the STA C-STA D transmissions at the proposed transmission power, modulation, coding, antenna directivity, etc. would affect the STA A-STA B transmissions. If both determinations at 3702 and 3704 are negative, a direct link is setup (3706). If any one of the determinations at 3702 and 3704 is positive, no direct link is setup (3708). Alternatively, the DLME may decide to find an alternate channel and band (if possible), or to allow both direct links to share the assigned channel and band (potentially resulting in a performance degradation).

Referring again to FIG. 36, if the AP determines to set up a new STA C-STA D direct link, the AP sends a direct link setup response to STA C and STA D, respectively (3616, 3618).

The direct links are managed and coordinated through a series of procedures operating between the client DLME and the server DLME as well as the procedures between the APs and the stations. A direct link monitor procedure is performed to evaluate whether a direct link is needed between peer stations. A direct link monitor configuration procedure is performed to setup direct link monitor algorithm and parameters. A direct link activation procedure is performed to activate or setup a direct link. This may be triggered by the peer stations based on some direction by the DLME. A direct link de-activation procedure is performed to deactivate or teardown a direct link. This may be triggered by the peer stations or by the DLME. The procedure may be biased by direction provided by the DLME. A direct link reconfiguration decision procedure is performed to evaluate if a direct link reconfiguration is necessary. A direct link reconfiguration procedure is performed to alter the constituent channels (channel set) assigned to a direct link. It may be as a result of a direct link reconfiguration decision. A direct link silent period configuration procedure is performed to configure silent period in the direct link transmission to perform measurements in TVWS band and other bands. A direct link service broadcast procedure is performed to broadcast service information by the AP. A DSM link maintenance procedure is performed to retrieve physical channels from a direct link and to reassign them to the DSM link. A DSM link failure procedure is performed to allow stations to operate when a non-direct link fails. A connectivity map procedure is performed to determine connectivity between pairs of nodes. Details of these procedures will be explained below.

A DSM attach procedure may be used to inform the DSM engine about the capabilities of a station. This procedure may be performed either when a station associates to the AP or following the association in a dedicated DSM message. In the following examples, the latter is assumed.

The attachment and connectivity update procedure is shown as part of the procedure in FIG. 33. Therefore, the DSM attach procedure will be explained with reference to FIG. 33. After associating with the AP (3302), client A sends a client attach message to the DLME (3304). The client attach message may indicate the capabilities information of client A, and may include information regarding identification, physical capabilities, location information, service information, TVWS capability, known connectivity information, and the like. The identification may be the same as the MAC address of the client, or some local DSM address identification. The physical capabilities include the number of radios supported, radio access technologies (RATs) supported, whether these may be operated simultaneously, sensing capability, etc. The location information may be based on the client A's global positioning system (GPS) capability. The service information may include types of services offered by client A (printing, file storage, gaming host, etc.). The TVWS capability indicates whether the device is a Mode I, Mode II or sensing only device. The known connectivity information indicates clients that can communicate directly with client A. The connectivity information may be maintained by monitoring the addresses list in all receive frames. In one example, every time client A receives a frame for processing, client A may update a connectivity map, which will be explained in detail below.

The DLME stores the information in a client database and may respond with a client attach confirm message (not shown). As client A is a new client, the DLME may decide to establish a full connectivity map with all other potential clients. The full connectivity map may be obtained by having client A send out a broadcast message to all other clients and have all other clients and the AP to measure the broadcast message and send a measurement message to the client A (3308-3320).

Once the DLME has built a complete capability, service, and connectivity map, it may ask the AP to send a services and connectivity message to inform all clients of the capabilities of client A. Alternatively, the DLME may send the services and connectivity information to the AP, and have the AP broadcast this information (for example as part of the regular beacon transmissions or as part of broadcast multicast user-plane traffic).

A DLME may perform a direct link monitor configuration procedure to setup direct link monitor configuration algorithms and parameters. It may be performed during a DSM attach procedure, or using explicit signaling between the DLME and the client/station. The DLME may continuously evaluate whether or not to allow direct links. This evaluation may be performed based on a plurality of metrics. For example, this evaluation may be based on available physical channels. In case where there are limited available channels the DLME may decide not to allow direct links. In contrast, in case where there are many available channels, the DLME may promote direct link creation. The evaluation may be performed based on capability of the attached clients. If there are few attached clients that have direct link capability the DLME may decide not to allow direct links. The evaluation may be performed based on the total system load. If load on the DSM-link (AP-link) is high, the DLME may favor creation of the direct links.

Based on the metrics, the DLME may establish the algorithm the stations may use to trigger a direct link activation/deactivation as well as the parameters for the algorithms. This information may be signaled to the stations as part of the DSM attach confirmation message, or as part of a new DLME message. The client stations configure their direct link monitoring procedure based on the requested configuration. The metrics may include the queue size to a particular destination, the throughput to a particular destination, etc. In addition, the algorithm may rely on the access class of the traffic, the quality of service of the traffic or the traffic type, (e.g., real time vs. delay tolerant, voice vs. video vs. data, etc.), indications from the higher layers, (e.g., application or transport layer). For instance, the application may provide an indication that it wishes to set up a direct link, or it may provide an indication as to the type of session it is requesting, (e.g., a file transfer protocol (FTP) session to transfer a file of size X). The algorithm may also rely on the proximity of devices (e.g., if 2 devices are very close and can communicate with little power, there may be an advantage to push these devices to a direct link).

A STA may perform a direct link monitor procedure to evaluate if a direct link is needed. It is performed at a station that has been configured for monitoring through the direct link monitor configuration procedure disclosed above. The metrics configured for the direct link activation or teardown may be different.

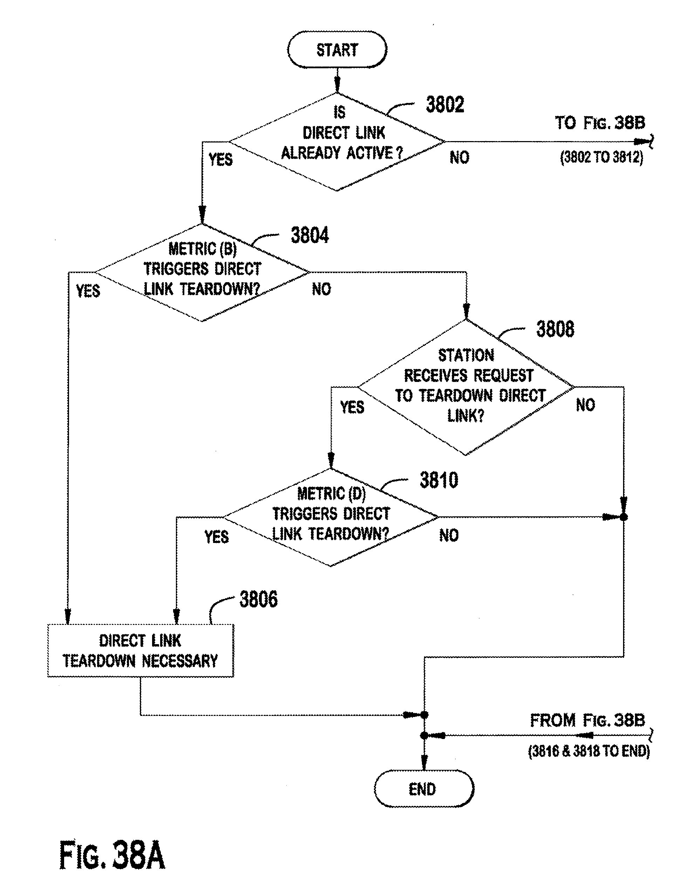

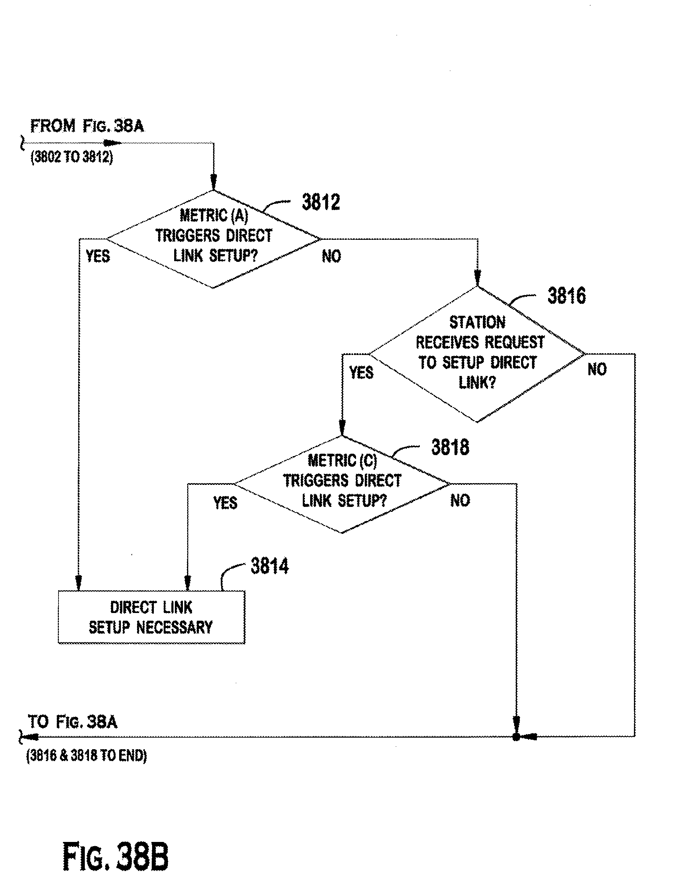

FIGS. 38A and 38B show an example direct link monitor procedure. A STA determines whether a direct link is active (3802). If a direct link is already active, the STA determines whether metric (B) triggers a direct link teardown (3804). If so, the direct link teardown is triggered (3806). If not, it is determined whether the STA receives a request to teardown the direct link (3808). If not, the direct link is maintained. If yes, it is further determined whether metric (D) triggers a direct link teardown (3810). If so, the direct link teardown is triggered (3806). If not, the direct link is maintained.

If it is determined that a direct link is not active (3802), the STA determines whether metric (A) triggers a direct link setup (3812). If so, the direct link setup is triggered (3814). If not, it is determined whether the STA receives a request to setup a direct link (3816). If not, the direct link is not setup. If yes, it is further determined whether metric (C) triggers a direct link setup (3818). If so, the direct link setup is triggered (3814). If not, the direct link is not setup.

The STA may use different metrics, metric(A) through metric(D), for direct link teardown and setup. The outcome of the procedure is an indication as to whether to proceed with a direct link activation or deactivation. A STA may decide to setup or teardown a direct link once the metric triggers the action. The STA may also receive a request for setup (or teardown) from another station or from the DSM engine, in which case it may use a different metric to determine whether to setup or teardown a direct link.

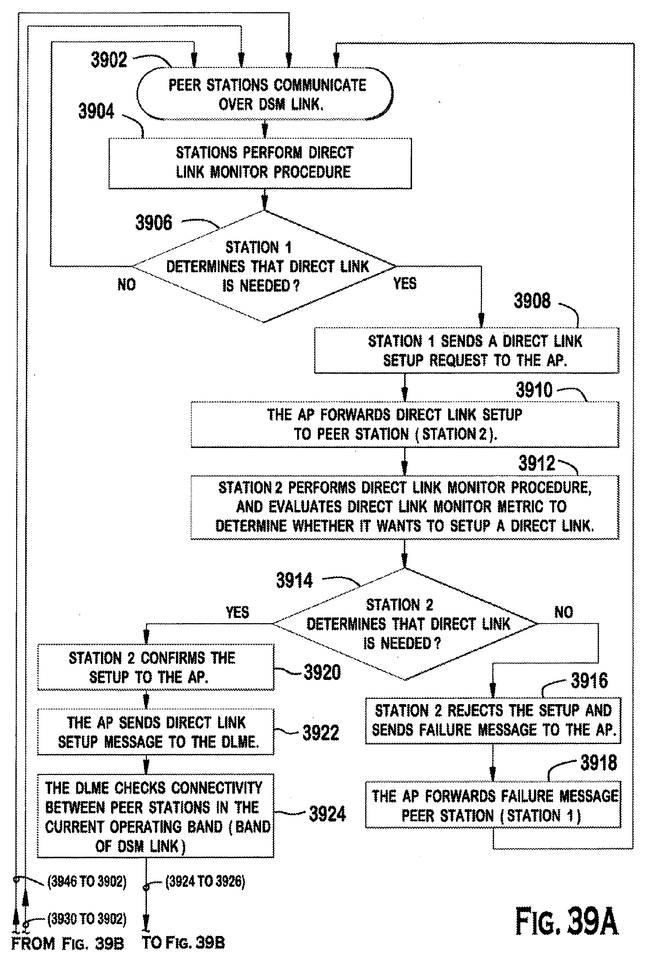

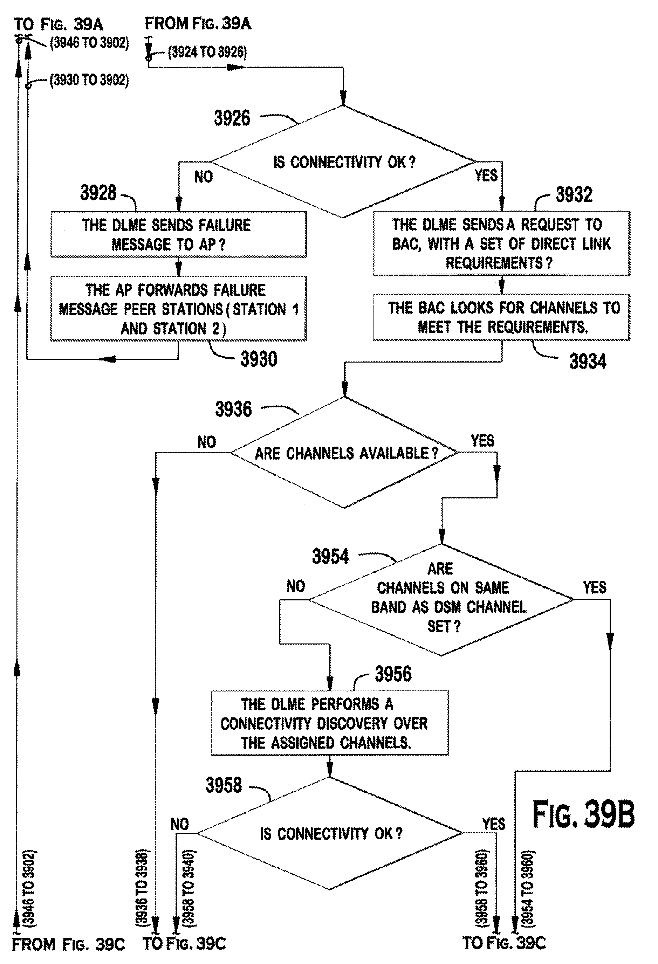

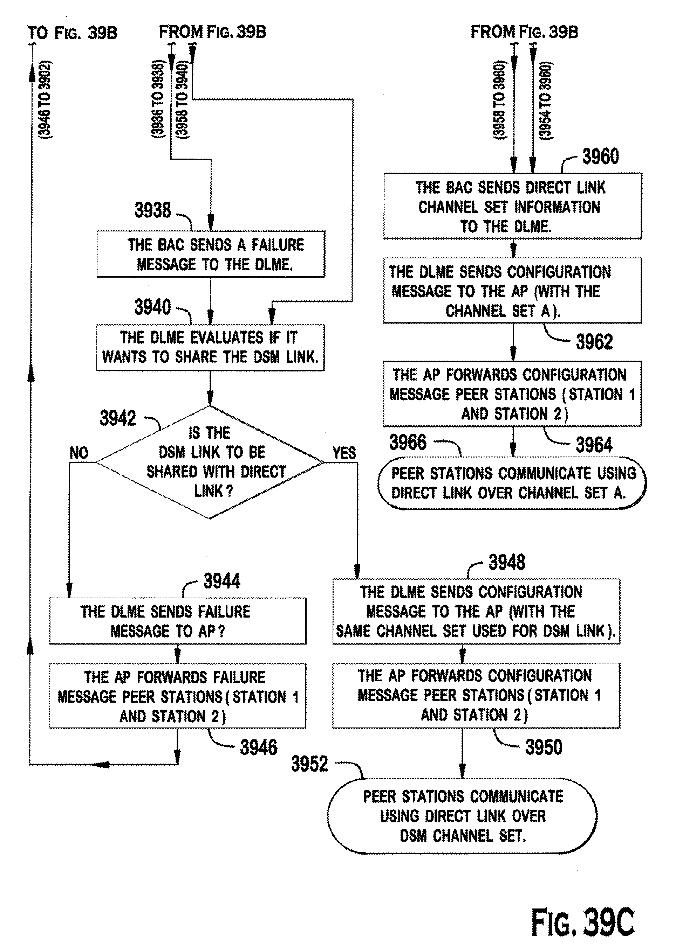

FIGS. 39A-39C are an example flow diagram of a procedure for direct link setup or activation in accordance with one example. In FIGS. 39A-39C, STA 1 initiates a direct link to STA 2. The procedure may be used to activate or setup a direct link. This may be triggered by the stations based on the algorithms and parameters configured via the direct link monitor configuration procedure. The DLME may configure the stations to find the channels for the direct link. If there are no available channels the direct link may be activated on the channels used for the DSM link. In this case the DSM link and the direct link time share these channels.

STA 1 and STA 2 communicate over the DSM link and perform a direct link monitor procedure (3902, 3904). If STA 1 determines that a direct link is needed (3906), STA 1 sends a direct link setup request to the AP, and the AP forward the request to STA 2 (3908, 3910). The direct link setup request message may include an indication as to the bandwidth requirements of the direct link (e.g., in terms of the number of channels or bit rate), the type of service that the station is requesting through the direct link, or the like.

STA 2 performs a direct link monitor procedure to evaluate the metrics (3912). If STA 2 determines that a direct link is not needed (3914), STA 2 reject the direct link setup and sends a failure message to the AP and STA 1 (3916, 3918). If STA 2 determines that a direct link is needed (3914), STA 2 confirms the setup to the AP (3920), and sends a direct link setup message to the DLME (3922).

The DLME checks the connectivity between STA 1 and STA 2 in the current operating band (i.e., band of the DSM link) (3924). If it is determined that the connectivity is not possible (3926), the DLME sends a failure message to the AP and the AP forwards the failure message to STA 1 and STA 2 (3928, 3930). If it is determined that the connectivity is possible (3926), the DLME sends a request to a BAC with a set of direct link requirements (3932).

The BAC looks for channels to meet the requirements (3934). If it is determined that there are no available channels (3936), the BAC sends a failure message to the DLME (3938). The DLME evaluates if it is acceptable to share the DSM link (3940). If the DLME determines not to share the DSM link with the direct link (3942), the DLME sends a failure message to the AP and the stations (3944, 3946). If the DLME determines to share the DSM link with the direct link (3942), the DLME sends a configuration message to the AP with the same channel set used for the DSM link (3948). The AP then forwards a configuration message to STA 1 and STA 2 (3950), and STA 1 and STA 2 communicate using the direct link over the DSM link channel set (3952).

If it is determined that there are available channels (3936), it is further determined that whether the channels are on the same band as the DSM channel set (3954). If no, the DLME performs a connectivity discovery over the assigned channel using the connectivity map (3956). If connectivity is not possible (3958), the process proceeds to step 3940. If connectivity is possible (3958), or the channels are on the same bands as the DSM channel set (3954), the BAC sends a direct link channel set information to the DLME (3960). The DLME sends a configuration information to the AP with the channel set A (3962). The AP then forwards a configuration message to STA 1 and STA 2 (3964), and STA 1 and STA 2 communicate using the direct link over the channel set A (3966).

In another example, the DSM engine may configure the direct link prior to checking the status of the peer client (station 2 in this example). In this example, the AP forwards the direct link setup request to STA 2 after the AP and the DLME configure the direct link parameters. Otherwise, a failure message is sent to the initiating station.

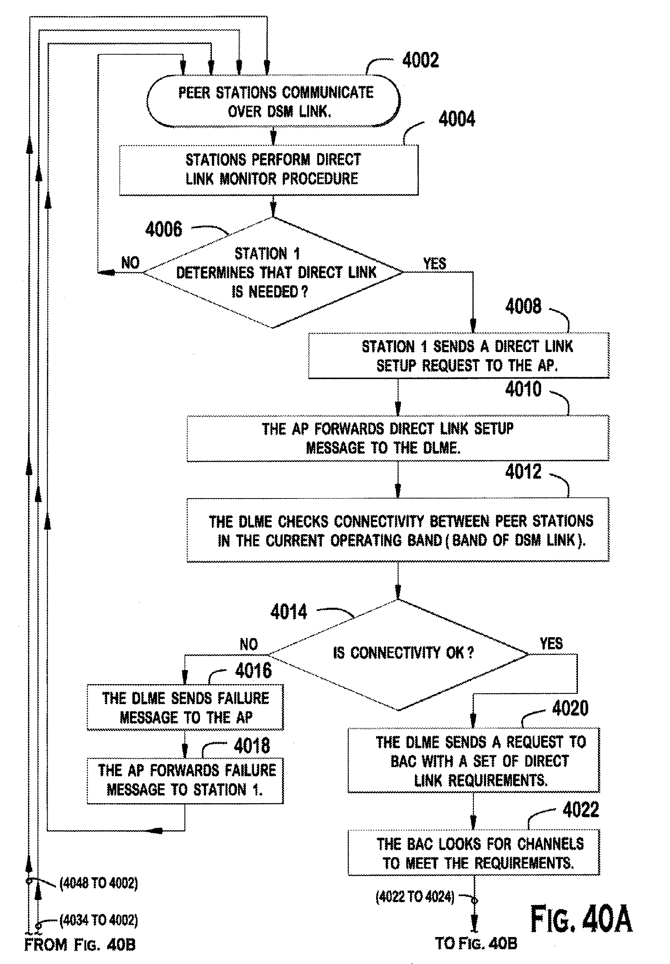

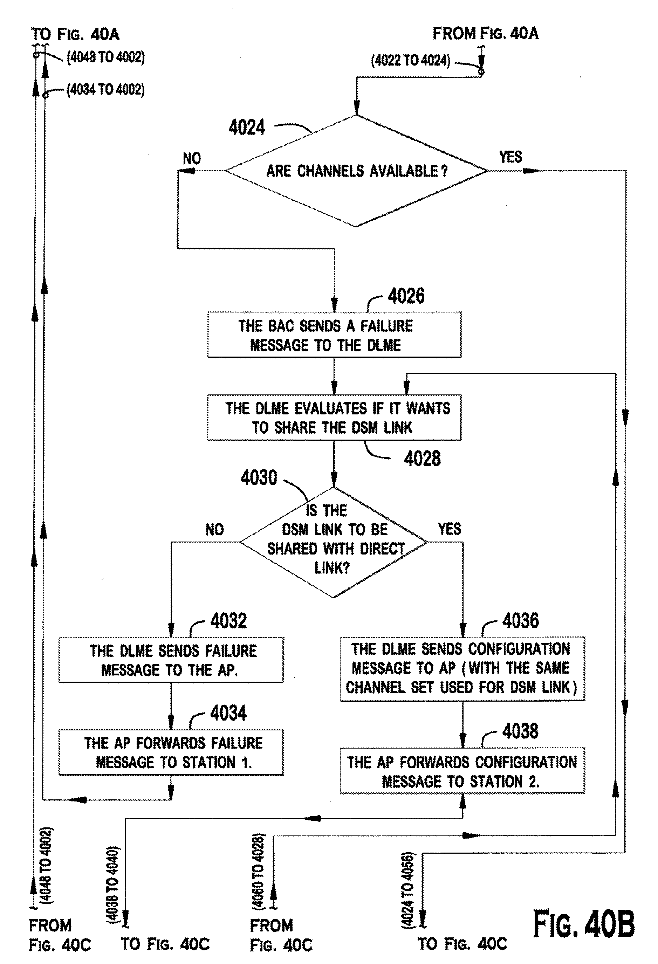

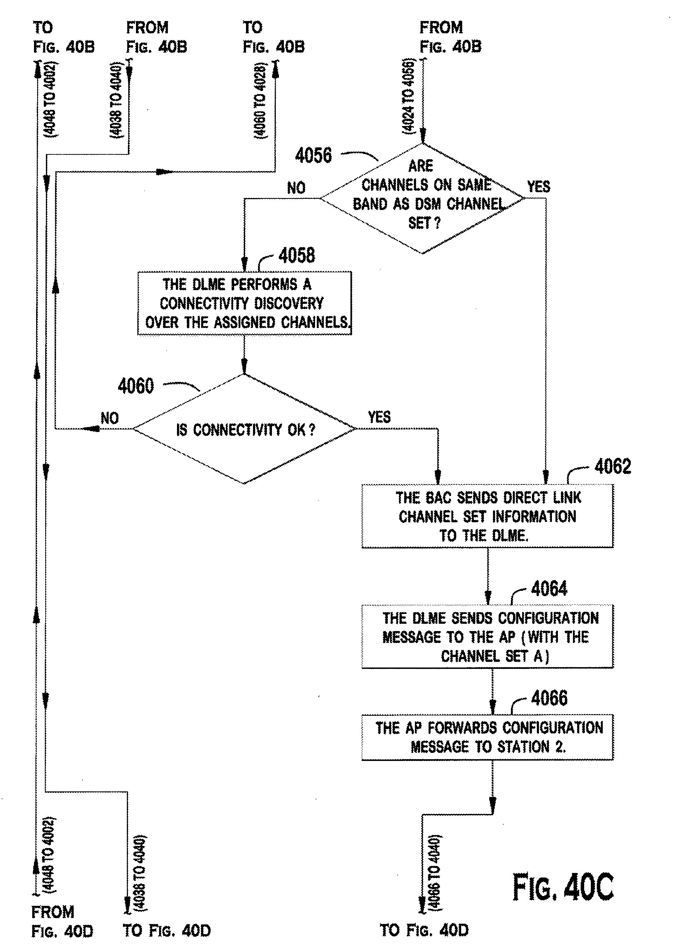

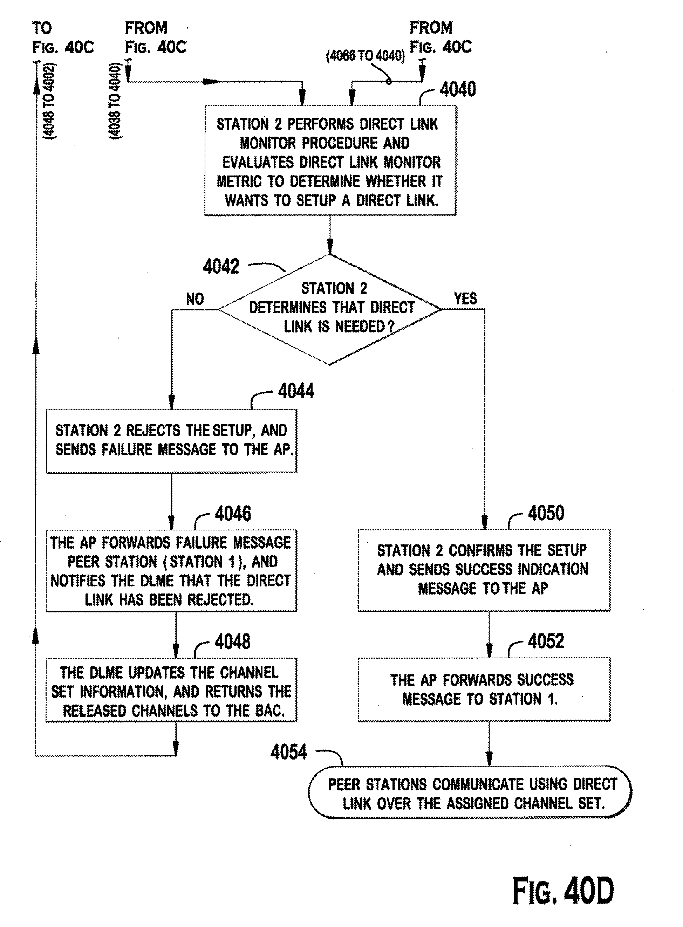

FIGS. 40A-40D are an example flow diagram of a procedure for direct link setup or activation in accordance with another embodiment. In FIGS. 40A-40D, STA 1 initiates a direct link to STA 2. STA 1 and STA 2 communicate over the DSM link and perform a direct link monitor procedure (4002, 4004). If STA 1 determines that a direct link is need (4006), STA 1 sends a direct link setup request to the AP (4008).

The AP sends a direct link setup message to the DLME (4010). The DLME checks the connectivity between STA 1 and STA 2 in the current operating band (i.e., band of the DSM link) (4012). If it is determined that the connectivity is not possible (4014), the DLME sends a failure message to the AP and the AP forwards the failure message to STA 1 and STA 2 (4016, 4018). If it is determined that the connectivity is possible (4014), the DLME sends a request to a BAC with a set of direct link requirements (4020).

The BAC looks for channels to meet the requirements (4022). If it is determined that there are no available channels (4024), the BAC sends a failure message to the DLME (4026). The DLME evaluates if it is acceptable to share the DSM link (4028). If the DLME determines not to share the DSM link with the direct link (4030), the DLME sends a failure message to the AP and the AP forwards the failure message to the stations (4032, 4034). If the DLME determines to share the DSM link with the direct link (4030), the DLME sends a configuration message to the AP with the same channel set used for the DSM link (4036). The AP then forwards a configuration message to STA 2 (4038).

STA 2 performs a direct link monitor procedure to determine whether it wants to setup a direct link (4040). If STA 2 determines that a direct link is not needed (4042), STA 2 reject the direct link setup and sends a failure message to the AP (4044). The AP forwards a failure message to STA 1 and notifies the DLME that the direct link has been rejected (4046). The DLME then updates the channel set information, and returns the released channels to the BAC (4048). If STA 2 determines that a direct link is needed (4042), STA 2 confirms the setup and sends a success indication to the AP (4050). The AP then forwards the success message to STA 1 (4052). STA 1 and STA 2 communicate using the direct link over the assigned channel set (4054).

If it is determined that there are available channels (4024), it is further determined that whether the channels are on the same band as the DSM channel set (4056). If no, the DLME performs a connectivity discovery over the assigned channel using the connectivity map (4058). If connectivity is not possible (4060), the process proceeds to step 4028. If connectivity is possible (4060), or the channels are on the same bands as the DSM channel set (4056), the BAC sends a direct link channel set information to the DLME (4062). The DLME sends a configuration information to the AP with the channel set A (4064). The AP then forwards a configuration message to STA 2 (4066), and the process proceeds to step 4040.

In both examples above, upon receiving the direct link setup message, the stations may acknowledge the direct link message. Alternatively, the station may not send the acknowledgement message, and the DLME may monitor the activity on the assigned direct link channels to confirm that they are being used. If no activity is observed, the channels may be returned to the BAC for possible future assignment to the DSM link or other direct links.

The connectivity between the two peer stations may be determined by the DLME based on the connectivity map. Alternatively, the peer stations may evaluate the connectivity and initiate a direct link setup if the connectivity is successful. For example, the initiating station (e.g., station 1) may regularly update a connectivity table every time it receives a frame (even those frames destined to other stations). If the peer station (e.g., station 2) is not on this list, station 1 may send a dummy packet to station 2 (over the AP) and listens for the resulting ACK frame from station 2. If station 1 overhears this frame, station 1 may update its connectivity table and initiate the direct link setup. Otherwise, station 1 may not attempt the direct link setup.

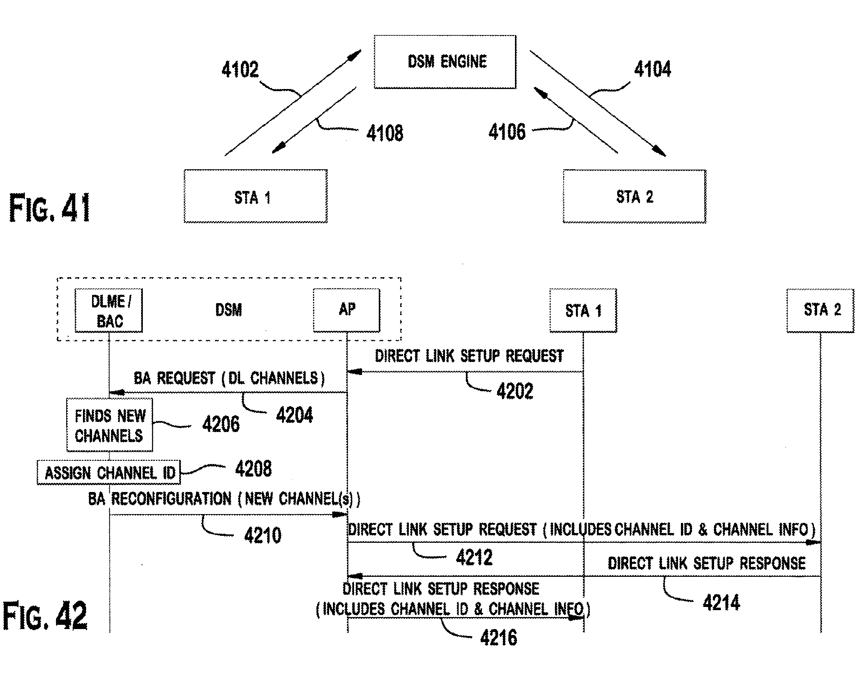

The direct link setup procedure may be initiated by the source station following the exchange of four messages between the source station, the DSM engine and the destination STA as shown in FIG. 41.

FIG. 41 shows an example message exchange for direct link setup. The message 4102 is the direct link setup request message. When the DSM engine receives the request from STA 1, the DSM engine looks for new channels for the direct link. Depending on the availability of the channels and the channel selection algorithm used, the BAC assigns channels and channel ID (group ID) for the direct link. The channel ID is assigned to a set of channels (e.g., DSM link channels, direct link channels, etc.). DSM link channels may be assigned channel ID 0. Channel information and assigned channel ID are transmitted to STA 2 in message 4104. The message 4106 is the direct link setup response sent out by STA 2 to the DSM engine. This response is then forwarded to STA 1 along with the channel information and channel ID via message 4108 by the DSM engine.

FIG. 42 shows an example signaling flow between direct link stations and the DSM engine for direct link setup. When the AP receives a direct link setup request from STA 1 (4202), the AP sends a BA request to the DLME/BAC (4204). Upon receiving this request, the BAC looks for new channels and assigns a channel ID (4206, 4208), and send this information back to the AP via BA reconfiguration message (4210). The AP then forwards the request to STA 2 (the destination station) (4212). STA 2 sends a direct link setup response to the AP (4214), and the AP forwards the direct link setup response including the channel ID and channel information to STA 1 (4216).

A direct link deactivation is used to deactivate or teardown a direct link. This may be triggered by the peer stations or by the DLME depending on the measurements provided by the stations or the traffic activity monitored for each direct link or some other metrics.

The DLME continuously monitors whether the direct link is necessary. If the DLME decides to tear down a direct link, the DLME sends a direct link teardown message to the AP. The AP then forwards this message to each peer station. The stations then deactivate the direct link, and send back a confirmation message to the AP. The AP then passes the confirmation message to the DLME. Upon receiving the confirmation from the AP, the DLME updates the channel set information and returns the released channels to the BAC.

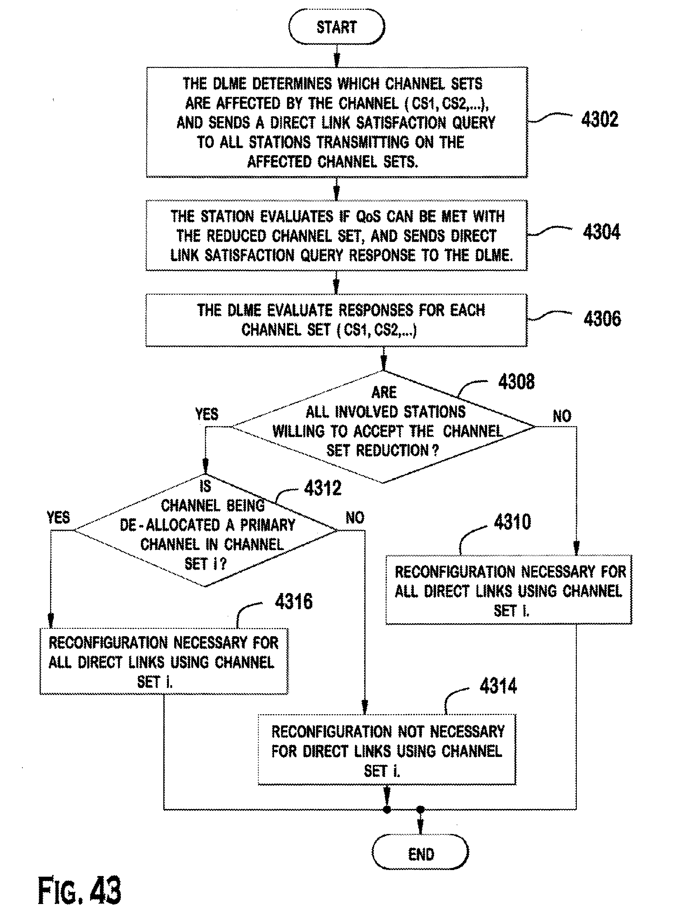

FIG. 43 shows an example flow diagram of a process for making a direct link reconfiguration decision. The DLME evaluates if a direct link reconfiguration is needed. The direct link reconfiguration procedure may be invoked when a channel provided to the DLME by the BAC needs to be de-allocated. The DLME determines the affected channel set and sends a direct link satisfactory query message to the stations transmitting on that channel set (4302).

When the stations receive this message, the stations evaluate if QoS requirements can be met with the reduced channel, (e.g., by checking if the required throughput is higher than available throughput), and send a direct link satisfactory query response to the DLME (4304). The DLME evaluates the responses for each channel set (4306). The DLME may then take appropriate actions based on the responses it receives.

The DLME determines whether all the involved stations are willing o accept the channel set reduction (4308). If no, the DLME may perform direct link reconfiguration for all direct links using the channel set (4310). If yes, the DLME further determines whether the channel being de-allocated is a primary channel in the channel set (4312). If not, the DLME may not perform a direct link reconfiguration (4314). If so, the DLME may perform a direct link reconfiguration (4316), which will be explained in detail below.

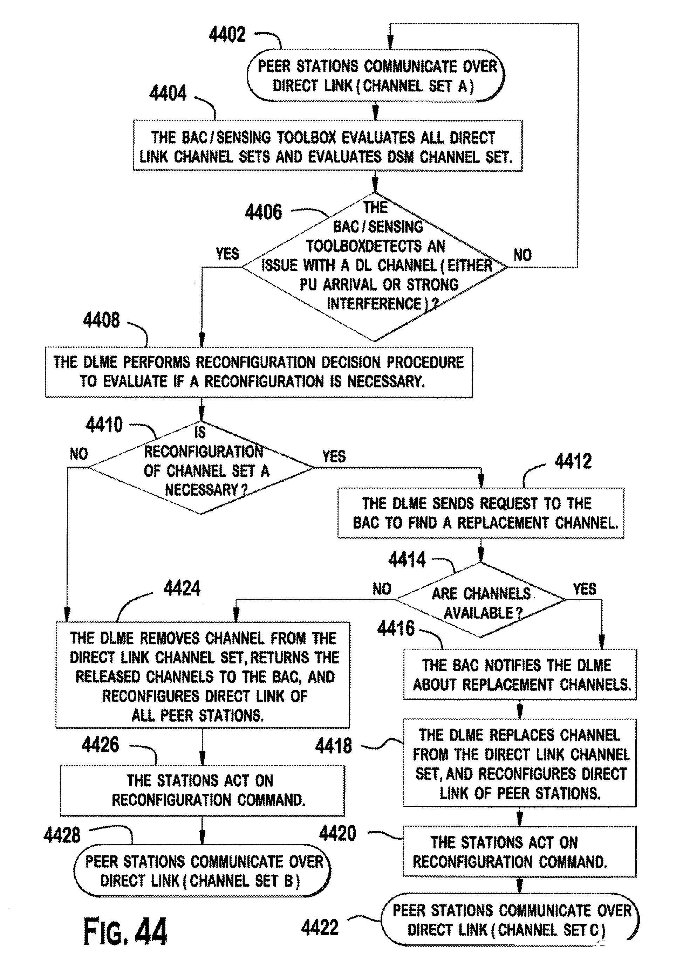

FIG. 44 is a flow diagram of an example process for direct link channel set reconfiguration. The direct link reconfiguration procedure is performed to alter the constituent channels (channel set) assigned to a direct link.

Stations communicate over a direct link (channel set A) (4402). During the operation, the BAC/sensing toolbox (continuously) evaluates all direct link and DSM link channel sets (4404). It may be based on the measurement reports provided by the stations. When the BAC/sensing toolbox detects an issue with the direct link channel (4406), the BAC/sensing toolbox asks the DLME to perform reconfiguration decision procedure disclosed above (4408). The DLME evaluates if a direct link reconfiguration is necessary (4410). If the decision is to reconfigure the channel set, the DLME sends a request to the BAC to provide a replacement channel (4412). If the BAC has available channels (4414), the BAC notifies the DLME with the new channel(s) (4416). The DLME then replaces the channel from the direct link channel set, and sends a reconfiguration command to the stations to reconfigure the direct link of the stations (4418). The stations act on the reconfiguration command and operates over the reconfigured channel set (4422, 4424).

On the hand if the there are no available channels at the BAC (4414) or if the DLME makes a decision not to reconfigure the channel set A (4410), the DLME may remove the channel from the direct link channel set, return the released channels to the BAC, and send a reconfiguration command to notify the stations about the removal (4424). The stations may act on the reconfiguration command, and then operate on the reduced channel set (4426, 4428).

Alternatively, the stations may detect a problem with a direct link channel, for example, based on channel related parameters, such as queue size, throughput, backoff time, frame error rate, etc. The stations evaluate if the reconfiguration is required. If the reconfiguration is required, the stations may ask the DLME to reconfigure the direct link channel.

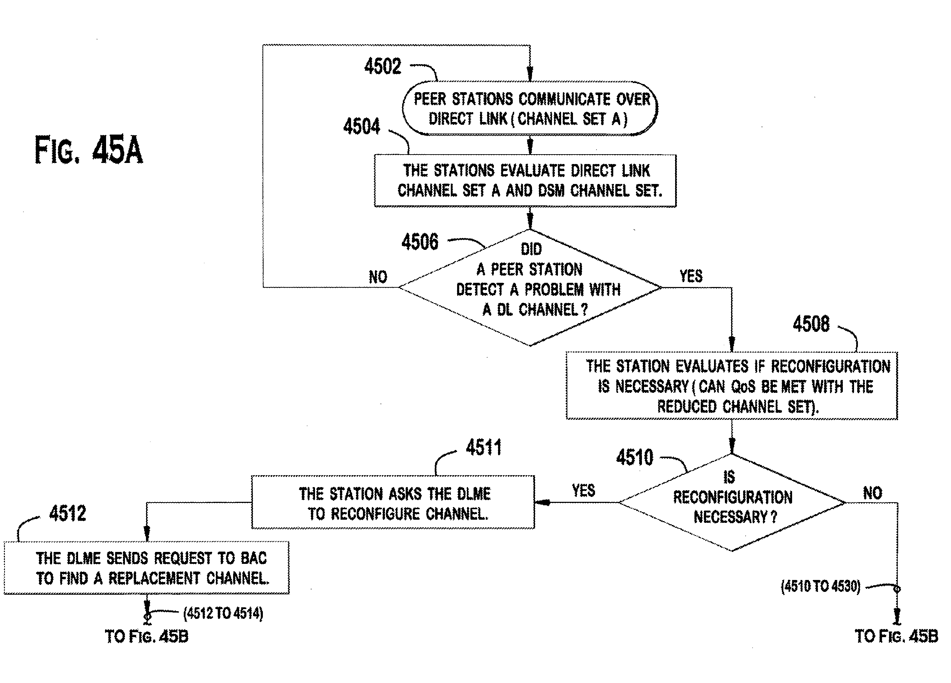

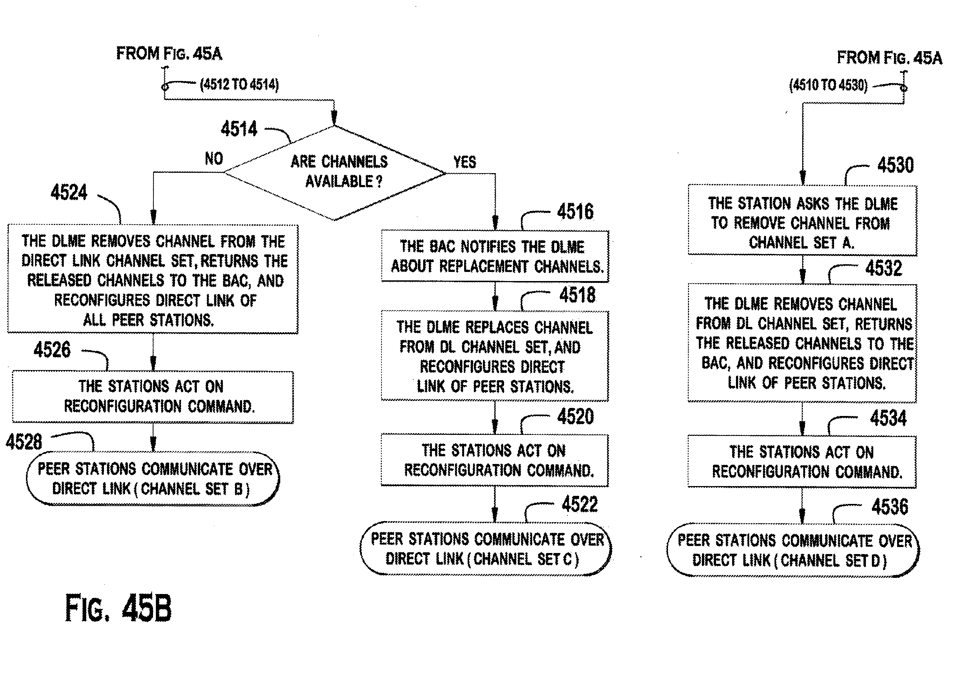

FIGS. 45A and 45B are a flow diagram of an example process for direct link channel set reconfiguration initiated by the STA. Stations communicate over a direct link (channel set A) (4502). During the operation, the station(s) (continuously) evaluates the direct link channel set and the DSM link channel set (4504). It may be based on any channel related parameters, such as queue size, throughput, backoff time, frame error rate, etc. When the station(s) detects an issue with the direct link channel (4506), the station(s) evaluates if reconfiguration is necessary, (e.g., whether QoS can be met with the reduced channel set) (4508).

If the station(s) determines that reconfiguration is necessary (4510), the station(s) asks the DLME to reconfigured the direct link channel (4511). The DLME sends a request to the BAC to provide a replacement channel (4512). If the BAC has available channels (4514), the BAC notifies the DLME with the new channel(s) (4516). The DLME then replaces the channel from the direct link channel set, and sends a reconfiguration command to the stations to reconfigure the direct link of the stations (4518). The stations act on the reconfiguration command and operates over the reconfigured channel set (channel set C) (4520, 4522).

If the there are no available channels at the BAC (4514), the DLME may remove the channel from the direct link channel set, return the released channels to the BAC, and send a reconfiguration command to notify the stations about the removal (4524). The stations may act on the reconfiguration command, and then operate on the reduced channel set (channel set B) (4526, 4528).

If the station(s) determines that reconfiguration is not necessary (4510), the station(s) may ask the DLME to remove the channel from the channel set A (4530). The DLME may remove the channel from the direct link channel set, return the released channels to the BAC, and send a reconfiguration command to notify the stations about the removal (4532). The stations may act on the reconfiguration command, and then operate on the reduced channel set (channel set D) (4534, 4536).

A channel switch message may be sent to reconfigure the direct link channel set. The channel switch message may be sent as an information element in the beacon or as a separate action frame. The direct link stations may receive the channel switch announcement when they listen to the beacon. The channel switch message may be sent to the stations as a separate action frame. In case where the direct link stations are operating on the different channel, the separate action frame may be announced in TIM or DTIM.

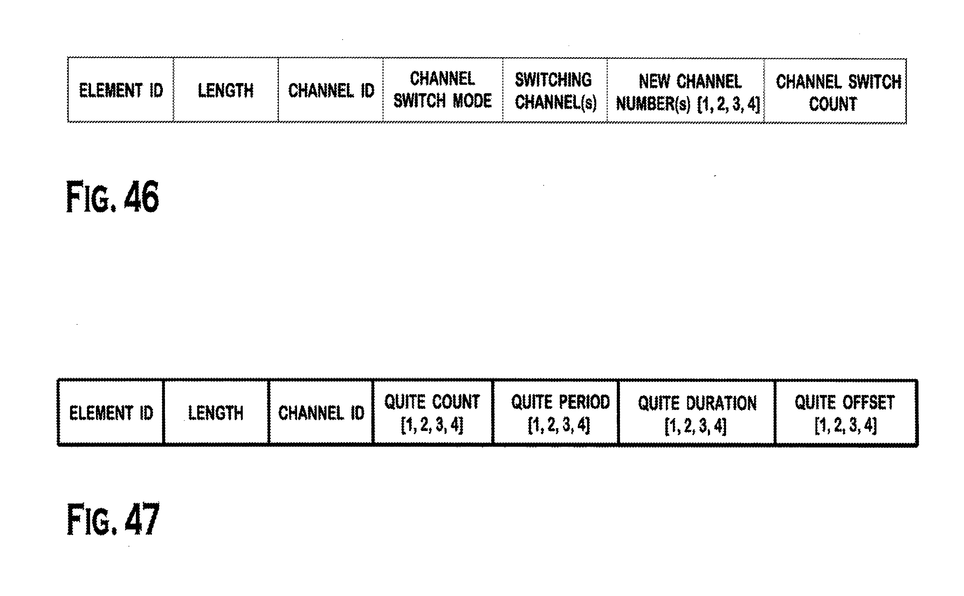

FIG. 46 shows an example channel switch message. The field "Channel ID" indicates the set of channels this message is directed to. The DSM link channels may have a channel ID zero. Each set of direct link channels may have their unique channel IDs. If the channel switch message includes the channel ID of the direct link stations, the direct link stations change their channel(s) accordingly.

Silent periods may be configured, (e.g., periodically), to allow the DSM engine to take measurements on the allocated channels (both for the direct link and the DSM link). The silent periods may be indicated to the DSM clients via the beacon message that carries the silent period information. The 802.11 beacon contains a "quiet element" field that defines an interval of time during which no transmission should occur in the current channel. When the direct link stations receive the beacon containing the quiet element, the stations configure their silencing period according to the information present in the quite element.

In case where the direct link and the DSM link coexist over the same channel set, the silent period configuration may be the same for the direct link stations. The stations may receive the configuration parameters, (e.g., duration, offset, etc.), for each DSM channel from the beacon. The direct link stations may suspend their traffic on the channel where there is an active silent period. This is because the silent period may not happen on all the channels at the same time.

In case where the direct link and the DSM link use different channels, a new type of "quiet element" may be included in the beacon, as shown in FIG. 47. FIG. 47 shows an example aggregated quiet element. This is an aggregated quiet element containing information for all the channels in one quiet element frame. It contains the "Channel ID" field which indicates which set of channels this quiet element corresponds to. For example, if there is one set of direct link channels with channel ID 1, the beacon broadcasts two aggregated quiet elements, one for the DSM link channels (e.g., channel ID 0) and one for the direct link channels (e.g., channel ID 1). If there are multiple direct links on different sets of aggregated channels, an aggregated quiet element may be included for each set of channels.

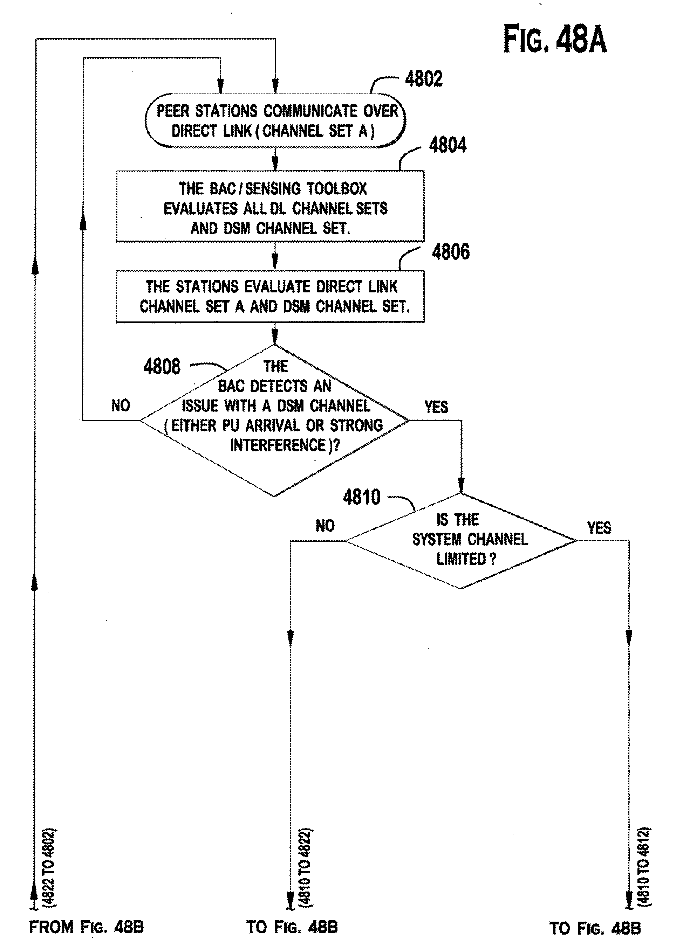

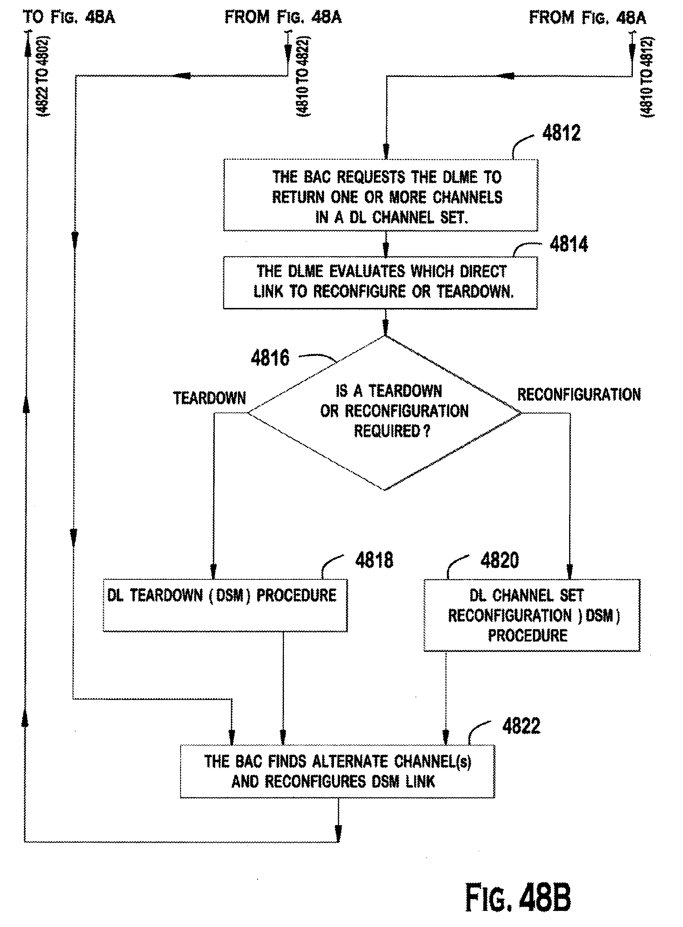

FIGS. 48A and 48B are a flow diagram of an example process for DSM link maintenance. Stations communicate over a direct link (channel set A) (4802). During the operation, the BAC/sensing toolbox (continuously) evaluates all direct link and DSM link channel sets (4804). It may be based on the measurement reports provided by the stations. Alternatively or additionally, the station(s) may evaluate the direct link channels set A and the DSM channel set (4806). It may be based on any channel related parameters, such as queue size, throughput, backoff time, frame error rate, etc.

When the BAC/sensing toolbox or the station(s) detects an issue with a channel on the DSM link (4808), the BAC may try to replace the affected DSM channel. The BAC determines whether the system channel is limited (i.e., whether there are any free channels available) (4910). If the system channel is not limited, the BAC may find an alternative channel(s) and reconfigure the DSM channel (4822).

If the system channel is limited, the BAC may request the DLME to return one or more channels in a direct link channel set (assuming some channels are assigned for direct link) (4812). The DLME may then evaluate which direct link may be reconfigured or torn down (4814). This may be based on measurement reports provided by the stations, (e.g., throughput, queue size, etc.), or based on its own DL monitoring. The DLME may monitor traffic activity for each direct link. The DLME determines whether a direct link teardown or reconfiguration is needed (4816). Depending on the DLME's decision, either direct link teardown or the direct link reconfiguration may be performed (4818, 4820). The BAC then finds an alternative channel(s) and reconfigures the DSM link (4822).

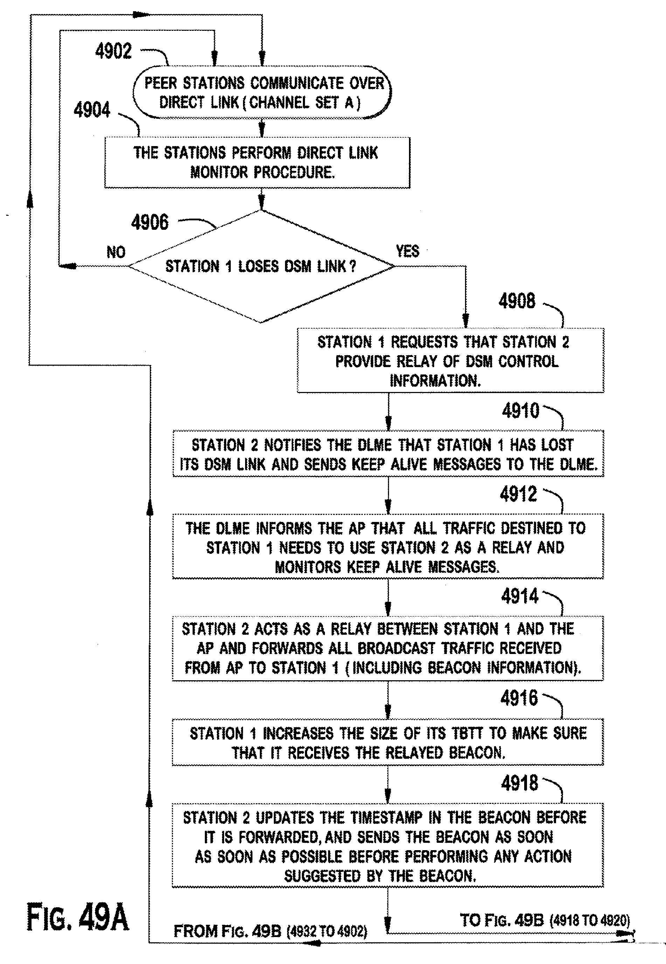

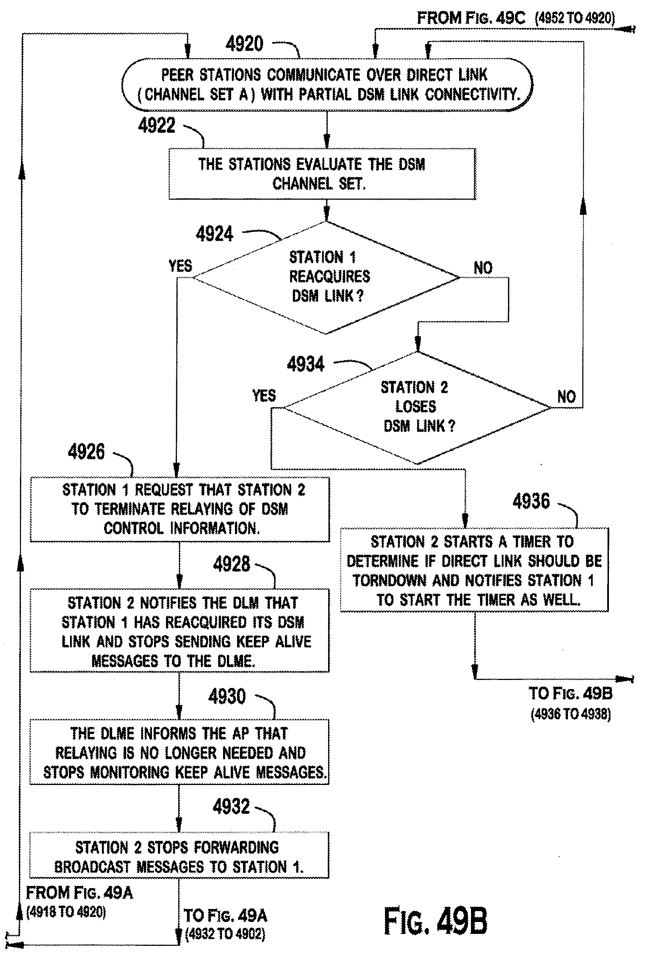

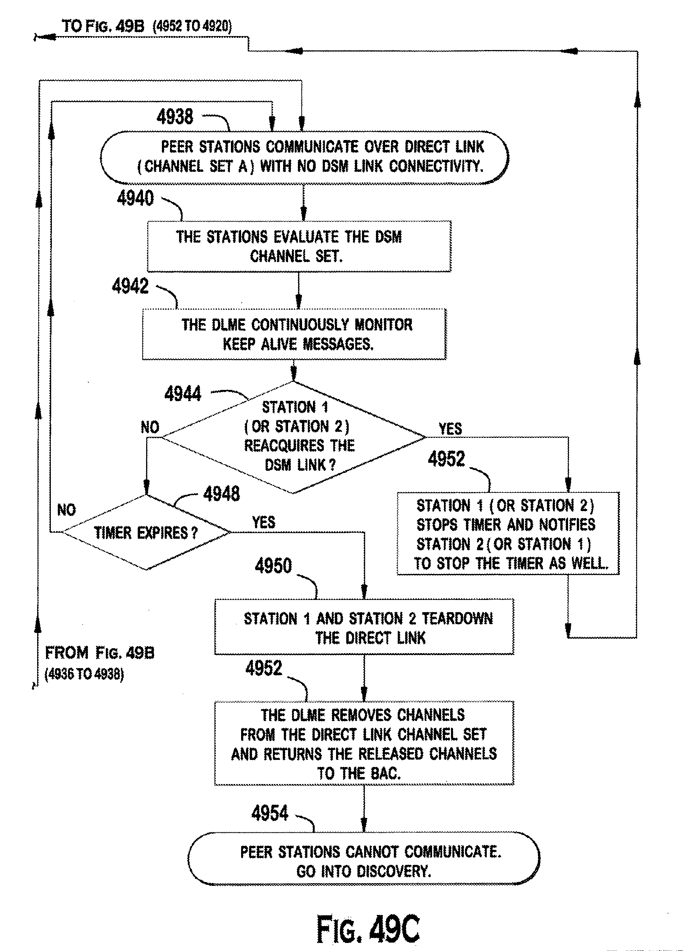

FIGS. 49A-49C are a flow diagram of an example process for DSM link failure. Stations communication over a direct link (channel set A) (4902). The stations perform a direct link monitor procedure (e.g., monitoring the synchronization channel) (4904). The direct link failure monitoring is also performed during the direct link monitoring. The stations monitor to find out any one of the direct link stations has lost connectivity to the DSM engine (4906). If it is determined that station 1 has lost the connectivity, station 1 may request the other peer station (station 2) to act as a relay for the DSM link (4908). Alternatively, station 1 may continue to operate the direct link with a partial DSM link connectivity. Station 2 may then notify the DLME that station 1 has lost its DSM link and sends a "keep alive" message to the DLME (4910). The DLME may then inform the AP to send all the traffic to station 1 via station 2 as a relay, and the DLME also monitors the "keep alive" messages (4912). Station 2 may act as a relay between the AP and station 1 and forward all the broadcast traffic, (including beacons), received from the AP to station 1 (4914). To make sure that station 1 receives the forwarded beacon, station 1 may either increase the size of its TBTT or increase the observation window around the expected TBTT (4916). When station 2 forwards the beacon to station 1, station 2 may update the time stamp in the beacon and try to send it as soon as possible before performing any action suggested by the beacon, (e.g., channel switch, silencing, etc.) (4918).

During this time stations communicate over the direct link with a partial DSM connectivity (4920). Station 1 tries to reconnect to the DSM engine and stations evaluate the DSM channel set (4922). If station 1 reacquires the DSM link (4924), station 1 requests station 2 to terminate the relaying of the DSM traffic (4926). Station 1 or station 2 notifies the DLME that station 1 has reacquired its DSM link and station 2 stops transmitting the "keep alive" messages to the DLME (4928). The DLME informs the AP that relaying is no longer needed and stops monitoring the keep alive messages (4930). Station 2 stops forwarding the broadcast messages to station 1 (4932).

If it is determined that station 1 has not acquired the DSM link (4924), but station 2 also loses its DSM link (4934), station 2 may start a timer to determine if the direct link should be torn down, and notify station 1 to start the timer as well (4936). Alternatively, both stations may operate the direct link without the DSM connectivity.

During this time stations communicate over the direct link with no DSM connectivity (4938). Both station 1 and station 2 try to reconnect to the DSM engine before the timer expires and the stations evaluate the DSM channel set (4940). The DLME continuously monitors the "keep alive" messages (4942).

It is determined whether station 1 or station 2 acquires the DSM link (4944). If any one of station 1 or station 2 acquires the DSM link, the station stops the timer, and may notify the other station to stop the timer (4946). The process goes to step 4920, such that the stations go back to the mode with a partial DSM connectivity, and the procedure continues until both stations reconnect to the DSM engine.

If no station has reacquired the DSM link, and the timer has not expired (4948), the process returns to step 4938. If no station has reacquired the DSM link, and the timer has expired (4948), station 1 and station 2 perform the direct link teardown procedure (4950). The DLME may remove the channels from the direct link channel set, and return the released channels to the BAC (4952). The stations are now not able to communicate directly and may go back to the scan or discovery mode (4954).

When both of the direct link clients loose connection to the DSM engine, (i.e., DSM link is down), the clients may try to reconnect/re-associate to the DSM engine as quickly as possible. For fast re-association the clients may exploit the direct link to negotiate a strategic channel scanning procedure. If the clients have more than one radio, one or more radios may be dedicated to scan for the new network synchronization channels. However, if the clients have a single radio, the set of synchronization channels to scan may be split between the direct link peer stations, and each station may perform a scan on a partial scan channels list. The scanning may be performed over a partial time, or a ratio of the time allocated to the ongoing direct link traffic.

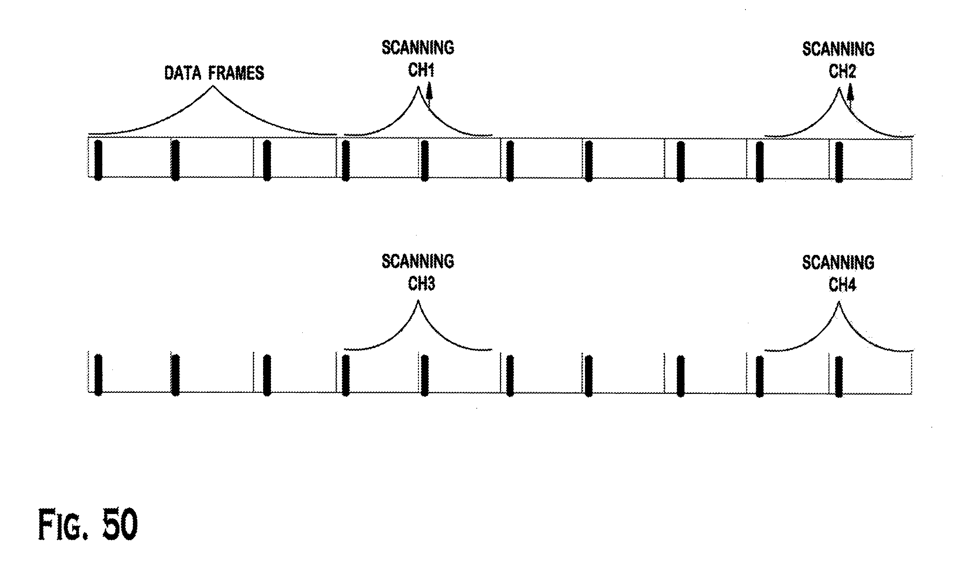

FIG. 50 shows a scanning example. In this example, it is assumed that Ch1, Ch2, Ch3, and Ch4 are the channels to be scanned. After a predetermined number of data frames the stations scan on Ch1 and then Ch2 and so on as shown in FIG. 50 and rolls over until it finds the network channel.

The clients may decide and negotiate the ratio of scanning frames to data frames before scanning. This ratio may determined by considering the current data rate and targeted QoS. For example, in case of 802.11 IBSS, the clients in the IBSS may send data for M beacon intervals and then two beacon intervals may be used for scanning. The value of M may depend on the quality of service of the direct link. For high data rate links (e.g., HD video streaming), the value may be high to not alter the ongoing data traffic and for low rate links, the value may be low. The value of M may be variable and may adapt itself with respect to the data traffic variation. It may increase or decrease depending on the type of data transmission over direct link to maintain the QoS.

Alternatively, one client in the direct link may perform the scan in an asymmetric transmission over the two direct link directions. For instance, in a direct link between a set-top-box (STB) and a TV, the TV's receiver may be busy receiving data and STB's transmitter may be busy transmitting HD video traffic. In this case, the STB may scan for all the channels (since its receiver is idle most of the time) and the TV may not allocate any frames for scanning. This alternative assumes the radio receiver of the client has the capability to switch to a different channel than the radio transmitter.

As soon as one of the direct link stations finds the synchronization channel, the station may exploit the direct link and send the found channel information to the peer station. The other station may then stop the channel scan and re-associate to the DSM engine using the channel information received from the other direct link station.

The DLME has an interface to the BAC and to the AP. FIG. 51 shows an example structure of the DSM engine 5110 including the DLME 2112 and interfaces to the AP 5120 and the BAC 5114. The AP 5120 interacts with the DLME 5112 for obtaining channels and other parameters for the direct link operation. The assignment of the channels by the BAC 5114 is sent to the AP 5120 through the DLME 5112.

When a channel currently allocated to a direct link has bad channel conditions, (e.g., as reported by the stations), the DLME 5112 may ask the BAC 5114 to find a replacement channel for the direct link. The DLME 5112 may then send direct link channel reassignment to the AP 5120 to forward to the peer stations. When a channel currently allocated to the network becomes unavailable as reported by the sensing toolbox 5116 or the TVWS database 5130, the BAC 5114 may find a replacement channel. The BAC 5114 may send the channel re-assignment to the DLME 5112.

The AP 5120 sends a DL_Initial_BA_Request to the DLME 5112 asking for a set of channels to be assigned to the new direct link. This may be in terms of a QoS requirement or other similar requirement, with the DLME 5112 converting this requirement to a number of requested channels. The DL_Initial_BA_Request message may include AP's device information, (e.g., sensing capability, etc.), AP's location, or the like. The DLME 5112 responds with a DL_Initial_BA_Request_ACK in acknowledgement of the DL_Initial_BA_Request message.

When the MAC layer statistics on a device (station) indicates that a certain direct link channel is down, the AP 5120 may send a DL_Channel_Status_Indication message to the DLME 5112. Upon receiving this message the DLME 5112 may ask the BAC for a replacement channel. The DL_Channel_Status_Indication message may include a sets of parameters including channel ID, channel definition (the frequency range between lower frequency and upper frequency), MAC layer statistics type (e.g., ACK percentage, average delivery time, etc.), MAC layer statistics, and the like. The DLME 5112 responds with a DL_Channel_Status_Indication_ACK in an acknowledgement of the DLME_Channel_Status_Indication message.

The DLME 5112 ends a DL_BA_Reconfiguration message to tell the AP 5120 to assign channels for direct link or reconfigure the existing channels. It contains the channel set information for the direct link. The DL_BA_Reconfiguration message may include a sets of parameters including old channel ID, old channel definition (the frequency range between lower frequency and upper frequency), new channel ID, new channel definition (the frequency range between lower frequency and upper frequency), new channel EIRP, primary channel indicator, and any additional channel details. The AP 5120 responds with a DL_BA_Reconfiguration_ACK in acknowledgement of the DL_BA_Reconfiguration message.

The AP 5120 sends a DL_Channel_Set_Release_Indication message to the DLME 5112 to inform that the direct link channel(s) is no longer used (i.e., all direct links are torn down). The DL_Channel_Set_Release_Indication message may include channel ID, and the like.

In case of direct link operation the BAC 5114 interacts with the DLME 5112. The DLME 5112 asks the BAC 5114 to provide new channels for direct links and when channels are no longer required they are released to the BAC 5114.

The DLME 5112 sends a BA_Request message to the BAC 5114 to request available channels from the BAC 5114. It may be generated by the DLME 5112 when the DLME 5112 receives the DL_Initial_BA_Request or DL_Channel_Status_Indication message from the AP 5120. The BA_Request message may include the number of channels required by the DLME 5112. The BAC 5114 sends a BA_Response in response to the BA_Request message. The BA_Response message may include the number of channels found by the BAC 5114, frequency/channel number of the assigned channels, and the like.

The DLME 5112 sends a BA_Release_Indication message to indicate to the BAC 5114 that the direct link channels are no longer being used. The BA_Release_Indication message may include frequency/channel number of the channels no longer required.

The BAC 5114 sends a BA_Reconfiguration message to tell the DLME 5112 to assign channels for direct link or reconfigure the existing channels. The BA)Reconfiguration message contains the channel set information for the direct link. The BA_Reconfiguration message may include a sets of parameters including old channel ID, old channel definition (the frequency range between lower frequency and upper frequency), new channel ID, new channel definition (the frequency range between lower frequency and upper frequency), new channel EIRP, primary channel indicator, and any additional channel details. The DLME 5112 sends a BA_Reconfiguration_ACK in an acknowledgement of the BA_Reconfiguration message.

Although the DLME 5112 is shown as a separate logical entity in FIG. 51, the DLME functionality may be included in either the BAC 5114 or the AP 5120 (or shared between the two). In case where the DLME 5112 is part of the BAC 5114, the interface between the AP 5120 and the DLME 5112 may be used to communicate between the entities. On the other hand if it is part of the AP 5120 the interface between the DLME 5112 and the BAC 5114 may be used to communicate between these entities.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for wireless direct link operations in a wireless communication network, the method comprising:
a direct link station receiving a beacon message periodically from an access point, AP, on a first set of channels, the direct link station having a direct link for communication on a second set of channels with a peer direct link station, the beacon message being received on at least one of the first set of channels based on a target beacon transmission time, TBTT, (802) the first set of channels and the second set of channels comprising at least one channel, respectively;
the direct link station receiving a direct link synchronization message (806) from the AP on at least one of the first set of channels; and
the direct link station receiving a control message concerning the direct link during the beacon of a synchronization TBTT, STBTT, (804) or following the STBTT,
**characterized in that** the direct link synchronization message indicates that a following TBTT is a STBTT, and **in that** the direct link station, in response to the direct link synchronization message, does not transmit on the second set of channels during the beacon of the STBTT and transmits on the second set of channels during the beacon of a TBTT that is not indicated as the STBTT.

2. The method of claim 1, wherein the direct link station finishes all transmissions to the peer direct link station on the direct link prior to the STBTT.

3. The method of claim 1, wherein the direct link station does not initiate a transmission to the peer direct link station over the direct link unless the transmission or an acknowledgement to the transmission can be completed prior to the STBTT.

4. The method of claim 1, wherein the control message is for switching a channel for the direct link, or adding a new channel to the direct link.

5. The method of claim 1, wherein the direct link synchronization message is received with a delivery traffic indication message, DTIM, (2902, 2906) or immediately after the DTIM on the first channel.

6. A wireless transmit/receive unit, WTRU, (102) operating as direct link station in a wireless communication network (100) comprising a transceiver (120) configured
- to receive a beacon message periodically from an access point, AP, on a first set of channels; and
- to maintain a direct link for communication on a second set of channels with a peer direct link station,
wherein the beacon message is received on at least one of the first set of channels based on a target beacon transmission time, TBTT, (802) the first set of channels and the second set of channels comprising at least one channel, respectively,
the transceiver being further configured
- to receive a direct link synchronization message (806) from the AP on at least one of the first set of channels; and
- to receive a control message concerning the direct link during the beacon of a synchronization TBTT, STBTT, (804) or following the STBTT,
the WTRU being **characterized in that** the direct link synchronization message indicates that a following TBTT is a STBTT, and **in that** the WTRU, in response to the direct link synchronization message, does not transmit on the second set of channels during the beacon of the STBTT and transmits on the second set of channels during the beacon of a TBTT that is not indicated as the STBTT.

7. The WTRU of claim 6, further configured to finish all transmissions to the peer direct link station on the direct link prior to the STBTT.

8. The WTRU of claim 6, further configured not to initiate a transmission to the peer direct link station over the direct link unless the transmission or an acknowledgement to the transmission can be completed prior to the STBTT.

9. The WTRU of claim 6, wherein the control message is for switching a channel for the direct link, or adding a new channel to the direct link.

10. The WTRU of claim 6, wherein the direct link synchronization message is received with a delivery traffic indication message, DTIM, (2902, 2906) or immediately after the DTIM on the first channel.

## Patentansprüche

1. Verfahren für einen drahtlosen Direktverbindungsbetrieb in einem Drahtloskommunikationsnetz, wobei das Verfahren Folgendes umfasst:
periodisches Empfangen, an einer Direktverbindungsstation, einer Beacon-Nachricht von einem Zugangspunkt (Access Point, AP) auf einem ersten Satz von Kanälen, wobei die Direktverbindungsstation eine Direktverbindung zur Kommunikation auf einem zweiten Satz von Kanälen mit einer Peer-Direktverbindungsstation aufweist, wobei die Beacon-Nachricht auf mindestens einem des ersten Satzes von Kanälen auf der Basis einer Ziel-Beacon-Sendezeit (Target Beacon Transmission Time, TBTT) (802) empfangen wird, wobei der erste Satz von Kanälen und der zweite Satz von Kanälen jeweils mindestens einen Kanal umfassen;
Empfangen, an der Direktverbindungsstation, einer Direktverbindungssynchronisationsnachricht (806) von dem AP auf mindestens einem des ersten Satzes von Kanälen; und
Empfangen, an der Direktverbindungsstation, einer Steuerungsnachricht bezüglich der Direktverbindung während des Beacons einer Synchronisations-TBTT (STBTT) (804) oder im Anschluss an die STBTT,
**dadurch gekennzeichnet, dass** die Direktverbindungssynchronisationsnachricht anzeigt, dass eine folgende TBTT eine STBTT ist, und dass die Direktverbindungsstation, in Reaktion auf die Direktverbindungssynchronisationsnachricht, nicht auf dem zweiten Satz von Kanälen während des Beacons der STBTT sendet und auf dem zweiten Satz von Kanälen während des Beacons einer TBTT sendet, die nicht als die STBTT angezeigt ist.

2. Verfahren nach Anspruch 1, wobei die Direktverbindungsstation alle Übertragungen an die Peer-Direktverbindungsstation auf der Direktverbindung vor der STBTT beendet.

3. Verfahren nach Anspruch 1, wobei die Direktverbindungsstation nur dann eine Übertragung an die Peer-Direktverbindungsstation über die Direktverbindung initiiert, wenn die Übertragung oder eine Bestätigung auf die Übertragung vor der STBTT vollendet werden kann.

4. Verfahren nach Anspruch 1, wobei die Steuerungsnachricht dem Umschalten eines Kanals für die Direktverbindung oder dem Hinzufügen eines neuen Kanals zu der Direktverbindung dient.

5. Verfahren nach Anspruch 1, wobei die Direktverbindungssynchronisationsnachricht mit einer Delivery Traffic Indication Message (DTIM) (2902, 2906) oder unmittelbar nach der DTIM auf dem ersten Kanal empfangen wird.

6. Drahtlos-Sende/Empfangs-Einheit (Wireless Transmit/Receive Unit, WTRU), (102), die als Direktverbindungsstation in einem Drahtloskommunikationsnetz (100) arbeitet und einen Sender-Empfänger (120) umfasst, der dafür konfiguriert ist,
- eine Beacon-Nachricht periodisch von einem Zugangspunkt (Access Point, AP) auf einem ersten Satz von Kanälen zu empfangen; und
- eine Direktverbindung zur Kommunikation auf einem zweiten Satz von Kanälen mit einer Peer-Direktverbindungsstation aufrecht zu erhalten,
wobei die Beacon-Nachricht auf mindestens einem des ersten Satzes von Kanälen auf der Basis einer Ziel-Beacon-Sendezeit (Target Beacon Transmission Time, TBTT) (802) empfangen wird, wobei der erste Satz von Kanälen und der zweite Satz von Kanälen jeweils mindestens einen Kanal umfassen,
wobei der Sender-Empfänger des Weiteren dafür konfiguriert ist,
- eine Direktverbindungssynchronisationsnachricht (806) von dem AP auf mindestens einem des ersten Satzes von Kanälen zu empfangen; und
- eine Steuerungsnachricht bezüglich der Direktverbindung während des Beacons einer Synchronisations-TBTT (STBTT) (804) oder im Anschluss an die STBTT zu empfangen,
wobei die WTRU **dadurch gekennzeichnet ist, dass** die Direktverbindungssynchronisationsnachricht anzeigt, dass eine folgende TBTT eine STBTT ist, und dass die WTRU, in Reaktion auf die Direktverbindungssynchronisationsnachricht, nicht auf dem zweiten Satz von Kanälen während des Beacons der STBTT sendet und auf dem zweiten Satz von Kanälen während des Beacons einer TBTT sendet, die nicht als die STBTT angezeigt ist.

7. WTRU nach Anspruch 6, die des Weiteren dafür konfiguriert ist, alle Übertragungen an die Peer-Direktverbindungsstation auf der Direktverbindung vor der STBTT zu beenden.

8. WTRU nach Anspruch 6, die des Weiteren dafür konfiguriert nicht, eine Übertragung an die Peer-Direktverbindungsstation über die Direktverbindung nur dann zu initiieren, wenn die Übertragung oder eine Bestätigung auf die Übertragung vor der STBTT vollendet werden kann.

9. WTRU nach Anspruch 6, wobei die Steuerungsnachricht dem Umschalten eines Kanals für die Direktverbindung oder dem Hinzufügen eines neuen Kanals zu der Direktverbindung dient.

10. WTRU nach Anspruch 6, wobei die
Direktverbindungssynchronisationsnachricht mit einer Delivery Traffic Indication Message (DTIM) (2902, 2906) oder unmittelbar nach der DTIM auf dem ersten Kanal empfangen wird.

## Revendications

1. Procédé pour des opérations de liaison directe sans fil dans un réseau de communication sans fil, le procédé comprenant :
la réception périodique, par une station de liaison directe, d'un message de balise en provenance d'un point d'accès, AP, sur un premier ensemble de canaux, la station de liaison directe ayant une liaison directe pour une communication sur un deuxième ensemble de canaux avec une station de liaison directe homologue, le message de balise étant reçu sur au moins l'un du premier ensemble de canaux sur la base d'un temps de transmission de balise cible, TBTT, (802), le premier ensemble de canaux et le deuxième ensemble de canaux comprenant respectivement au moins un canal ;
la réception, par la station de liaison directe, d'un message de synchronisation de liaison directe (806) en provenance de l'AP sur au moins l'un du premier ensemble de canaux ; et
la réception, par la station de liaison directe, d'un message de commande concernant la liaison directe au cours de la balise d'un TBTT de synchronisation, STBTT, (804) ou à la suite du STBTT,
**caractérisé en ce que** le message de synchronisation de liaison directe indique qu'un TBTT suivant est un STBTT, et **en ce que** la station de liaison directe, en réponse au message de synchronisation de liaison directe, ne transmet pas sur le deuxième ensemble de canaux au cours de la balise du STBTT et transmet sur le deuxième ensemble de canaux au cours de la balise d'un TBTT qui n'est pas indiqué en tant que le STBTT.

2. Procédé selon la revendication 1, dans lequel la station de liaison directe finit toutes les transmissions à la station de liaison directe homologue sur la liaison directe avant le STBTT.

3. Procédé selon la revendication 1, dans lequel la station de liaison directe ne déclenche une transmission à la station de liaison directe homologue sur la liaison directe que si la transmission ou un accusé de réception de la transmission peut être achevé avant le STBTT.

4. Procédé selon la revendication 1, dans lequel le message de commande est destiné à commuter un canal pour la liaison directe, ou à ajouter un nouveau canal à la liaison directe.

5. Procédé selon la revendication 1, dans lequel le message de synchronisation de liaison directe est reçu avec un message d'indication de trafic de livraison, DTIM, (2902, 2906) ou immédiatement après le DTIM sur le premier canal.

6. Unité émettrice-réceptrice sans fil, WTRU, (102) fonctionnant en tant que station de liaison directe dans un réseau de communication sans fil (100) comprenant un émetteur-récepteur (120) configuré pour :
- recevoir un message de balise périodiquement en provenance d'un point d'accès, AP, sur un premier ensemble de canaux ; et
- maintenir une liaison directe pour une communication sur un deuxième ensemble de canaux avec une station de liaison directe homologue,
dans laquelle le message de balise est reçu sur au moins l'un du premier ensemble de canaux sur la base d'un temps de transmission de balise cible, TBTT, (802), le premier ensemble de canaux et le deuxième ensemble de canaux comprenant respectivement au moins un canal ;
l'émetteur-récepteur étant en outre configuré pour :
- recevoir un message de synchronisation de liaison directe (806) en provenance de l'AP sur au moins l'un du premier ensemble de canaux ; et
- recevoir un message de commande concernant la liaison directe au cours de la balise d'un TBTT de synchronisation, STBTT, (804) ou à la suite du STBTT,
la WTRU étant **caractérisée en ce que** le message de synchronisation de liaison directe indique qu'un TBTT suivant est un STBTT, et **en ce que** la WTRU, en réponse au message de synchronisation de liaison directe, ne transmet pas sur le deuxième ensemble de canaux au cours de la balise du STBTT et transmet sur le deuxième ensemble de canaux au cours de la balise d'un TBTT qui n'est pas indiqué en tant que le STBTT.

7. WTRU selon la revendication 6, configurée en outre pour finir toutes les transmissions à la station de liaison directe homologue sur la liaison directe avant le STBTT.

8. WTRU selon la revendication 6, configurée en outre pour ne déclencher une transmission à la station de liaison directe homologue sur la liaison directe que si la transmission ou un accusé de réception de la transmission peut être achevé avant le STBTT.

9. WTRU selon la revendication 6, dans laquelle le message de commande est destiné à commuter un canal pour la liaison directe, ou à ajouter un nouveau canal à la liaison directe.

10. WTRU selon la revendication 6, dans laquelle le message de synchronisation de liaison directe est reçu avec un message d'indication de trafic de livraison, DTIM, (2902, 2906) ou immédiatement après le DTIM sur le premier canal.
